(19) **Europäisches Patentamt / European Patent Office / Office européen des brevets**

(11) **EP 4 769 268 A1**

(12) # EUROPEAN PATENT APPLICATION

(43) Date of publication:
**01.07.2026 Bulletin 2026/27**

(21) Application number: **25201872.6**

(22) Date of filing: **12.09.2025**

(51) International Patent Classification (IPC):
***G06Q 20/02*** (2012.01)  ***G06Q 20/10*** (2012.01)
***H04L 9/40*** (2022.01)

(52) Cooperative Patent Classification (CPC):
**G06Q 20/027; G06Q 20/10;** H04L 63/00

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **31.12.2024 SG 10202404127P**
**10.09.2025 US 202519324964**

(71) Applicant: **Advanced Nova Technologies (Singapore) Holding Pte. Ltd.**
**Singapore 189773 (SG)**

(72) Inventors:
• **LIANG, Jie**
**189773 Singapore (SG)**
• **JI, Jinfeng**
**189773 Singapore (SG)**
• **BO, Qiaochu**
**189773 Singapore (SG)**

• **ZHU, Shiyi**
**189773 Singapore (SG)**
• **ZHANG, Qirui**
**189773 Singapore (SG)**
• **SHEN, Yang**
**189773 Singapore (SG)**
• **WANG, Ting**
**189773 Singapore (SG)**
• **WANG, Xiang**
**189773 Singapore (SG)**
• **LIN, Peng**
**189773 Singapore (SG)**
• **ZHANG, Zhaoyi**
**189773 Singapore (SG)**
• **YANG, Jing**
**189773 Singapore (SG)**

(74) Representative: **Fish & Richardson P.C.**
**Highlight Business Towers**
**Mies-van-der-Rohe-Straße 8**
**80807 München (DE)**

(54) **METHOD, APPARATUS AND COMPUTER SYSTEM FOR PERFORMING REQUEST CONVERSION BETWEEN RESOURCE MANAGEMENT SYSTEMS**

(57)    Embodiments of this specification disclose methods, apparatuses, and computer systems for performing request conversion between resource management systems. The method includes: A first resource management system generates a first request packet in a first communication format. A first field in a packet header of the first request packet indicates that the first request packet is used to request an authorized freeze on a resource, and a packet body of the first request packet includes a number ID of a to-be-executed resource transfer operation and a first token. The first resource management system sends the first request packet to an interchange system in response to determining that the first token belongs to a predetermined type. The interchange system parses the first request packet, extracts the number ID and the first token from the first request packet, determines, by querying a first data record, a first account in a second resource management system corresponding to the first token, generates a second request packet in a second communication format based on an API specification of the second resource management system, and sends the second request packet to the second resource management system. The second request packet is used to call a target API, and a call parameter field of the second request packet includes the number ID and the first account. The second resource management system parses the second request packet based on the API specification, extracts the number ID and the first account from the call parameter field, and executes a target operation of a function corresponding to the target API on the first account.

EP 4 769 268 A1

| Server (acquiring system) | Interchange system (service party) | First digital wallet |
|---|---|---|

Authorization stage

S41: First request

(including a transaction ID, a first fund share, and a first token)

S42: First request

S43: Generate a second request (including the transaction ID, a first account, and a first amount)

S44: Second request

S45: Deduct a first amount of funds from the first account

S46: Transfer the deducted first amount of funds to a service account

FIG. 4

**Description**

**TECHNICAL FIELD**

One or more embodiments of this specification relate to the field of computer technologies, and in particular, to methods, apparatuses, computer systems, and computer-readable storage media for performing request conversion between resource management systems.

**BACKGROUND**

A resource management system can include some resources and manage the resources. The above-mentioned resources can include a cloud resource (for example, a computing resource or a storage resource), a fund, etc.. In actual application, there is usually a need for resource transfer/transmission between different resource management systems, for example, a resource in one resource management system is transferred/transmitted to another resource management system.

In actual application, based on different types of resources managed by a resource management system, the above-mentioned resource transfer may correspond to different application scenarios. For example, when a resource managed by the resource management system is a cloud resource in a cloud environment, the above-mentioned resource transfer can be cloud resource transfer; when the resource managed by the resource management system is a bandwidth resource, the above-mentioned resource transfer can be bandwidth resource transfer; when the resource managed by the resource management system is a fund, the above-mentioned resource transfer can be fund transfer (for example, transfer or remittance); and when the resource managed by the resource management system is a carbon quota, the above-mentioned resource transfer can be carbon quota transfer.

Resource management systems in different regions or belonging to different institutions may use different resource bearer/record ways, be constructed based on different technical infrastructures (including network links, data storage formats, data communication formats, etc.), and execute different resource management logic. When resource transfer is performed between such different resource management systems, some technical difficulties exist. A fund management system is used as an example. There are more or less differences in payment systems and financial infrastructures of different countries and regions, resulting in many challenges for overseas payment and cross-border payment.

**SUMMARY**

Embodiments of this specification describe methods and apparatuses for performing request conversion between resource management systems to facilitate resource transfer, so that smooth conversion can be performed between different types of resource management systems, to improve resource transfer convenience.

According to a first aspect, this specification provides a resource transfer system, including a first resource management system (for example, a card payment acquiring institution), an interchange system, and a second resource management system (for example, a first digital wallet system). The first resource management system is a first-type resource interchange system that supports a first resource interchange way, the second resource management system is a second-type resource interchange system that supports a second resource interchange way, and the second resource interchange way is different from the first resource interchange way. The first resource management system is configured to: generate a first request packet in a first communication format, where the first communication format conforms to a communication packet specification of an internal communication network of the first resource management system, a first field in a packet header of the first request packet indicates that the first request packet is used to request an authorized freeze on a resource (for example, an authorized freeze on a fund), a packet body of the first request packet includes a number ID of a to-be-executed resource transfer operation (for example, a transaction ID of a to-be-paid transaction) and a first token, and the first token is obtained from an entity held by a user; and determine that the first token corresponds to the second-type resource management system, and send the first request packet to the interchange system in response to determining that the first token corresponds to the second-type resource management system.

The interchange system is configured to: parse the first request packet based on the first communication format, extract the number ID and the first token from the first request packet, determine, by querying a first data record stored in a non-volatile storage medium, a first account in the second resource management system corresponding to the first token, generate a second request packet in a second communication format based on an API specification of the second resource management system, and send the second request packet to the second resource management system, where the second request packet is used to call a target API, and a call parameter field of the second request packet includes the number ID and the first account.

The second resource management system (for example, the first digital wallet system) is configured to: parse the second request packet in the second communication format based on the API specification, extract the number ID and the first account from the call parameter field, and execute a target operation of a function corresponding to the target API on the first account.

According to a second aspect, this specification provides a request conversion method, including:

A first resource management system generates a first request packet in a first communication format. The first communication format conforms to a communication packet specification of an internal communication network of the first resource management system, a first field in a packet header of the first request packet indicates that the first request packet is used to request an authorized freeze on a resource, a packet body of the first request packet includes a number ID of a to-be-executed resource transfer operation and a first token, and the first token is obtained from an entity held by a user. The first resource management system sends the first request packet to an interchange system in response to determining that the first token belongs to a predetermined type.

The interchange system parses the first request packet based on the first communication format, extracts the number ID and the first token from the first request packet, determines, by querying a first data record stored in a non-volatile storage medium, a first account in a second resource management system corresponding to the first token, generates a second request packet in a second communication format based on an API specification of the second resource management system, and sends the second request packet to the second resource management system. The second request packet is used to call a target API, and a call parameter field of the second request packet includes the number ID and the first account.

The second resource management system parses the second request packet in the second communication format based on the API specification, extracts the number ID and the first account from the call parameter field, and executes a target operation of a function corresponding to the target API on the first account.

According to a third aspect, this specification provides a request conversion method. The method is executed by a computing device of an interchange system, and includes the following steps: The computing device receives a first request from a first resource management system (for example, a card payment acquiring institution). The first request is used to request an authorized freeze on a resource (for example, an authorized freeze on a fund), and includes a number ID of a to-be-executed resource transfer operation (for example, a transaction ID of a to-be-paid transaction) and a first token. The computing device determines a first account in a second resource management system (for example, a first digital wallet) corresponding to the first token. The computing device sends a second request to the second resource management system. The second request includes the number ID and the first account.

In some embodiments, that the computing device determines a first account in a second resource management system corresponding to the first token includes: The computing device queries a data record stored in a non-volatile storage medium to obtain the second resource management system (for example, the first digital wallet) and the first account. The data record stores a mapping relationship between a token and an account in each resource management system.

According to a first implementation, the first request from the first resource management system further includes a first resource share (for example, a first fund share), and the second request sent by the computing device further includes a first amount determined based on the first resource share. The second request is used to request the second resource management system (for example, the first digital wallet) to deduct a first amount of resources from the first account and transfer the first amount of resources to a service account corresponding to the interchange system.

In a first embodiment of the first implementation, after the computing device sends the second request to the second resource management system, the method further includes: The computing device receives a third request from the first resource management system (for example, the card payment acquiring institution). The third request is used to request a resource transfer operation (for example, fund capture), and includes the number ID (for example, the transaction ID) and a second resource share (for example, a second fund share). The computing device transfers resources (for example, funds) corresponding to the second resource share to the first resource management system (for example, the card payment acquiring institution).

In a first example execution of the first embodiment, the first request can be a final authorization request, the first amount of resources are equivalent resources of the first resource share (for example, the first amount of funds are equivalent funds of the first fund share), and the second resource share included in the third request is equal to the first resource share in the first request.

In a second example execution of the first embodiment, the first request is a pre-authorization request, the first amount of resources are equivalent resources of the first resource (for example, the first amount of funds are equivalent funds of the first fund share), and the second resource share included in the third request is greater than the first resource share in the first request. In this case, the method further includes: The computing device sends a fourth request to the second resource management system (for example, the first digital wallet). The fourth request is used to request the second resource management system to initiate an incremental transfer operation of equivalent resources of a differential share between the second resource share and the first resource share (for example, initiate recovery of equivalent funds of a differential share between the second fund share and the first fund share) to the first account.

In a third example execution of the first embodiment, the first request is a pre-authorization request, the first amount of resources are greater than equivalent resources of the first resource share (for example, the first amount of funds are greater than equivalent funds of the first fund share), and the second resource share included in the third request is equal to the first resource share in the first request. In this case, the method further includes: The computing device transfers a difference between the first amount of resources and equivalent resources of the second resource share (for example, a difference between the first amount of funds and equivalent funds of the second fund share) back to the first account of the second resource management system (for example, the first digital wallet).

In a fourth example execution of the first embodiment, the first request is a pre-authorization request, the first amount of resources are greater than equivalent resources of the first resource share (for example, the first amount of funds are greater than equivalent funds of the first fund share), and the second resource share included in the third request is greater than the first resource share in the first request. In this case, the method further includes: The computing device transfers a difference between the first amount of resources and equivalent resources of the second resource share (for example, a difference between the first amount of funds and equivalent funds of the second fund share) back to the first account of the second resource management system (for example, the first digital wallet) in a case that the first amount of resources are greater than the equivalent resources of the second resource share (for example, the first amount of funds are greater than the equivalent funds of the second fund share). The computing device sends a fifth request to the second resource management system (for example, the first digital wallet) in a case that the first amount of resources are less than the equivalent resources of the second resource share. The fifth request is used to request the second resource management system to initiate an incremental transfer operation of a difference between the equivalent resources of the second resource share and the first amount of resources (for example, initiate recovery of a difference between the equivalent funds of the second fund share and the first amount of funds) to the first account.

In a fifth example execution of the first embodiment, the first request is a pre-authorization request, and the second resource share included in the third request is less than the first resource share in the first request. In this case, the method further includes: The computing device transfers a difference between the first amount of resources and equivalent resources of the second resource share (for example, a difference between the first amount of funds and equivalent funds of the second fund share) back to the first account of the second resource management system (for example, the first digital wallet).

In a second embodiment of the first implementation, after the computing device sends the second request to the second resource management system, the method further includes: The computing device receives a cancellation request for the first request from the first resource management system (for example, the card payment acquiring institution). The computing device transfers the first amount of resources (for example, funds) back to the first account of the second resource management system (for example, the first digital wallet).

In a third embodiment of the first implementation, after the computing device sends the second request to the second resource management system, the method further includes: The computing device receives an incremental authorization request for the first request from the first resource management system (for example, the card payment acquiring institution). The incremental authorization request includes the number ID (for example, the transaction ID), an incremental resource share (for example, an incremental fund share), and the first token. The computing device determines the first account in the second resource management system (for example, the first digital wallet) corresponding to the first token. The computing device sends an incremental transfer request to the second resource management system. The incremental transfer request includes the number ID, the first account, and an incremental amount determined based on the incremental resource share, and is used to request the second resource management system to deduct an incremental amount of resources from the first account, and transfer the incremental amount of resources to the service account corresponding to the interchange system.

In some embodiments, the above-mentioned first resource share (for example, the first fund share) is an amount in a first resource unit (for example, a first currency) corresponding to a first type of resources, and the first amount is an amount in a second resource unit (for example, a second currency) corresponding to a second type of resources.

According to a second implementation, the second request sent by the computing device is used to request the second resource management system (for example, the first digital wallet) to send a notification associated with the first request to a user of the first account. According to this implementation, the method further includes: The computing device receives the third request from the first resource management system (for example, the card payment acquiring institution). The third request is used to request the resource transfer operation (for example, fund capture), and includes the number ID (for example, the transaction ID) and the second resource share (for example, the second fund share). The computing device transfers the resources (for example, the funds) corresponding to the second resource share to the first resource management system (for example, the card payment acquiring institution). In addition, the computing device sends a sixth request to the second resource management system (for example, the first digital wallet). The sixth request includes the number ID, the first account, and a second amount determined based on the second resource share, and is used to request the second resource management system (for example, the first digital wallet) to deduct a second amount of resources (for example, funds) from the first account, and transfer the second amount of resources to the service account corresponding to the interchange system. The second amount of resources are equivalent resources of the second resource share (for example, the second amount of funds are the equivalent funds of the second fund share).

According to a third implementation, the second request sent by the computing device is used to indicate the second resource management system (for example, the first digital wallet) to freeze at least a part of resources (for example, at least a part of funds) of the first account.

In a first embodiment of the third implementation, the first request from the first resource management system further includes the first resource share (for example, the first fund share). The second request sent by the computing device further includes the first amount determined based on the first resource share, and is used to request the second resource management system (for example, the first digital wallet) to freeze resources (for example, funds) that are of the first account and whose amount is not less than the first amount.

In a second embodiment of the third implementation, after the computing device sends the second request to the second resource management system, the method further includes: The computing device receives the third request from the first resource management system (for example, the card payment acquiring institution). The third request is used to request the resource transfer operation (for example, fund capture), and includes the number ID (for example, the transaction ID) and the second resource share (for example, the second fund share). The computing device transfers the resources (for example, the funds) corresponding to the second resource share to the first resource management system (for example, the card payment acquiring institution). In addition, the computing device sends a seventh request to the second resource management system (for example, the first digital wallet). The seventh request includes the number ID (for example, the transaction ID), the first account, and the second amount determined based on the second resource share, and is used to request the second resource management system (for example, the first digital wallet) to unfreeze the first account, deduct the second amount of resources (for example, funds) from the first account, and transfer the second amount of resources to the service account corresponding to the interchange system. The second amount of resources are equivalent resources of the second resource share (for example, the second amount of funds are the equivalent funds of the second fund share).

In a third embodiment of the third implementation, after the computing device sends the second request to the second resource management system, the method further includes: The computing device receives a cancellation request for the first request from the first resource management system (for example, the card payment acquiring institution). The computing device sends an eighth request to the second resource management system (for example, the first digital wallet). The eighth request is used to request the second resource management system to unfreeze the first account.

According to a fourth implementation, after the computing device sends the second request to the second resource management system, the method further includes: The computing device receives a resource returning request (for example, a fund refunding request) from the second resource management system (for example, the first digital wallet). The resource returning request is used to apply for a return of transferred resources (for example, paid funds) for a completed resource transfer operation (for example, a paid transaction), and includes a number ID of the executed resource transfer operation (for example, a transaction ID of the paid transaction). The computing device sends, to the first resource management system (for example, the card payment acquiring institution) based on the resource returning request, a transfer rejection request (for example, a chargeback request) related to the executed resource transfer operation.

In a first embodiment of the fourth implementation, after the computing device sends, to the first resource management system, the transfer rejection request related to the executed resource transfer operation, the method further includes: The computing device receives a feedback for the transfer rejection request from the first resource management system (for example, the card payment acquiring institution). In a case that the feedback includes a defense request for the transfer rejection request, the computing device determines, based on information included in the defense request, whether to approve the transfer rejection request.

In a first example execution of the first embodiment of the fourth implementation, after the computing device receives a resource return from the second resource management system (for example, the first digital wallet), the computing device transfers a resource that is applied to be returned from the service account corresponding to the interchange system to an initiator of the resource returning request (for example, acquires a fund from the service account and compensates to an initiator of the fund refunding request).

In a second example execution of the first embodiment of the fourth implementation, after the computing device sends, to the first resource management system, the transfer rejection request related to the executed resource transfer operation, the method further includes: The computing device receives a resource (for example, a returned fund) that is transferred back from the first resource management system (for example, the card payment acquiring institution) in response to the rejection transfer request, and transfers the resource to an initiator of the resource returning request (for example, pays the fund to an initiator of the fund refunding request).

According to the above-mentioned first example execution or second example execution, the method further includes: The computing device sends a ninth request to the second resource management system (for example, the first digital wallet) after determining not to approve the transfer rejection request. The ninth request is used to request the second resource management system (for example, the first digital wallet) to deduct the transferred-back resource (for example, the paid fund) from an account of the initiator of the resource returning request (for example, the fund refunding request), and transfer the transferred-back resource to the service account corresponding to the interchange system.

In a third example execution of the first embodiment of the fourth implementation, the method further includes: After determining to approve the transfer rejection request (for example, the chargeback request), the computing device responds to the transfer rejection request and transfers the resource (for example, the refunded fund) transferred back from the first resource management system (for example, the card payment acquiring institution) to the initiator of the resource returning request (for example, pays the fund to the initiator of the fund refunding request).

In some embodiments, the initiator of the resource returning request (for example, the fund refunding request) includes the second resource management system (for example, the first digital wallet) or a user of the second resource management system (for example, a user of the first digital wallet).

According to a fourth aspect, a request conversion apparatus is provided and integrated into an interchange system. The apparatus includes the following functional module: a first request receiving module, configured to receive a first request from a first resource management system (for example, a card payment acquiring institution), where the first request is used to request an authorized freeze on a resource (for example, a fund), and includes a number ID of a to-be-executed resource transfer operation (for example, a transaction ID of a to-be-paid transaction) and a first token; an account information determining module, configured to determine a first account in a second resource management system (for example, a first digital wallet) corresponding to the first token; and a second request sending module, configured to send a second request to the second resource management system (for example, the first digital wallet), where the second request includes the number ID and the first account.

According to a fifth aspect, a computer system is provided, including a memory, a processor, and a computer program that is stored in the memory and that can be run on the processor. The processor executes the following steps: receiving a first request from a first resource management system (for example, a card payment acquiring institution), where the first request is used to request an authorized freeze on a resource (for example, a fund), and includes a number ID of a to-be-executed resource transfer operation (for example, a transaction ID of a to-be-paid transaction) and a first token; determining a first account in a second resource management system (for example, a first digital wallet) corresponding to the first token; and sending a second request to the second resource management system (for example, the first digital wallet), where the second request includes the number ID and the first account.

According to a sixth aspect, a computer-readable non-volatile storage medium is provided. The storage medium stores a computer program, and when the computer program is executed by a processor, a method in any one of the embodiments in the first to fifth aspects and the example executions thereof is implemented.

The above-mentioned method and apparatus disclosed in embodiments of this specification can be used to integrate two different resource transfer links corresponding to different resource management systems (for example, a card payment system and a wallet payment system), so that resource transfer of a user is more convenient. For example, embodiments of this specification disclose a transaction service solution, so that the user can have smooth and seamless payment experience, and can use a digital wallet for payment at an acquiring institution that supports only card payment.

## BRIEF DESCRIPTION OF DRAWINGS

To describe the technical solutions in embodiments of this specification more clearly, the following briefly describes the accompanying drawings needed for describing the embodiments. Clearly, the accompanying drawings in the following description show merely some embodiments of this specification, and a person of ordinary skill in the art can derive other drawings from these accompanying drawings without creative efforts.

FIG. 1 is a schematic diagram illustrating a resource transfer system;
FIG. 2A illustrates a system architecture of a bank card-based resource transfer system;
FIG. 2B illustrates a link for a transaction based on the system architecture shown in FIG. 2A;
FIG. 3A illustrates a system architecture of a resource transfer system including different types of resource management systems, according to an embodiment of this specification;
FIG. 3B illustrates process steps for performing request conversion at a first stage;
FIG. 4 illustrates a link in a transaction authorization stage based on the system architecture shown in FIG. 3A, according to an embodiment of this specification;
FIG. 5 is a schematic flowchart illustrating sub-steps of step S43 in FIG. 4, according to an embodiment of this specification;
FIG. 6 is a schematic diagram illustrating a design for a sub-account system of a service account, according to an embodiment of this specification;
FIG. 7 is a schematic diagram illustrating a page of a payment document of an incremental authorization request generated in an authorization stage, according to an embodiment of this specification;

FIG. 8 illustrates a link that is at a capture stage and that is based on the system architecture shown in FIG. 3, according to an embodiment of this specification;

FIG. 9 is a schematic diagram illustrating a link of a transaction in a final authorization scenario, according to an embodiment of this specification;

FIG. 10 is a schematic diagram illustrating a link of a transaction in which a user does not pay in advance and over capture is performed in a pre-authorization scenario, according to an embodiment of this specification;

FIG. 11 is a schematic diagram illustrating a notification provided by a wallet to recover funds from a user and a repayment entry interface, according to an embodiment of this specification;

FIG. 12 is a schematic diagram illustrating opening a temporary account at a service party by a digital wallet, according to an embodiment of this specification;

FIG. 13 is a schematic diagram illustrating a link of a transaction in which a user does not pay in advance and partial capture is performed in a pre-authorization scenario, according to an embodiment of this specification;

FIG. 14 is a schematic diagram illustrating a link of a transaction in which a user pays in advance and equal capture is performed in a pre-authorization scenario, according to an embodiment of this specification;

FIG. 15 is a schematic diagram illustrating a link of a transaction in which a user pays in advance and over capture is performed in a pre-authorization scenario, according to an embodiment of this specification;

FIG. 16 is a schematic diagram illustrating a link of a transaction in which a user pays in advance and partial capture is performed in a pre-authorization scenario, according to an embodiment of this specification;

FIG. 17 is a schematic flowchart illustrating canceling authorization after steps in a method of FIG. 4 are executed, according to an embodiment of this specification;

FIG. 18 illustrates a substitute link for a transaction based on the system architecture shown in FIG. 3, according to an embodiment of this specification;

FIG. 19 is a schematic diagram illustrating two-stage transfer between an acquisition system and a digital wallet performed by an interchange system, according to an embodiment of this specification;

FIG. 20 is a schematic diagram illustrating a link of a process of processing an authorization (Auth) request in FIG. 19;

FIG. 21 is a schematic diagram illustrating a link of a process of processing a capture (Capture) request in FIG. 10;

FIG. 22 illustrates a link at a transaction chargeback stage based on the system architecture shown in FIG. 3, according to an embodiment of this specification;

FIG. 23 is a schematic diagram illustrating a link of a transaction in which a service party compensates in advance before receiving a feedback from a merchant when a user initiates a chargeback, according to an embodiment of this specification;

FIG. 24 is a schematic diagram illustrating a link of a transaction in which a service party does not compensate in advance and a wallet does not advance funds for compensation when a user initiates a chargeback, according to an embodiment of this specification;

FIG. 25 is a schematic diagram illustrating a link of a transaction in which a digital wallet advances funds for compensation when a user initiates a chargeback, according to an embodiment of this specification;

FIG. 26 is a schematic diagram illustrating a link of a transaction in which a service party does not compensate in advance before receiving a feedback from a merchant when a digital wallet initiates a chargeback, according to an embodiment of this specification;

FIG. 27 is a schematic diagram illustrating a structure of a request conversion apparatus integrated into an interchange system, according to an embodiment of this specification; and

FIG. 28 is a schematic diagram illustrating a structure of a computer system, according to an embodiment of this specification.

## DESCRIPTION OF EMBODIMENTS

The following describes the solutions provided in this specification with reference to the accompanying drawings.

As mentioned above, resource transfer/transmission requirements usually exist between different resource management systems. Some resource management systems can directly transfer and transmit resources, while others need to transfer and transmit resources through an intermediate system or an interchange system.

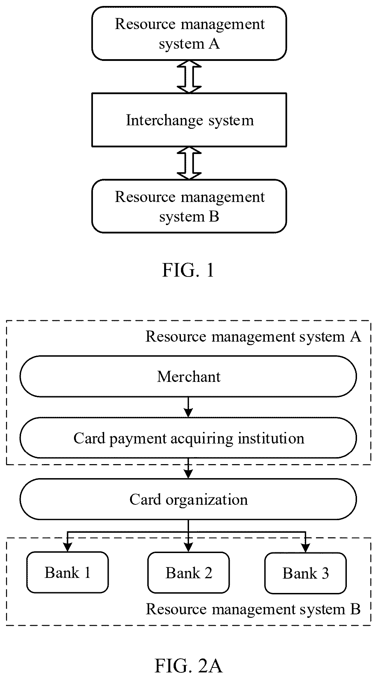

FIG. 1 is a schematic diagram illustrating a resource transfer system. As shown in the figure, the resource transfer system includes a resource management system A, a resource management system B, and an interchange system. The resource management systems A and B are two resource management systems, and manage respective internal resources. Resource transfer between the resource management systems A and B can be implemented through the interchange system. For example, a resource in the resource management system A is transferred to the resource management system B, for example, to a resource account in the system B. For example, a resource is a cloud resource. The resource management systems A and B can be two different cloud platforms, and the cloud resource can be transferred between the resource management systems A and B. For example, a resource is a fund. The resource management systems A and B can be two different fund management institutions, and the fund can be transferred between the resource management systems A and B.

Resource management systems in different regions or belonging to different institutions may use different resource bearer/record ways, be constructed based on different technical infrastructures (including network links, data storage formats, and data communication formats), and execute different resource management logic. In the following, resource management systems using different resource bearer/record ways, and/or constructed based on different technical infrastructures, and/or executing different resource management logic are referred to as different types of systems using different resource mechanisms. Different types of resource management systems usually support different resource interchange ways. The cloud resource is used as an example. Some cloud platforms manage the cloud resource in a virtualization way and by using a container and a pod as basic objects, and other cloud platforms may separately manage power resources and storage resources, so as to form different types of systems in different resource mechanisms. For example, a resource is a fund. Some resource management systems use a bank card as a resource bearer/record way and are constructed based on a dedicated network line, and some emerging resource management systems use a digital wallet as a resource bearer/record way and are constructed based on a common Internet, so as to form different types of systems in different resource mechanisms.

If the resource management systems A and B in FIG. 1 are different types of systems in different resource mechanisms, resource transfer between the two systems is very difficult, which greatly affects convenience and efficiency of resource transfer. The fund is used as an example. In some regions, a resource management system based on a digital wallet (or referred to as an electronic wallet or a wallet for short) is increasingly popular, and payment by using the digital wallet has become one of mainstream payment ways. However, in many regions, only a bank card-based resource management system is used. Many merchants in these regions use acquiring machines (for example, POS machines) and corresponding acquiring institutions (suppliers of the acquiring machines, and handlers of corresponding orders) that support only bank card payment rather than digital wallets. Therefore, after reaching another region, some digital wallet users can pay only in cash because they may not be able to use the digital wallet and have no bank card that supports local payment. This causes inconvenience to the users.

Therefore, in this specification, a solution for performing request conversion between resource management systems is provided, to break through a barrier of mechanism differences between different types of resource management systems, break through technical barriers, and implement convenient resource transfer between different types of resource management systems. Specifically, in a fund management scenario, the request conversion solution makes a user to have undifferentiated and smooth payment experience in different countries or regions by using a digital wallet.

To help understand, the following uses fund management as an example to first describe a system architecture and a transfer link that are used for resource transfer between resource management systems of a same type, then describe a difference between resource management systems of different types, and then describe the request conversion solution provided in embodiments of this specification.

FIG. 2A illustrates a system architecture of a bank card-based resource transfer system. As shown in the figure, the system architecture of the resource transfer system usually includes a merchant, an acquiring institution, a card organization, and a financial institution that has been granted a card issuing qualification by the card organization. The financial institution is usually a bank and can be briefly referred to as a card issuer. In the above-mentioned architecture, the merchant and the acquiring institution form a resource management system A, the bank forms a resource management system B, and the card organization functions as an interchange system between the resource management systems A and B. The following describes functions of the above-mentioned parties one by one.

In FIG. 2A, the merchant can be embodied as an acquiring machine used by the merchant, for example, a POS machine. A "card payment acquiring institution" is an acquiring institution capable of handling a payment transaction based on a bank card, and is briefly referred to as an "acquiring institution" in this specification for the sake of simplification. The acquiring institution processes customer payment on behalf of the merchant, and a main responsibility includes one or more of the following: setting up and maintaining a merchant account for the merchant, providing the acquiring machine for the merchant, aggregating and processing transaction orders generated by the merchant, connecting the orders to the card organization, performing transaction processing on the orders in accordance with a rule of the card organization, regularly settling funds into the account of the merchant, and performing risk management. The card organization represents a payment network that regulates and manages use of a payment card issued by a bank or another financial institution, and a main responsibility includes one or more of the following: connecting the card issuer and the acquiring institution, establishing a rule and a process for transactions, and regularly conducting clearing and settlement of funds. The card organization can exchange, convert, route, and manage requested data between the acquiring institution and the card issuer, and function as an interchange system. Examples of the card organization include both international card organizations such as Mastercard, VISA, and UnionPay, and national card organizations such as Dankort, RuPay, and mada. Some card organizations offer three-party scheme services. To be specific, the card organization directly serves both a merchant and a customer. In this case, the card organization acts as both the acquiring institution and the card issuer. In addition, in some cases (for example, when both the merchant and the customer hold accounts with a same bank and when some countries or regions provide infrastructure used for easy transfer of funds between different banks), bank card payment can be completed without intervention of the card organization.

It is worthwhile to note that the card organization can be replaced with another acquiring management institution that supports a same or similar function, for example, some financial service banks that also have an acquiring management function. It is considered that the card organization is a mainstream entity in a card payment system. The following is mainly described with the card organization as an example, and the card organization and the acquiring management institution can be used interchangeably in this specification. The acquiring institution and the acquiring management institution that is represented by the card organization together form a card payment acquiring system. It can be understood that there can be one or more entities assuming each of the roles, and each of the entities can be realized as any apparatus, platform, server, device cluster, etc. that has computational and processing capabilities.

In the resource transfer system shown in FIG. 2A, the resource management systems A and B are both bank card-based resource management systems. When resource transfer (for example, payment) is performed in the system architecture, the acquiring machine reads information about a resource carrier of a user (for example, card information of a bank card), and then the acquiring institution uploads the information to the card organization. The card organization forwards a related request to the card issuer, and the card issuer executes a corresponding fund operation. Technical implementation of the above-mentioned resource operation and transfer link includes at least two parts: a network link and a packet format.

In terms of the network link, data transmission in the above-mentioned several stages is generally implemented based on different types of network links. Specifically, data are transmitted between the acquiring machine represented by the POS machine and the acquiring institution via a first link. Physical layer implementation of the first link is generally a TCP long connection established by a PSTN telephone line, GPRS/CDMA wireless, Ethernet, or 4G/Wi-Fi for a conventional POS machine, and may be a TLS over Internet for an emerging intelligent POS machine. The acquiring institution and the card organization are generally interconnected through a financial dedicated line (SDH, MSTP, or MPLS VPN) or IPSec VPN. The card organization routes to a card issuer gateway based on card BIN, and is also connected through a financial dedicated line or VPN.

Data formats of communication packets transmitted in the above-mentioned several links are unified as an ISO 8583 packet (or an XML/JSON variant based on ISO 8583) at an application layer. For example, a packet in the communication format can be represented as:

$$\text{TPDU (optional)} + \text{MTI} + \text{packet header} + \text{bitmap} + \text{data domain} + \text{MAC}$$

The transport protocol data unit (TPDU) is an optional message header and is used for message routing.

The message type identifier (MTI) is a message type identifier, and indicates a service action corresponding to the packet message. The MTI is generally 4 bits.

The data domain part is a body of a packet message. Different bits in the data domain part correspond to different fields and indicate different information. Some key fields are indicated as follows. Bit 2 indicates a primary account number (PAN), bit 3 indicates a processing code (for example, 00 indicates consumption, 20 indicates returns, etc.), bit 4 indicates a transaction amount (which can be a 12-bit BCD), bit 7 indicates transmission date time (a format can be MMDDhhmmss), bit 41 indicates a terminal number (8 bits) of a POS machine, bit 42 indicates a merchant number (15 bits), bit 63 indicates a customized field, and can store a transaction ID, etc..

In this way, the acquiring machine, the acquiring institution, the card organization, and the card issuer transmit data via a dedicated line. Application layer protocols for data transmission uniformly use the ISO 8583 packet. However, each party may add or peel off a header (a TPDU, an interchange header, or a MAC) of the party. Finally, the card issuer executes a corresponding operation, and then returns a response packet.

For card payment transactions, the card organization generally provides the following types of information flow interfaces (or acceptable request types):

authorization/Auth: used for credit line checking and reserving or freezing requested funds, and including pre-authorization, final authorization, and incremental authorization as described below;
cancellation/cancel: used to unfreeze reserved funds;
capture/capture: a capture instruction after the Auth, used to request to transfer funds from an account of a customer to an account of a merchant, and sometimes referred to as presentment or clearing; and
refund/refund: used to return funds to an account of a customer.

In the above information flow interfaces, authorization is a first-stage information flow interface, while a second-stage information flow interface includes one of cancellation and capture. A complete payment link for a transaction includes both stages of authorization/Auth and capture/capture. In other words, in a first resource interchange way supported by the bank card-based resource transfer system (namely, the card payment acquiring system), two-stage service operations need to be executed to complete resource transfer (for example, a transaction payment process). A specific service operation requested to execute can be indicated and determined by using a combination of an MTI part in the ISO 8583 packet and a bit 3 part in the data domain (this part is also referred to as a processing code). For example, when an MTI value is 0100, an authorization request is indicated. When a value of the processing code is 00, consumption is indicated. A combination of the two can indicate that a current packet is used to request to perform consumption authorization.

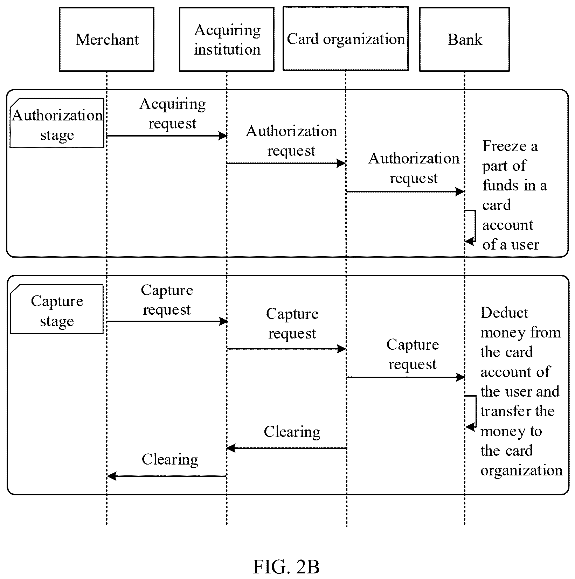

The following specifically describes a process of two-stage resource transfer (for example, payment). FIG. 2B illustrates a data link for resource transfer (for example, bank card payment) based on the system architecture in FIG. 2A, and includes an authorization stage and a capture stage.

At an authorization stage, a merchant sends an acquiring request in a form of ISO 8583 packet to an acquiring institution based on a bank card payment operation executed by a user for a current transaction (for example, the user uses a POS machine when checking in at a hotel). In the request packet, an MTI field can be set to, for example, 0100, a bit 3 in a data domain can be set to 30 (indicating pre-authorization), and another bit in the data domain can correspondingly include card information, a transaction amount, etc.. The acquiring institution generates an order number (namely, a transaction ID) for the acquiring request, fills the order number in the data domain, for example, a bit 63 field, and sends an authorization request to the card organization after further packaging the packet, so as to request to freeze funds of the transaction amount. Afterwards, the card organization forwards, based on card information included in the authorization request, the authorization request to a bank that issues the card. In this case, the bank freezes, based on the authorization request, an indicated amount in a card account indicated by the authorization request.

At the capture stage, the merchant initiates, to the acquiring institution, a capture request for the transaction order, for example, initiates capture after the user checks out of the hotel. In a capture request packet, the MTI field can be set to, for example, 0220 (indicating subsequent clearing), and the bit 3 in the data domain can be set to 00 (indicating actual consumption deduction). Next, the acquiring institution forwards the capture request to the card organization. Afterwards, the card organization forwards the capture request to the bank based on card information in the capture request. In this case, the bank deducts, based on the capture request, the transaction amount from a card account indicated by the capture request, and transfers the transaction amount to the card organization. Afterwards, the card organization performs clearing with the merchant through the acquiring institution.

The above briefly describes the system structure and transfer link of the bank card-based resource transfer system. It can be learned that in the bank card-based resource transfer system, the card organization is used as an interchange system or a center, and resource transfer (such as bank card payment) is completed through a dual-information-flow (two-request) and two-stage data link. In terms of technical implementation, the resource transfer system relies on establishment of a financial dedicated line for data transmission, and the ISO 8583 packet is used for transmission.

Compared with the bank card-based resource management system, a digital wallet-based resource management system has many differences in terms of technical implementation. In a resource transfer system in which resource transfer (for example, payment) is performed based on a digital wallet, a merchant's POS system generally uses a long-lived HTTPS TLS connection to POST a transaction request to a unified access domain of a payment gateway. This process can be implemented through public network access. Then, the payment gateway can forward the transaction request to a corresponding digital wallet (usually a digital wallet server) through an HTTPS+ bidirectional TLS or MQ/Kafka message queue. In practice, each digital wallet defines a dedicated service interface, or referred to as an API specification, where information such as a transaction field, a signature algorithm, an error code, and a status machine are agreed upon. The information can be in a form of code. For example, a field format of a payment request specified in a digital wallet is as follows:

```
{

    "requestNo":"20241230xxxx",

    "version":"V1.0",

    "accessCode":"88880001",      //an access number allocated by a platform

    "mchNo":"M123456789",       //merchant number

    "outTransNo":"ORDER202507310001",

    "transAmount":100,            //amount

    "currency":"CNY",             //currency

    "authCode":"134567890123456789",      //user wallet QR code/barcode

    "notifyUrl":"https://merchant.example.com/notify",

    "signType":"RSA2",

    "signature":"<Base64 signature string>"

}
```

The above-mentioned request content is serialized by using, for example, JSON, and then can transmitted in a network by using a TLS protocol. Data security is ensured by an RSA signature. In general, in the digital wallet-based resource transfer system, a network link may not be a dedicated line, and a full link can be implemented based on a public network by using the TLS protocol. Formats of the transmitted packets are different and are determined by an API specification of a target digital wallet.

In terms of a resource transfer way, in a second resource interchange way supported by the digital wallet-based resource transfer system, resource transfer is generally completed by using a single-stage operation. In terms of a specific service operation, service interfaces provided by most digital wallets include only PAY, used for payment, and Refund, used for refund (corresponding to an original transaction). Correspondingly, payment links of most digital wallets usually have only one stage, to be specific, deduction of funds is completed as soon as the user initiates the payment operation.

It can be learned that, to perform resource transfer between different types of resource management systems that support different resource interchange ways, for example, to perform fund transfer between the bank card-based resource management system and the digital wallet-based resource management system, multiple technical difficulties need to be overcome. In one aspect, different types of resource management systems (for example, the bank card-based system and the digital wallet-based system) are different at a technical basic level like a network link and a packet format, and need to be connected. More core, the two types of resource management systems have different resource management logic (for example, different payment logic), so that basic service operations supported by the two types of resource management systems are different. For example, a bank card payment system completes payment by using a two-stage request, and most digital wallets provide only a single-stage payment service interface. This causes substantial difficulties for integration of the digital wallets.

Based on the above-mentioned observation and analysis, in this specification, a newly designed interchange system is provided to perform request conversion between different types of first and second resource management systems that support different resource interchange ways, and convert a request that is from the first resource management system and that is originally not supported by the second resource management system into a request that can be supported by the second resource management system, so as to implement resource transfer between different types of resource management systems. When the interchange system is used in a payment scenario related to fund transfer, a digital wallet can be integrated into a system structure of bank card payment, so as to integrate two different payment links corresponding to bank card payment and wallet payment. Specifically, the interchange system performs request conversion between the card payment acquiring institution and the digital wallet, to convert a request that is from a card payment system and that is originally not supported by the digital wallet into a request that can be supported by the digital wallet. The card payment acquiring system does not need to change the original link flow and request form. The digital wallet still only needs to provide the original service interface and execute the original basic operation, and does not need to additionally identify the card payment system request form or add additional service logic for the card payment system. A user does not need to apply for a credit card or debit card, and has same experience as using the digital wallet for local payment when using the digital wallet for cross-border payment.

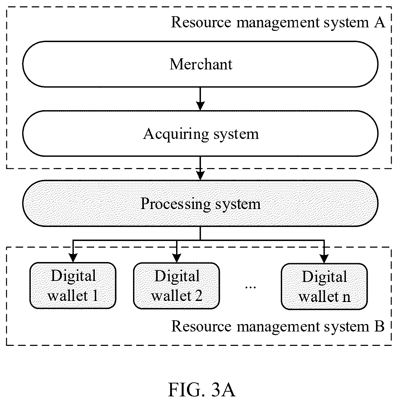

FIG. 3A illustrates a system architecture of a resource transfer system including different types of resource management systems, according to an embodiment of this specification. In comparison with FIG. 2A, the bank is replaced with a digital wallet, and a newly designed interchange system is added between the acquiring system and multiple digital wallets. In the system architecture, a merchant and the acquiring system form a first resource management system of a first type, and the digital wallets form a second resource management system of a second type. The interchange system can exchange, convert, route, and manage request data between the first resource management system and the second resource management system, so as to implement resource transfer between the two systems. It is worthwhile to note that a relationship between a service party to which the interchange system belongs and another entity in the system architecture in FIG. 3A is not specifically limited in embodiments of this specification. For example, the service party can be a third party independent of another digital wallet, or the service party can be a developer of a digital wallet. In addition, there can be one or more digital wallets in FIG. 3A, that is, n is a positive integer. For brevity, a digital wallet refers to a wallet server or a wallet client device or both; and an interchange system refers to an interchange system server or an interchange system client device (for example, an SDK that cooperates with the wallet client device) or both. A person skilled in the art can infer a specific reference object based on a context. In addition, it can be understood that the interchange system is implemented by using one or more computing devices. The steps and functions executed by the interchange system described below are all executed by the computing device of the interchange system.

The acquiring system, namely, the card payment acquiring system, shown in FIG. 3A can include only the card payment acquiring institution shown in FIG. 2A, or can further include the card organization shown in FIG. 2A.

To connect the first/second resource management systems, resource accounts of each second resource management system can be tokenized or digitized in advance, so that the second resource management system has a consistent recording way of a resource bearer body with the first resource management system. It should be understood that, to subsequently distinguish between tokens from different systems, tokens of resource accounts of the second resource management system can be different from tokens of resource account of the first resource management system in terms of a data format, a flag bit, etc.. The interchange system can record a correspondence between each account of each second resource management system and a token.

In a fund transfer scenario, to access a digital wallet to a card payment system centered on an acquiring system, a wallet account for which the service is activated can be tokenized in advance by using the above-mentioned interchange system and the acquiring system (for example, a card organization in the acquiring system) to obtain a token that can be identified by an acquiring machine. The interchange system can record a mapping relationship between each wallet account and a token. In this specification, the token refers to a substitute value for account information. In an example, a token service provider can generate, based on a predetermined rule and account information of the digital wallet or information about a card allocated to the account, a token that replaces the account information, and provide the mapping relationship between each wallet account and the token for the interchange system. A process of tokenization is not limited here.

At a technical implementation level, a specific form of token can have flexibility. The token can be a high-strength random string formed by a combination of letters and numbers, or can be a UUID identifier randomly generated based on an RFC4122 standard, or can be another digitized credential that can have a unique identification function and does not include sensitive information. The interchange system can record the mapping between the token and the wallet account in various data formats. For example, the interchange system can construct a key-value pair by using a token as a key and account information of a digital wallet as a value, or can form a relational data table that associates a wallet account by using a token as a primary key. The interchange system stores the key-value pair or data table in a non-volatile medium for query and reading.

In this way, when the user performs payment by using the digital wallet, the acquiring machine can read and identify, through, for example, near field communication (NFC), a token of a wallet account from a user terminal on which the digital wallet is installed, use the token as card information, and transmit the token to the acquiring system in a certain communication way. For example, the token is first transmitted to the acquiring institution, and then the acquiring institution usually transmits the token to the card organization. Based on the system architecture shown in FIG. 3A, after identifying that a request received from a merchant includes a token of a corresponding digital wallet, the acquiring system forwards the request to the interchange system. The interchange system performs subsequent processing based on the request, and cooperates with the digital wallet to complete a subsequent transaction process.

The following uses a fund payment scenario as an example to describe in detail how the interchange system implements request conversion and resource transfer between two different types of resource management systems. It is assumed here that the first resource management system uses a two-stage request mechanism, that is, the first resource management system first applies for an authorized freeze on a resource, and then applies for a real resource transfer operation. The second resource management system uses a single-stage resource transfer operation. Specifically, in the payment scenario, how the interchange system cooperates with the digital wallet to complete the transaction process is described. The following describes in detail authorization/Auth, cancellation/cancel, and capture/capture requests that are used by the card payment acquiring system and are not usually supported by the digital wallet.

In an example implementation, the interchange system can convert the authorization request in the card payment system into a payment request for calling a payment API provided by a digital wallet. The payment request indicates the digital wallet to deduct funds from a user account and transfer the deducted funds to a service account corresponding to the interchange system. Then, at a capture stage, the interchange system can transfer, based on the capture request sent by the acquiring system, funds of a corresponding capture amount in the service account to an account of the card payment acquiring institution.

The following describes in detail the resource transfer links and technical implementations of the example embodiments described above with reference to more drawings and embodiments.

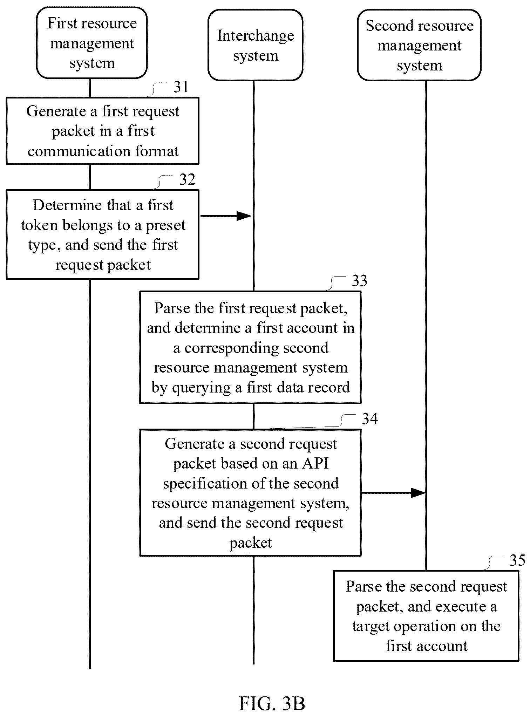

FIG. 3B illustrates process steps for performing request conversion at a first stage. As shown in the figure, in step S31, a first resource management system generates a first request packet in a first communication format. The first communication format conforms to a communication packet specification of an internal communication network of the first resource management system, a first field in a packet header of the first request packet indicates that the first request packet is used to request an authorized freeze on a resource, a packet body of the first request packet includes a number ID of a to-be-executed resource transfer operation and a first token, and the first token is obtained from an entity held by a user. The entity held by the user can be a user terminal device that stores the first token, or another entity (for example, a smart card).

In step S32, the first resource management system sends the first request packet to an interchange system in response to determining that the first token corresponds to a second-type resource management system.

As described above, there are explicit differences between tokens of the first resource management system and a second resource management system in terms of a data format, a flag bit, etc.. Therefore, the first resource management system can determine, based on these explicit differences, whether the first token in the first request packet belongs to the first resource management system or the second resource management system.

In an example, a token of the first resource management system is different from a token of the second resource management system in terms of a data format, for example, tokens have different lengths, or one token is not allowed to include a predetermined special character while the other token needs to include a special character. In this case, the first resource management system can determine, based on a data format of the first token, a specific type of resource management system corresponding to the first token.

In another example, the token of the first resource management system and the token of the second resource management system have different flag bits. For example, values of first n bits of a token are numbers, and values of first n bits of another token are letters; or a value of a specific bit of a token is a number x, and a value of the specific bit of another token is a number y. In this case, the first resource management system can determine, based on a flag bit of the first token, a specific type of resource management system corresponding to the first token.

There can be another form of explicit difference between the two tokens. Based on the explicit difference, the first resource management system can determine a type of a resource management system corresponding to the first token. If it is determined that the first token corresponds to the second-type resource management system, the first resource management system sends the first request packet to the interchange system.

In step S33, the interchange system parses the first request packet based on the first communication format, extracts the number ID and the first token from the first request packet, and determines, by querying a first data record stored in a non-volatile storage medium, a first account in the second resource management system corresponding to the first token.

In step S34, the interchange system generates a second request packet in a second communication format based on an API specification of the second resource management system, and sends the second request packet to the second resource management system. The second request packet is used to call a target API, and a call parameter field of the second request packet includes the number ID and the first account.

In step S35, the second resource management system parses the second request packet in the second communication format based on the API specification, extracts the number ID and the first account from the call parameter field, and executes a target operation of a function corresponding to the target API on the first account.

In this way, the interchange system converts a request from the first resource management system for performing an authorized freeze on a resource into a call to an API provided by the second resource management system, so that not only a communication format of the request is converted, but also logic of resource management is adapted and converted, to make the second resource management system to be adapted to the first resource management system.

In a typical implementation, the packet body of the first request packet further includes a first resource share. In step S34, that the interchange system generates a second request packet in a second communication format specifically includes: determining a first amount based on the first resource share, and including the first amount in the call parameter field of the second request packet. The target API indicates a resource transfer operation. In step S35, that the second resource management system executes a target operation of a function corresponding to the target API on the first account specifically includes: deducting a first amount of resources from the first account, and transferring the first amount of resources to a service account corresponding to the interchange system.

In this way, the interchange system converts a request from the first resource management system for performing an authorized freeze on a resource into a resource transfer operation request supported by the second resource management system, so as to implement resource transfer at a first stage.

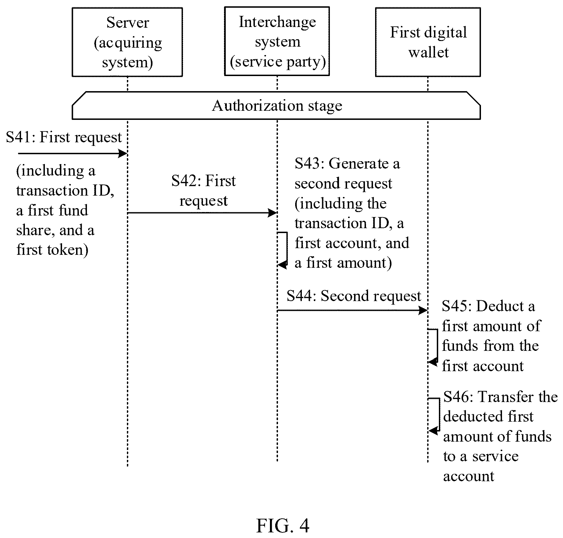

FIG. 4 illustrates procedure steps of a resource transfer link at an authorization stage in an example scenario of fund transfer, that is, the embodiment of the procedure steps in FIG. 3B in a payment scenario. As shown in FIG. 4, in step S41, a server of an acquiring system generates/acquires a first request in a first format, where the first request is used to request an authorized freeze on a fund, and the first request includes a transaction ID of a to-be-paid transaction, a first fund share, and a first token.

It is worthwhile to note that when the acquiring system includes only a card payment acquiring institution but does not include a card organization, an acquiring server is a server of the acquiring institution. The server of the acquiring institution can interconnect with an interchange system through various network links (which are not necessarily financial dedicated lines, but can include public network access). When the card payment acquiring system includes both the acquiring institution and the card organization, the server of the acquiring institution is connected to a server of the card organization in an existing way, and the server of the card organization interconnects with the interchange system through various network links. For brevity of description, the server of the acquiring system is briefly referred to as a target server below.

In addition, similar terms such as "first" in "first request" and "first fund share" and "second" and "third" elsewhere in this specification are all intended to clearly distinguish between things of a same type and do not have another limitation function such as ranking.

It can be understood that the first request in the first format (namely, the first communication format) is a request packet of a first stage (an authorization stage) originally generated by the card payment acquiring system (the first resource management system). The first format is, for example, a ISO 8583 packet form. The first format includes at least a message type indicator MTI and a data domain field, and an MTI value (for example, a value of 0100) can indicate that the first request is used for an authorized freeze on a fund.

The data domain field of the first request can be filled with the transaction ID, the first fund share, and the first token. The transaction ID can uniquely identify a transaction, and a transaction object of the transaction can be any product or service, for example, a retail product, a hotel service, a car rental service, or a medical service. The first fund share can indicate both a currency type and a fund amount and the first fund share is intuitively denoted as $M_1$ below. The first token can come from a wallet client device that initiates a payment operation for the to-be-paid payment transaction and is sent to the target server through the acquiring machine. In addition, the first token is filled in a data space that is in a first format and that is originally used to fill a bank card. Certainly, when the bank card is used for payment, the first token in the first request is bank card information or a card virtual token read by the acquiring machine. Because this branch is processed in an existing way, the following mainly describes a case that the first token is from a wallet client device.

It can be understood that the first request is an authorization request corresponding to the Auth stage, and can be generally divided into a pre-authorization request and a final authorization request. For a difference between the two types of requests, refer to the following Table 1. Generally, the two types of requests need to be determined based on a combination of MTI values and a value of a specific data bit (for example, bit 3) in a data domain.

**Table 1**

| Classification | Final authorization request | Pre-authorization request |
|---|---|---|
| Authorization amount | Product selling price amount | Approximate estimated amount |
| Authorization validity period | Shorter, for example, up to 7 days | Longer, for example, up to 30 days |
| Capture amount | The capture amount is the same as the authorization amount | The authorization amount may be different from the capture amount |
| Scenario application | Retail industry, etc. | Hotel, car rental, hospital, etc. |
| Others | There is no subsequent incremental authorization | There may be subsequent incremental authorization |

Generally, the first request is normally generated by the acquiring institution based on an acquiring request sent by a merchant. A specific description can be compared with the above-mentioned related description of the acquiring request and the authorization request in FIG. 2A. A main difference lies in that in this solution, a user pays by using a digital wallet instead of a bank card, and the acquiring machine identifies a wallet token that is used as card information instead of card information of a bank card. Correspondingly, in the ISO 8583 packet, the data bit used to fill the card information includes the first token.

It is worthwhile to note that an information link used by the target server to obtain the first request can be the same as a conventional technology, and is not limited in embodiments of this specification.

Step S42: The target server sends the first request in the first format to the interchange system.

Specifically, first, the target server can parse the first request based on the first format, and extract a data string from specific data bits that are in the data domain and that are used to fill the card information. As described above, there can be an explicit difference between data formats of a token and a bank card, for example, first several bits satisfy a specified value or range. In this way, the target server can determine, based on the extracted data string, whether a wallet token or bank card information is filled in a specific data bit. If a wallet token is filled, the target server forwards the first request to the interchange system instead of a bank or other qualified financial institution. In other words, the first resource management system sends the first request to the interchange system only when the first token in the first request corresponds to the second-type resource management system.

As described above, the target server can be connected to the interchange system through various network links. When a used network link is not a dedicated security link, the target server can encrypt the first request, and send a request ciphertext to the interchange system. Encryption can use various symmetric encryption algorithms, such as AES or SM4, or asymmetric encryption algorithms, such as RSA or SM2. This is not limited here.

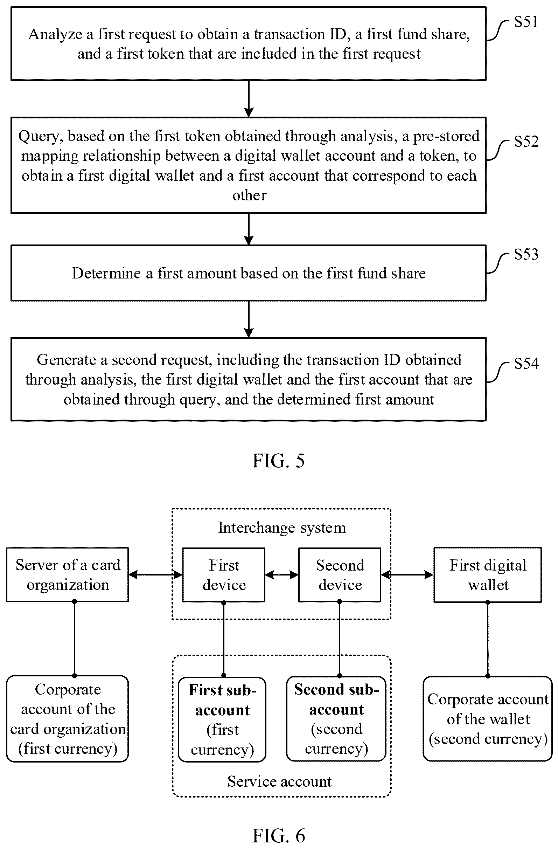

Step S43: The interchange system generates a second request in a second format to call a target API of a first digital wallet, where the second request includes the transaction ID, a first account in the first digital wallet corresponding to the first token, and a first amount determined based on the first fund share. Specifically, this step can include sub-steps below shown in FIG. 5.

Step S51: The interchange system parses the first request to obtain the transaction ID, the first fund share $M_1$, and the first token that are included in the first request.

It can be understood that when the target server transmits the request ciphertext of the first request, the interchange system first decrypts the request ciphertext, restores the request ciphertext to a plaintext, and then parses the plaintext request. In this case, the first request still conforms to the above-mentioned first format, for example, ISO8583. Therefore, the interchange system extracts a message body from the first request, and reads the transaction ID, the first fund share $M_1$, and the first token from corresponding data bits of the data domain in the message body.

Step S52: The interchange system queries, based on the first token obtained through parsing, a pre-stored mapping relationship between a digital wallet account and a token, to obtain a corresponding first digital wallet and first account. As described above, the interchange system records, in a non-volatile storage medium, the mapping relationship between the wallet account and the token by using various forms of data records. The first digital wallet and the first account are obtained by querying the data record. For example, the above-mentioned data record can be in a form of key-value pair. In this case, the interchange system can locate a key-value pair record by using the first token as a key, and then read a value of the key-value pair as the first digital wallet and the first account. Alternatively, the above-mentioned data record can be in a form of relational data table. The interchange system can query a row of the data table by using the first token as a primary key, and read the first digital wallet and the first account from the row.

Step S53: The interchange system determines, based on the first fund share $M_1$, the first amount $N_1$ to be sent to the first digital wallet.

In a cross-border payment scenario, a merchant and a digital wallet of a user in a transaction belong to different regulatory regions, where the different regulatory regions usually support different currencies. In this case, this step may include calculating an exchange amount based on an exchange rate. Specifically, it is assumed that a regulatory region to which the merchant belongs supports a first currency and a regulatory region to which the first digital wallet belongs supports a second currency. In this case, the first amount $N_1$ can be obtained through calculation based on an exchange rate of exchanging the first currency to the second currency.

In this case, the interchange system can include or be connected to an exchange rate data unit. The exchange rate data unit can include a storage layer and a recording module. The storage layer is configured to store exchange rate data. The recording module is configured to query the current exchange rate at a certain period and update the stored exchange rate data. When calculating the exchange amount based on the exchange rate, the interchange system can send a query request to the exchange rate data unit, and determine an exchange rate of a first currency in a second currency by querying currently updated exchange rate data, so as to calculate the above-mentioned first amount.

This corresponds to a case that two resource management systems manage different types of resources measured by different units. For example, the first resource management system is configured to manage at least a first type of resources, and the second resource management system is configured to manage at least a second type of resources. In this case, the first resource share in the first request packet is an amount in a first resource unit corresponding to the first type of resources, and the first amount determined by the interchange system is an amount in a second resource unit corresponding to the second type of resources.

It is worthwhile to note that the transaction service solution disclosed in embodiments of this specification is provided for a cross-border payment service scenario, but is also applicable to a local payment service scenario. In this case, the above-mentioned first currency and second currency are the same and the first amount $N_1$ can be directly determined based on the first fund share $M_1$.

In different cases, the first amount $N_1$ of funds can be equivalent funds of the first fund share $M_1$ or be greater than the equivalent funds. For ease of understanding, specific descriptions are provided below with reference to a capture process.

After the first amount $N_1$ is calculated, in step S54, the interchange system generates the second request in the second format based on the API specification of the first digital wallet, where the second request is used to call the target API of the first digital wallet, and the second request includes the transaction ID obtained through parsing, the first digital wallet and the first account that are obtained through query, and the determined first amount $N_1$.

As mentioned above, each digital wallet can have a dedicated API specification. Each digital wallet accessing the interchange system can register the API specification in the interchange system in advance. Therefore, after determining the first digital wallet in step S52, the interchange system can obtain the API specification corresponding to the first digital wallet. Therefore, in step S54, the interchange system generates the second request in the second format, where the second format conforms to the API specification corresponding to the first digital wallet, and is different from the above-mentioned first format.

It is worthwhile to note that APIs provided by the digital wallets can be classified into two types. The first type is a basic service interface that is open to a merchant. As mentioned above, basic service interfaces of most digital wallets include only payment APIs and refund APIs. The second-type interface can be referred to as an auxiliary interface, and is used for notification and interaction other than a basic service operation. Some auxiliary interfaces can be open only to authorized handlers. In the example in FIG. 5, the target API called by the second request can be a payment API in a basic service interface of the first digital wallet.

With reference to FIG. 5, the above describes that the interchange system generates the second request based on the first request.

Back to FIG. 4, in step S44, the interchange system sends the second request to the first digital wallet. Specifically, the interchange system can send the second request to the first digital wallet through various network links via a transport layer protocol like TLS. Typically, the transport layer protocol needs to ensure transmission security and integrity of the second request.

Next, in step S45, the first digital wallet deducts the first amount of funds from the first account.

Specifically, because the second request is generated based on the API specification of the first digital wallet, the first digital wallet can normally parse the received second request to obtain the transaction ID, the first account, and the first amount $N_1$ included in the second request. In a case that the payment API is called, the first digital wallet deducts the first amount of funds from the first account.

In step S46, the first digital wallet transfers the deducted funds to the service account corresponding to the interchange system.

It can be understood that the first digital wallet can spontaneously transfer the deducted funds to the service account, or can transfer the deducted funds to the service account in response to a request of the interchange system. The service account corresponding to the interchange system can be a service account of a service party to which the interchange system belongs, or can be any other account that can be accessed by the interchange system.

For step S45 and step S46 above, in some embodiments, the first digital wallet can immediately (or instantly or in real time) transfer the first amount of funds from the first account to a corporate account of the first digital wallet based on an indication of the second request and transfer the first amount of funds from the corporate account to the service account within a predetermined time range (for example, one day).

According to another aspect of the embodiments, in a cross-border payment service scenario, after step S46 is executed, the following step can be further executed: The interchange system converts the first amount of funds transferred to the service account into a fund share in the first currency, for example, the first fund share $M_1$, so as to wait for the acquiring system to initiate capture.

It can be learned that the interchange system implements data and information transmission between the card payment acquiring institution and the first digital wallet. Therefore, in an implementation, the interchange system can include a first device and a second device, where the first device is configured to interact with the card payment acquiring institution, and the second device is configured to interact with the first digital wallet. It can be understood that a communication connection is established between the first device and the second device. Further, in an example, the first device and the card payment acquiring institution belong to a same regulatory region, and the second device and the first digital wallet belong to another regulatory region.

In an example, as shown in FIG. 6, the service account can include a first sub-account and a second sub-account. The first device in the interchange system performs first fund interaction with an account of the card organization based on the first sub-account by using the first currency, and the second device performs second fund interaction with the first digital wallet based on the second sub-account by using the second currency. In this case, in step S46, the first digital wallet can transfer deducted funds in the second currency to the second sub-account, and then the second device exchanges the fund transferred to the second sub-account to a fund share in the first currency and transfers the funds to the first sub-account, to wait for the acquiring system to initiate the capture. It should be understood that the above-mentioned first device and second device are usually different devices located in different regions but can alternatively be a same device.

According to still another aspect of the embodiments, when the first request is a pre-authorization request, after step S41 is executed, to be specific, after the target server acquires the first request, the authorization stage can further include the following steps:

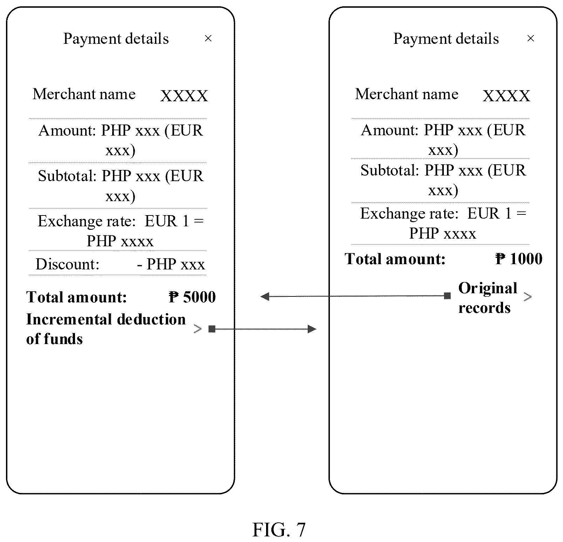

The interchange system receives an incremental authorization request sent by the target server for the first request, where the incremental authorization request includes the transaction ID, an incremental fund share, and the first token. Certainly, the incremental authorization request is also in the above-mentioned first format. Then, the interchange system determines the first account in the first digital wallet corresponding to the first token, and sends an incremental payment request for the second request to the first digital wallet, where the incremental authorization request includes the transaction ID, the first account, and an incremental amount determined based on the incremental fund share. Similarly, the incremental payment request is in a second format that conforms to the API specification of the first digital wallet, and is used to request to call the payment API of the first digital wallet. In this way, the first digital wallet deducts funds of the incremental amount from the first account and transfers the funds of the incremental amount to the service account. It is worthwhile to note that, for descriptions of these steps, references can be made to the descriptions of similar steps in the above-mentioned embodiments, and details are omitted. In addition, incremental authorization implies incremental deduction of funds, and a page including a fund supplement document can be added for display in the digital wallet to inform the user in a friendly way. For this, references can be made to FIG. 7.

The above describes procedure steps executed by a resource transfer system at an authorization stage by using a payment scenario as an example disclosed in embodiments of this specification.

The following describes procedure steps that are further executed at a second stage (request transfer stage) after the authorization is completed. It is worthwhile to note that, in the following embodiments, if not specifically mentioned, no incremental authorization request for the first request exists by default at the authorization stage, and a capture process in which an incremental authorization request exists can be simply deduced.

After a first stage (resource authorization stage) procedure shown in FIG. 3B, the first resource management system can generate a third request packet in the first communication format, and send the third request packet to the interchange system, where a first field in a packet header of the third request packet indicates that the third request packet is used to request resource transfer, and a packet body of the third request packet includes the number ID and a second resource share. It can be understood that the second resource share is a resource share that the first resource management system truly requests to transfer. Therefore, the interchange system transfers resources corresponding to the second resource share to the first resource management system.

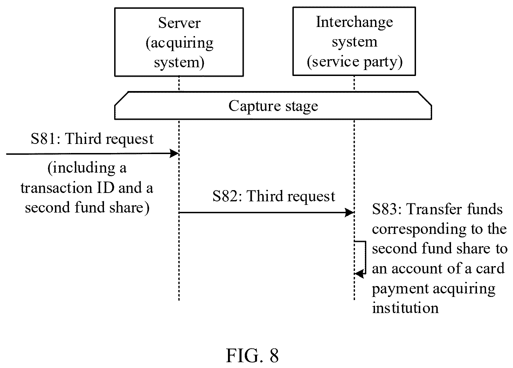

FIG. 8 illustrates procedure steps of a resource transfer link at a second stage in an example scenario of fund transfer, that is, the embodiment of the procedure steps in a payment scenario. As shown in FIG. 8, the second stage, namely, a capture stage, includes the following steps.

Step S81: A target server obtains a third request in a first format, where the third request is used for fund capture, and the third request includes a transaction ID and a second fund share $M_2$.

It can be understood that the third request in the first format is a request packet at a second stage (a capture stage) originally generated by a card payment acquiring system. The first format is, for example, an ISO 8583 packet form. In the first format, it can be indicated, by using an MTI value (for example, a value of 0220), that the request is a capture request, and the second fund share is filled in a specified data bit of a data domain, where the fund share is an actual capture amount corresponding to the transaction ID. The second fund share $M_2$ may or may not be equal to the first fund share $M_1$ requested at an authorization stage; and correspondingly may or may not be equivalent to a first amount $N_1$ of funds already deducted at the authorization stage.

Usually, the third request is generated by a merchant. For example, the merchant can automatically generate capture requests, including the third request, in bulk at a predetermined moment each day for transactions that were marked as complete a previous day. A generation process and way of the third request are the same as those of a conventional card payment system.

Based on this, in this step, the target server can acquire the third request generated by a merchant, and a specific acquisition link is not limited in embodiments of this specification.

Step S82: The target server sends the third request to an interchange system. In this step, the target server can associate the third request with the above-mentioned first request by using the transaction ID in the third request, and then determine that the third request needs to be sent to the interchange system (instead of a card issuer).

Step S83: The interchange system transfers funds corresponding to the second fund share $M_2$ from a service account to a card payment acquiring institution. In one case, the interchange system can directly transfer the funds to an account of the card payment acquiring institution. More typically, in a case that the card payment acquiring system includes an acquiring management institution represented by a card organization, the acquiring management institution cooperates with the interchange system and the acquiring institution to perform clearing and settlement, so as to transfer funds from the interchange system to the acquiring institution. Therefore, the interchange system indirectly transfers the funds to the card payment acquiring institution.

For example, the service account includes the above-mentioned first sub-account and second sub-account. Therefore, in this step, the interchange system can directly or indirectly transfer the second fund share $M_2$ from the first sub-account (refer to FIG. 6) to the account of the acquiring institution. It should be understood that the interchange system transfers the funds corresponding to the second fund share $M_2$ from the service account to the acquiring institution regardless of whether the second fund share $M_2$ is equivalent to the first amount $N_1$ of funds already deducted at the authorization stage.

In one branch, the second fund share $M_2$ is equivalent to the first amount $N_1$ of funds already deducted at the authorization stage. In this case, the interchange system can notify the first digital wallet of payment completion for the transaction ID.

In another branch, the second fund share $M_2$ is not equivalent to the first amount $N_1$ of funds. After step S83 is executed, the interchange system and the first digital wallet need to perform processing such as recovery and refund on funds corresponding to a value difference.

For the above two branches, it is considered that the capture stage is adapted to the authorization stage. To help understanding, the following provides comprehensive descriptions of the authorization stage and the capture stage by refining different branches into different implementation scenarios. For ease of understanding, the following implementation scenarios are described by using an example with reference to a typical case that a card payment acquiring system includes a card organization. For a case that the interchange system directly interconnects with the acquiring institution, a processing procedure can be similar.

Implementation scenario I: Final authorization

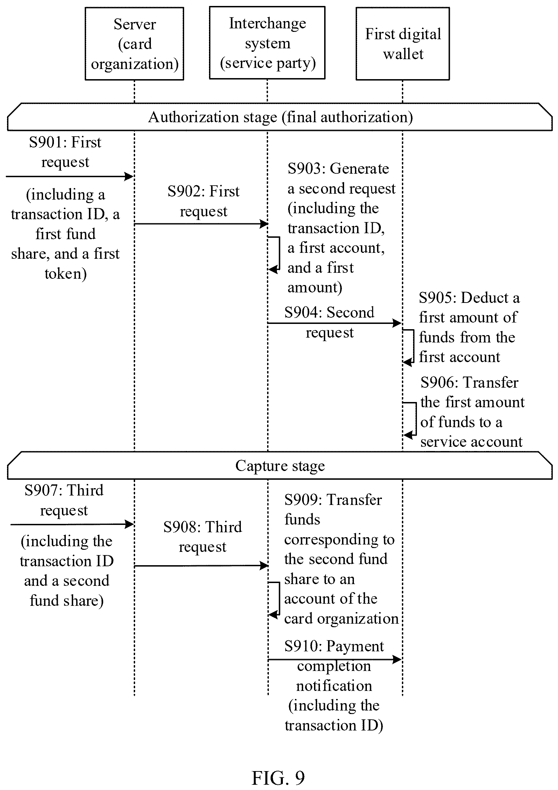

In this implementation scenario, the first request packet from the first resource management system is used to request final authorization. Correspondingly, the first resource share in the first request packet is equal to the second resource share in the third request packet. Specifically, in a payment scenario, the first request is a final Auth, and a capture amount and an authorization amount are the same. Specifically, a transaction link can include the following steps shown in FIG. 9.

Step S901: A server of a card organization obtains a first request in a first format, where the first request is a final authorization request. A data domain of the first request includes a transaction ID of a to-be-paid transaction, a first fund share $M_1$, and a first token. The final authorization request is usually applicable to a transaction in which the price is clear, for example, sale of a physical product. A merchant can indicate, by using an MTI value and an optional processing code value in a sent acquiring request, that a subdivision type of the request is the final authorization request. Therefore, the first request also carries corresponding indication information.

For example, the first fund share $M_1$ is 100 SGD.

Step S902: The server of the card organization sends the first request to an interchange system.

Step S903: The interchange system generates a second request in a second format to call a payment API of a first digital wallet. The second request includes the transaction ID, a first account in the first digital wallet corresponding to the first token, and a first amount $N_1$ directly determined based on the first fund share $M_1$.

For example, a currency supported by the first digital wallet is HKD, and it is assumed that a current exchange rate is SGD:HKD = 1:5. Therefore, the interchange system can determine, based on the above-mentioned exchange rate, that the first fund share $M_1$ of the 100 SGD can be converted into 500 HKD, and use 500 as the first amount $N_1$.

Step S904: The interchange system sends the second request to the first digital wallet.

Step S905: The first digital wallet deducts the first amount $N_1$ of funds from the first account.

For example, the first digital wallet deducts 500 HKD from the first account and transfer the funds to a corporate account of the first digital wallet.

Step S906: The first digital wallet transfers the deducted funds to a service account corresponding to the interchange system.

For example, the first digital wallet transfers 500 HKD from the corporate account of the first digital wallet to a first sub-account in the service account (refer to FIG. 6), and the interchange system is triggered to convert the transferred 500 HKD into 100 SGD by using a first device and transfer the 100 SGD to a second sub-account, so as to wait for the card organization to perform capture.

Step S907: The server of the card organization acquires the third request in the first format, where the MTI value and the optional processing code value can indicate that the third request is used for fund capture, and a data domain of the third request includes the transaction ID and the second fund share $M_2$.

It can be understood that the second fund share $M_2$ actually used for capture in the third request here is equal to the first fund share $M_1$ in the first request because the prior first request is the final authorization request.

For example, the second fund share $M_2$ is 100 SGD.

Step S908: The server of the card organization sends the third request to the interchange system.

Step S909: The interchange system transfers the funds corresponding to the second fund share $M_2$ from the service account to the account of the card organization.

For example, the interchange system transfers 100 SGD from the second sub-account in the service account to the account of the card organization by using a second device.

Step S910: The interchange system sends a payment completion notification to the first digital wallet, where the payment completion notification includes the transaction ID.

It is worthwhile to note that, for the descriptions of the above steps in FIG. 9, references can alternatively be made to related descriptions in other embodiments above.

The above describes the transaction link of the transaction service solution in the final authorization scenario.

Implementation scenario II: Pre-authorization + no user buffer payment in advance

In this implementation scenario, a first request packet from the first resource management system is jointly indicated by a first field (for example, an MTI) in a packet header of the first request packet and a second field (for example, a processing code) in a packet body, and the first request packet is used to request preliminary authorization for a resource. The first amount of resources are equivalent resources of the first resource share, and the second resource share may be greater than, equal to, or less than the first resource share. In a payment scenario, the first request is a pre-authorization request, and the first fund share $M_1$ is equivalent to the first amount $N_1$ of funds. Further, the second fund share $M_2$ may be greater than, equal to, or less than the first fund share $M_1$, as described separately below.

(1) Equal capture: The second fund share $M_2$ is equal to the first fund share $M_1$.

In this case, the second fund share $M_2$ is equal to the first amount $N_1$ of funds. For a related process, references can be made to the descriptions of FIG. 9, and a main difference lies only in that the first request is a pre-authorization request instead of a final authorization request.

(2) Over capture: The second fund share $M_2$ is greater than the first fund share $M_1$.

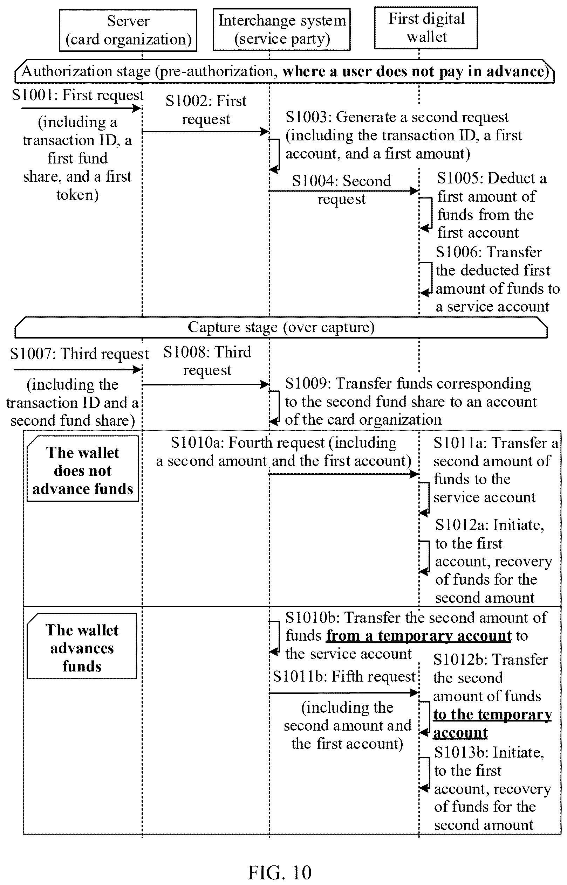

Further, in one embodiment, neither a digital wallet nor a user advances funds, and correspondingly, a transaction link can include the following steps shown in FIG. 10.

Step S1001: A server of a card organization acquires a first request in a first format, where an MTI value and a processing code value can indicate that the first request is a pre-authorization request, and a data domain of the request includes a transaction ID of a to-be-paid transaction, a first fund share $M_1$, and a first token.

For example, the first fund share $M_1$ is 100 SGD.

Step S1002: The server of the card organization sends the first request to an interchange system.

Step S1003: The interchange system generates a second request in a second format to call a payment API of a first digital wallet. The second request includes the transaction ID, a first account in the first digital wallet corresponding to the first token, and a first amount $N_1$ directly determined based on the first fund share $M_1$.

For example, a currency supported by the first digital wallet is HKD, and the first amount $N_1$ is 500 determined based on the first fund share of 100 SGD.

Step S1004: The interchange system sends the second request to the first digital wallet.

Step S1005: The first digital wallet deducts the first amount $N_1$ of funds from the first account.

For example, the first digital wallet deducts 500 HKD from the first account and transfer the funds to a corporate account of the first digital wallet.

Step S1006: The first digital wallet transfers the deducted funds to a service account corresponding to the interchange system.

For example, the first digital wallet transfers 500 HKD from the corporate account of the first digital wallet to a first sub-account in a service account, and the interchange system is triggered to convert the transferred 500 HKD into 100 SGD by using a first device and transfer the 100 SGD to a second sub-account, so as to wait for the card organization to perform capture.

Step S 1007: The server of the card organization acquires a third request in the first format, where an MTI value and an optional processing code value can indicate that the third request is used for fund capture, the third request includes the transaction ID and a second fund share $M_2$, and the second fund share $M_2$ is greater than the first fund share $M_1$.

For example, the second fund share $M_2$ is 103 SGD.

Step S1008: The server of the card organization sends the third request to the interchange system.

Step S1009: The interchange system transfers funds corresponding to the second fund share $M_2$ from the service account to an account of the card organization.

For example, the interchange system transfers 103 SGD from the second sub-account in the service account to the account of the card organization by using the second device.

Step S1010a: The interchange system sends a fourth request to the first digital wallet, where the fourth request indicates the first digital wallet to transfer the second amount $N_2$ of funds to the service account, and the funds are equivalent funds of a differential share between the second fund share $M_2$ and the first fund share $M_1$. The fourth request can be in the second format that conforms to an API specification of the first digital wallet, and is used to call a first interface of the first digital wallet. The first interface is the above-mentioned second-type interface, namely, an auxiliary interface, and is used for notification and interaction other than a basic service operation. In an embodiment, the first interface can be an interface that is only open to an authorized external system. Further, in an example, the first interface can be an interface that is only open to the interchange system.

For example, the second amount $N_2$ of funds are 15 HKD, which are equivalent funds of 3 SGD that are a difference between 103 SGD and 100 SGD.

Step S1011a: The first digital wallet transfers the second amount $N_2$ of funds from the corporate account of the first digital wallet to the service account.

For example, the first digital wallet transfers 15 HKD of funds to the second sub-account in the service account.

Step S1012a: The first digital wallet initiates, to the first account, recovery of funds for the second amount $N_2$.

For example, recovery of 15 HKD is initiated.

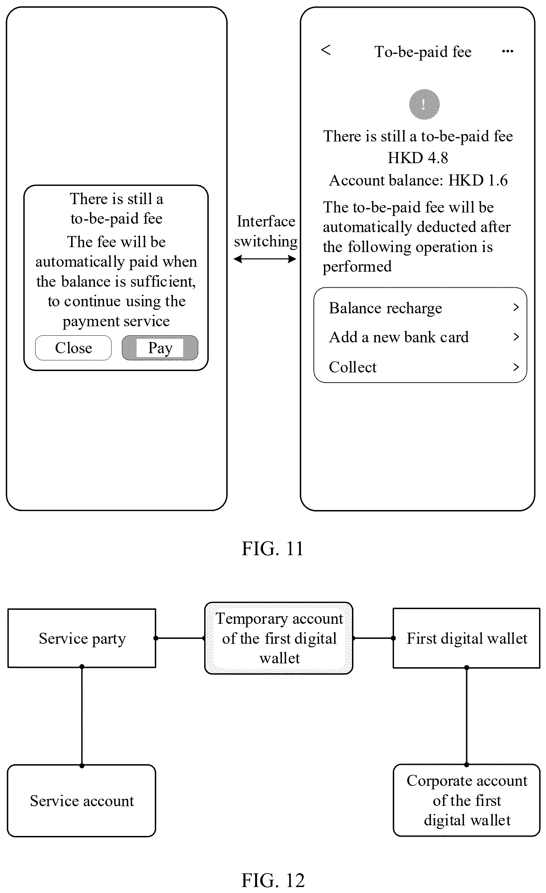

For example, a server of the first digital wallet can push a notification to a client device to which the first account is bound or send a private message reminder, and display a repayment entry on the client device, where for this, references can be made to a terminal interface shown in FIG. 11.

The above describes the transaction link on which over capture is performed and a wallet does not advance funds in the implementation scenario II.

In this implementation scenario, in a case that the second resource share requested by the first resource management system is greater than the first resource share, the interchange system first determines the differential share between the second resource share and the first resource share, generates the fourth request packet in the second communication format, and sends the fourth request packet to the second resource management system, where the fourth request packet is used to call the target API, and a call parameter field of the fourth request packet includes the above-mentioned number ID, the first account, and related data of the differential share. Therefore, the second resource management system receives and parses the fourth request packet, and deducts equivalent resources of the differential share from the first account.

In another embodiment, it is proposed that a digital wallet advances funds, and the interchange system helps the wallet to digest fund supplement logic. In this case, the interchange system needs to inspect use of a wallet advance account, to ensure that the account can advance funds when there is a surplus of funds, and promptly replenish the digital wallet in case of a deficit.

Specifically, as shown in FIG. 12, a service party and a first digital wallet each open a corporate account, where the corporate account of the service party is referred to as the service account in this specification, and the first digital wallet further opens a temporary account at the service party, where the temporary account belongs to the first digital wallet, but the service party has particular management rights over the temporary account, such as monitoring an account balance and performing automatic deduction of funds.

Based on this, a link of the transaction service solution can include the following steps shown in FIG. 10.

Step S1001 to step S1009, where for this, references can be made to the descriptions in the above-mentioned embodiments.

In step S1010b, the interchange system transfers the second amount $N_2$ of funds from the temporary account to the service account. The second amount $N_2$ of funds are equivalent funds of a differential share between the second fund share $M_2$ and the first fund share $M_1$.

For example, the interchange system transfers 15 HKD from the temporary account to the second sub-account in the service account, where 15 HKD are equivalent funds of 3 SGD that are a difference between 103 SGD and 100 SGD.

Step S1011b: The interchange system sends a fifth request to the first digital wallet, where the fifth request indicates the first digital wallet to transfer the second amount $N_2$ of funds to the temporary account. A format of the fifth request is similar to that of the above-mentioned fourth request.

Step S1012b: The first digital wallet transfers the second amount $N_2$ of funds from the corporate account of the first digital wallet to the temporary account.

For example, the first digital wallet transfers 15 HKD to the temporary account.

Step S1013b: The first digital wallet initiates, to the first account, recovery of funds for the second amount $N_2$.

For example, recovery of 15 HKD is initiated.

The above describes the transaction link on which over capture is performed and a wallet advances funds in the implementation scenario II.

(3) Partial capture: The second fund share $M_2$ is less than the first fund share $M_1$.

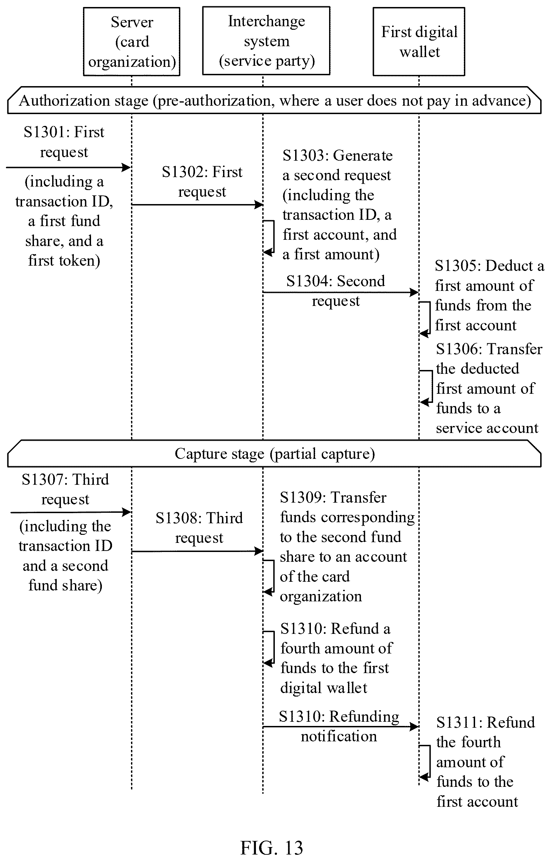

In this case, the transaction link can include the following steps shown in FIG. 13.

Step S1301 to step S1306, where for this, references can be made to the above-mentioned descriptions of step S1001 to step S1006.

Step S1307: The server of the card organization acquires a third request in the first format, where an MTI value and an optional processing code value can indicate that the third request is used for fund capture, the third request includes the transaction ID and a second fund share $M_2$, and the second fund share $M_2$ is less than the first fund share $M_1$.

For example, the second fund share $M_2$ is 98 SGD.

Step S1308: The server of the card organization sends the third request to the interchange system.

Step S1309: The interchange system transfers funds corresponding to the second fund share $M_2$ from the service account to an account of the card organization.

For example, the interchange system transfers 98 SGD from the second sub-account in the service account to the account of the card organization by using the second device.

Step S1310: The interchange system refunds a fourth amount $N_4$ of funds from the service account to the corporate account of the first digital wallet, and notifies the first digital wallet to refund. The fourth amount $N_4$ of funds are a difference between the first amount $N_1$ of funds and equivalent funds of the second fund share $M_2$. A format of the notification can be similar to that of the above-mentioned fourth request.

For example, the fourth amount $N_4$ of funds are 10 HKD, which are a difference between 500 HKD and 490 HKD (equivalent funds of 98 SGD).

Step S1311: The first digital wallet refunds the fourth amount $N_4$ of funds to the first account.

For example, 10 HKD are refunded to a wallet account of a user.

The above describes the transaction link on which partial capture is performed in the implementation scenario II.

The implementation scenario corresponds to a case that the second resource share requested by the first resource management system to transfer is less than the first resource share requested to freeze. In this case, the interchange system transfers a difference between the first amount of resources and equivalent resources of the second resource share (for example, a difference between the first amount of funds and equivalent funds of the second fund share) back to the first account of the second resource management system (for example, the first digital wallet).

Implementation scenario III: Pre-authorization + user buffer payment in advance

In this implementation scenario, a first request packet from the first resource management system is jointly indicated by a first field (for example, an MTI) in a packet header of the first request packet and a second field (for example, a processing code) in a packet body, and the first request packet is used to request preliminary authorization for a resource. In this case, the first amount of resources determined by the interchange system can be greater than the equivalent resources of the first resource share, and the second resource share can be greater than, equal to, or less than the first resource share. In the payment scenario, the first request is a pre-authorization request, and the user buffer payment in advance refers to determining the first amount $N_1$ after adding a fund share that is used as the buffer to the first fund share $M_1$ that is requested for an authorized freeze. This can effectively avoid an advance of funds from a service party or a wallet party and avoid a loss risk of the funds.

For the buffer share described above, in one embodiment, a product of the first fund share $M_1$ and a predetermined percentage (5%) can be calculated as the buffer share, and in another embodiment, the buffer share can be determined based on a predetermined laddering system.

Further, in one embodiment, a first amount $N_1$ obtained by exchanging the first fund share $M_1$ + the buffer share to a second currency can be calculated based on an exchange rate between a first currency and the second currency. In another embodiment, a first amount $N_1$ in a same currency can be directly determined.

In addition, for ease of management, a service account can be provided with a primary account and a temporary account, where the primary account is used to manage a first sub-amount of funds equivalent to the first fund share $M_1$ in the first amount $N_1$ of funds, and the temporary account is used to manage a second sub-amount of funds equal to the buffer share.

In this implementation scenario, a second fund share $M_2$ can also be greater than, equal to, or less than the first fund share $M_1$, as described separately below.

(1) Equal capture: The second fund share $M_2$ is equal to the first fund share $M_1$.

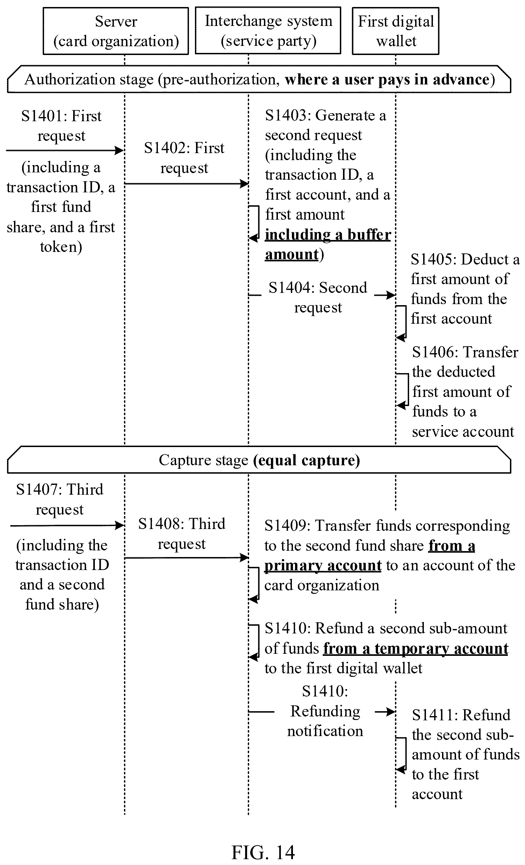

A transaction link in this case can include the following steps shown in FIG. 14.

Step S1401: A server of a card organization acquires a first request in a first format, where an MTI value and a processing code value can indicate that the first request is a pre-authorization request, and a data domain of the first request includes a transaction ID of a to-be-paid transaction, a first fund share $M_1$, and a first token.

For example, the first fund share $M_1$ is 100 SGD.

Step S1402: The server of the card organization sends the first request to an interchange system.

Step S1403: The interchange system generates a second request in a second format to call a payment API of a first digital wallet. The second request includes the transaction ID, a first account in a first digital wallet corresponding to the first token, and a first amount $N_1$ determined after a buffer share is added to the first fund share $M_1$.

For example, it is assumed that the first fund share $M_1$ is 100 SGD, which becomes 105 SGD after adding 5% buffer share thereto. It is further assumed that a currency supported by the first digital wallet is HKD, and in this case, it can be determined that 105 SGD can be exchanged to 525 HKD based on an exchange rate of SGD:HKD = 1:5, where 525 is the first amount $N_1$.

Step S1404: The interchange system sends the second request to the first digital wallet.

Step S1405: The first digital wallet deducts the first amount $N_1$ of funds from the first account.

For example, the first digital wallet deducts 525 HKD from the first account and transfer the 525 HKD to a corporate account of the first digital wallet.

Step S1406: The first digital wallet transfers the deducted funds to a service account corresponding to the interchange system.

For example, the first digital wallet transfers 525 HKD from the corporate account of the first digital wallet to the service account, where a first sub-amount of 500 HKD is transferred to the primary account in the service account, and a second sub-amount of 25 HKD is transferred to the temporary account in the service account.

For example, the first digital wallet transfers 500 HKD to the primary account and transfers 25 HKD to the temporary account.

For example, the first sub-account and the second sub-account in the service account can each be provided with a primary account and a temporary account. In this way, for example, the first digital wallet transfers 500 HKD from the corporate account of the first digital wallet to the primary account in the first sub-account, transfers 25 HKD to the temporary account, and then triggers a first device in the interchange system to convert 500 HKD and 25 HKD into 100 SGD and 5 GD, and correspondingly transfers the funds to the primary account and the temporary account in the second sub-account, so as to wait for the card organization to perform capture.

Step S 1407: The server of the card organization acquires a third request in the first format, where an MTI value and an optional processing code value can indicate that the third request is used for fund capture, the third request includes the transaction ID and a second fund share $M_2$, and the second fund share $M_2$ is equal to the first fund share $M_1$.

For example, the second fund share $M_2$ is 100 SGD.

Step S1408: The server of the card organization sends the third request to the interchange system.

Step S1409: The interchange system transfers the funds corresponding to the second fund share $M_2$ from the primary account in the service account to an account of the card organization.

For example, the interchange system transfers 100 SGD to the account of the card organization by using a primary account in the service account.

In step S1410, the interchange system refunds the second sub-amount of funds from the temporary account in the service account to the corporate account of the first digital wallet, and notifies the first digital wallet to refund.

For example, the interchange system uses the temporary account in the service account to refund 25 HKD to the first digital wallet.

Step S1411: The first digital wallet refunds the second sub-amount of funds to the first account.

For example, the first digital wallet refunds 25 HKD to the first account.

The above describes the transaction link on which equal capture is performed in the implementation scenario III.

The implementation scenario corresponds to a case that the second resource share requested by the first resource management system to transfer is equal to the first resource share requested to freeze, and the first amount of resources are greater than equivalent resources of the first resource share. In this case, the interchange system transfers a difference between the first amount of resources and equivalent resources of the second resource share (for example, a difference between the first amount of funds and equivalent funds of the second fund share) back to the first account of the second resource management system (for example, the first digital wallet).

(2) Over capture: The second fund share $M_2$ is greater than the first fund share $M_1$.

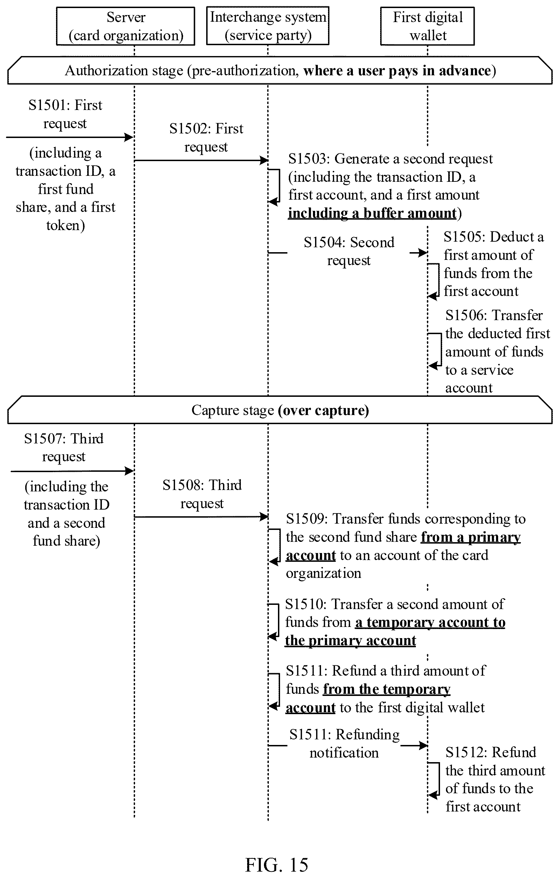

A transaction link in this case can include the following steps shown in FIG. 15.

Step S1501 to step S1506, where for this, references can be made to the descriptions of step S1401 to step S1406 in the above-mentioned embodiments.

Step S1507: The server of the card organization acquires a third request in the first format, where an MTI value and an optional processing code value can indicate that the third request is used for fund capture, the third request includes the transaction ID and a second fund share $M_2$, and the second fund share $M_2$ is greater than the first fund share $M_1$.

For example, the second fund share $M_2$ is 103 SGD.

Step S1508: The server of the card organization sends the third request to the interchange system.

Step S1509: The interchange system transfers the funds corresponding to the second fund share $M_2$ from the primary account in the service account to an account of the card organization.

For example, the interchange system transfers 103 SGD to the account of the card organization by using the primary account.

Step S1510: The interchange system transfers the second amount $N_2$ of funds from the temporary account in the service account to the primary account. The second amount $N_2$ of funds are equivalent funds of a differential share between the second fund share $M_2$ and the first fund share $M_1$.

For example, the interchange system transfers 15 HKD to the primary account by using the temporary account, where 15 HKD are equivalent to a difference of 3 SGD between 103 SGD and 100 SGD.

Step S1511: The interchange system refunds a third amount $N_3$ of funds from the temporary account in the service account to the corporate account of the first digital wallet, and notifies the first digital wallet to refund. The third amount $N_3$ is a difference between the second sub-amount and the second amount $N_2$.

For example, the interchange system refunds 10 KD to the first digital wallet by using the temporary account, where 10 KD are a difference between 25 HKD and 15 HKD.

Step S1512: The first digital wallet refunds the third amount $N_3$ of funds to the first account.

For example, the first digital wallet refunds 10 HKD to the first account.

The above describes the transaction link on which over capture is performed in the implementation scenario III.

The implementation scenario corresponds to a case that the second resource share requested by the first resource management system to transfer is greater than the first resource share requested to freeze, and the first amount of resources are greater than equivalent resources of the first resource share. In this case, the interchange system determines whether the first amount of resources are greater than equivalent resources of the second resource share (for example, the first amount of funds are greater than equivalent funds of the second fund share). If the first amount of resources are greater than the equivalent resources of the second resource share, the interchange system transfers a difference between the first amount of resources and the equivalent resources of the second resource share (for example, a difference between the first amount of funds and the equivalent funds of the second fund share) back to the first account of the second resource management system (for example, the first digital wallet). However, in a case that the first amount of resources are less than the equivalent resources of the second resource share, the interchange system can send a fifth request to the second resource management system (for example, the first digital wallet), where the fifth request is used to request the second resource management system to initiate an incremental transfer operation with an amount of a difference between the equivalent resources of the second resource share and the first amount of resources (for example, initiate recovery of a difference between the equivalent funds of the second fund share and the first amount of funds) to the first account.

(3) Partial capture: The second fund share $M_2$ is less than the first fund share $M_1$.

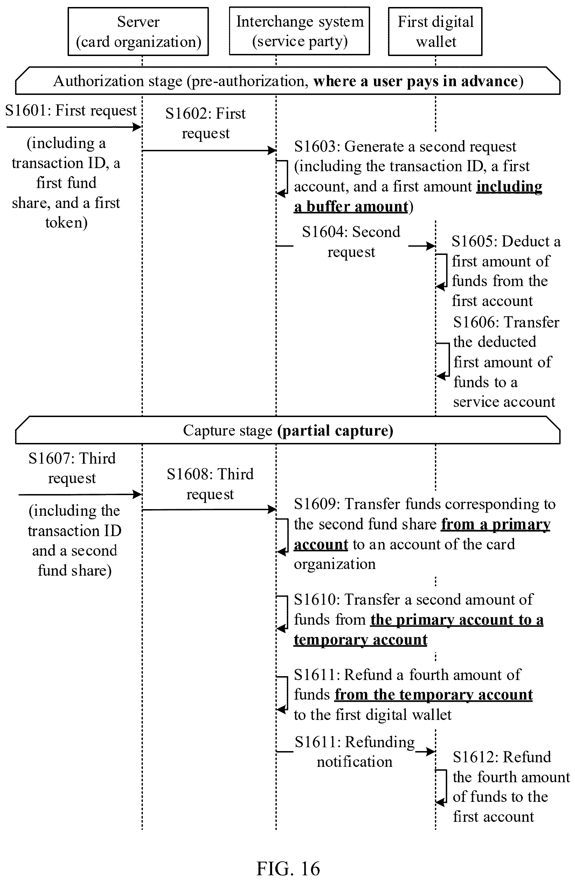

In this case, the transaction link can include the following steps shown in FIG. 16.

Step S1601 to step S1606, where for this, references can be made to the above-mentioned descriptions of step S1401 to step S1406.

Step S 1607: The server of the card organization acquires a third request in the first format, where the third request is used for fund capture, the third request includes the transaction ID and a second fund share $M_2$, and the second fund share $M_2$ is less than the first fund share $M_1$.

For example, the second fund share $M_2$ is 98 SGD.

Step S1608: The server of the card organization sends the third request to the interchange system.

Step S1609: The interchange system transfers the funds corresponding to the second fund share $M_2$ from the primary account in the service account to an account of the card organization.

For example, the interchange system transfers 98 SGD to the account of the card organization by using the primary account.

Step S1610: The interchange system transfers the second amount $N_2$ of funds from the primary account in the service account to the temporary account. The second amount $N_2$ of funds are equivalent funds of a differential share between the second fund share $M_2$ and the first fund share $M_1$.

For example, the interchange system transfers 10 HKD to the temporary account by using the primary account, and 10 HKD are equivalent funds of a difference between the 98 SGD and the 100 SGD.

Step S1611: The interchange system refunds a fourth amount $N_4$ of funds from the temporary account in the service account to the corporate account of the first digital wallet, and notifies the first digital wallet to refund. The fourth amount $N_3$ is a sum of the second sub-amount and the second amount $N_2$, and is also a difference between the first amount $N_1$ of funds and the equivalent funds of the second fund share $M_2$.

For example, the interchange system refunds 35 HKD to the first digital wallet by using the temporary account, where 35 HKD are a sum of 25 HKD (the second sub-amount) and 10 HKD (the second amount).

Step S1612: The first digital wallet refunds the fourth amount $N_4$ of funds to the first account.

For example, the first digital wallet refunds 35 HKD to the first account.

The above describes the transaction link on which partial capture is performed in the implementation scenario III.

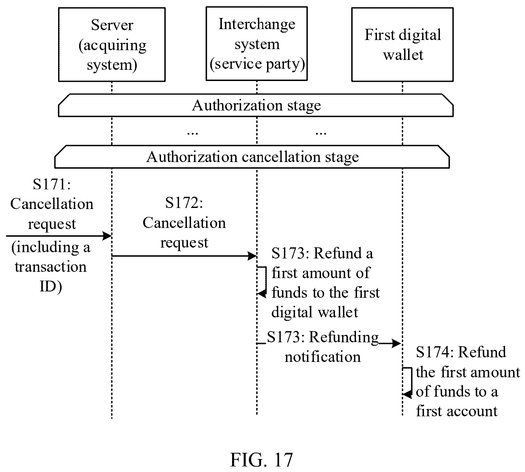

The above describes an overall procedure of the authorization stage and the capture stage with reference to different refined implementation scenarios by using a payment scenario as an example. According to another aspect of the embodiments, after transaction authorization is completed, for the transaction, a capture process may be performed, or authorization may be canceled due to transaction cancellation. As shown in FIG. 17, authorization cancellation includes the following steps.

Step S171: A target server acquires a cancellation request for a first request.

It can be understood that the cancellation request is also in a first format, where a value of an MTI field is, for example, 0420 (representing the cancellation request), and a value of a processing code is, for example, 20 (representing a cancellation transaction), so as to indicate that the request is used to cancel a fund freeze. A data domain of the request includes a transaction ID. For example, the cancellation request can further include a first token and optionally further includes a first fund share $M_1$.

Usually, the first request is generated by a merchant system. For example, the merchant system can generate the cancellation request in response to a cancellation operation of a user on a transaction order corresponding to a transaction ID thereof, or the merchant system can set a transaction order corresponding to a transaction ID to "closed", to trigger to generate the cancellation request.

Based on this, in this step, the target server can acquire the cancellation request generated by the merchant system. A specific link for implementing acquisition is the same as a conventional way, and is not limited in embodiments of this specification.

From the above, the target server can acquire the cancellation request.

Step S172: The target server sends the cancellation request to an interchange system.

Step S173: The interchange system refunds a first amount $N_1$ of funds from a service account to a corporate account of a first digital wallet based on the cancellation request, and sends a refund notification to the first digital wallet. The refund notification can be implemented by calling a refund interface of the first digital wallet.

Step S174: The first digital wallet refunds the first amount $N_1$ of funds to the first account based on the refund notification.

The above provides an example description of procedure steps of canceling authorization after the authorization stage. It should be understood that the procedure steps described above are for full cancellation, and actually partial cancellation can alternatively be performed. In this case, an amount canceled in the cancellation request is a fund share less than the first fund share $M_1$. Specific procedure steps can be simply deduced, and details are omitted. In addition, capture for the transaction ID does not occur after the full cancellation, but capture can still occur after the partial cancellation.

For the refund/refund operation initiated by the merchant, as mentioned above, the digital wallet provides a refund-related service interface. Therefore, for such an operation request, the interchange system only needs to convert a request in a first format in a card payment system into a request in a second format that conforms to an API specification of the first digital wallet, and send the request to the first digital wallet. A specific process is not described in detail.

In conclusion, by using the request conversion solution disclosed in embodiments of this specification, a request that is from the first resource management system and is originally not supported by the second resource management system can be converted into a request that can be supported by the second resource management system, to implement resource transfer between different types of resource management systems. When the request conversion solution is used in a fund management system, two different payment links corresponding to card payment and wallet payment can be integrated. Specifically, a card payment system whose transaction link includes the authorization stage and the capture stage does not need to change an original link flow and request form. A digital wallet whose transaction link includes only the payment stage still needs to perform a basic transfer operation based on an original payment API, and does not need to implement service logic such as amount freezing. A user does not need to apply for a credit card or debit card, and has same experience as using the digital wallet for local payment when using the digital wallet for cross-border payment.

Based on the above-mentioned resource transfer method, this specification further discloses another resource transfer method that can replace the method.

In an implementation A of the alternative method, at an authorization stage, resource transfer may not be executed for a second resource management system, and only a notification is sent. The resource transfer is executed at a second stage. For example, in a payment scenario, deduction of funds is not performed for a user at an authorization stage, the user is only notified that a target transaction needs to be deducted, and then deduction of funds is initiated to the user at a capture stage.

In another implementation B of the alternative method, at an authorization stage, a type of an authorization request can be first determined, and it is determined, based on a determining result, whether resource transfer is executed for a second resource management system at a first stage or a second stage. For example, in a payment scenario, if it is determined that the request is a pre-authorization request, deduction of funds is not performed temporarily. This is because a fund share in the pre-authorization request is generally estimated and is different from a final consumption amount of a user. Then, deduction of funds is initiated to the user at a capture stage. If it is determined that the request is a final authorization request, deduction of funds can be performed on the user, this is because a fund share in the final authorization request is the same as a final consumption amount of the user, and there is no need to initiate deduction of funds to the user at the capture stage.

Specific implementation steps in the above-mentioned two implementations are described in sequence below in combination with embodiments.

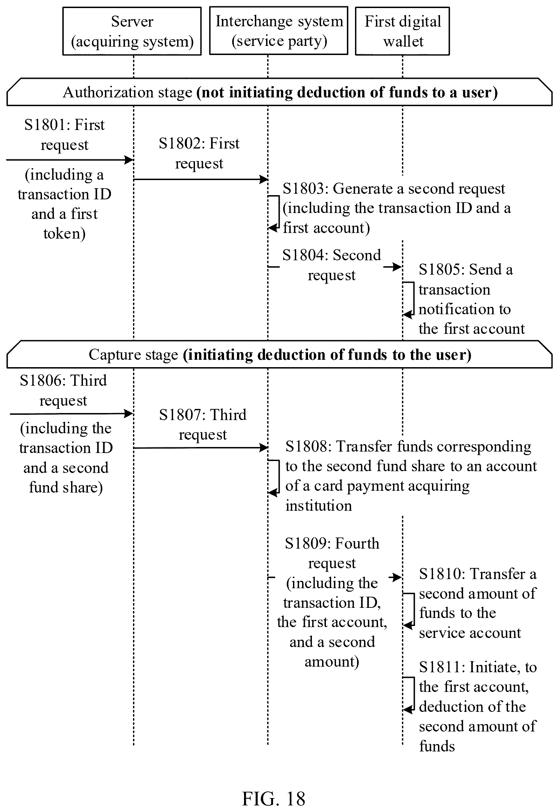

In the implementation A, a transaction link can include the following steps shown in FIG. 18.

Step S1801: A target server acquires a first request in a first format, where the first request is used to request an authorized freeze on a fund, and the first request includes a transaction ID of a to-be-paid transaction and a first token.

It can be understood that the first request can be a pre-authorization request or a final authorization request. For example, the first request can further include a first fund share $M_1$, for example, 100 SGD.

It is worthwhile to note that, for descriptions of this step, references can alternatively be made to the related descriptions of step S41.

Step S1802: The target server sends the first request to an interchange system.

It is worthwhile to note that, for descriptions of this step, references can be made to the related descriptions of step S42, and details are omitted.

Step S1803: The interchange system generates a second request in a second format based on the first request, where the second request includes the transaction ID and a first account in a first digital wallet corresponding to the first token. The second request can call a second interface of the first digital wallet. The second interface is an auxiliary interface, and is used for a notification other than a basic service operation.

In one embodiment, the first request includes a first fund share $M_1$. Further, in a specific embodiment, the second request can include a first amount $N_1$ of equivalent funds determined based on the first fund share $M_1$. For example, a currency supported by the first digital wallet is HKD. In this case, based on an exchange rate of SGD:HKD = 1:5, it can be determined that the first fund share $M_1$ of 100 SGD can be exchanged for 500 HKD, and 500 thereof is used as the first amount $N_1$. In another specific embodiment, the second request can alternatively not include an amount field.

It is worthwhile to note that, for descriptions of this step, references can alternatively be made to the related descriptions of step S43.

Step S1804: The interchange system sends the second request to the first digital wallet.

Step S1805: The first digital wallet sends a transaction notification associated with the transaction ID to the first account based on the second request.

It should be understood that in this step, the transaction notification can be pushed to a wallet client device logged in to the first account, or the transaction notification is pushed to a user holding the first account.

For content of the transaction notification, in an example, the transaction notification can include a merchant name of the transaction, details of a transaction object, etc. In another example, the transaction notification can indicate that deduction of funds for a transaction is pending, specifically, for example, indicating that deduction of a first amount $N_1$ of funds is pending. In still another example, a display interface of the transaction notification can include a confirmation authorization icon for automatic deduction of funds, so that the user can click the icon to authorize the first digital wallet to automatically deduct funds from the first account after the transaction is completed.

From the above, authorization can be completed by executing step S1801 to step S1805. After authorization is completed, there may be a capture stage or an authorization cancellation stage. It is worthwhile to note that, for authorization cancellation, references can be made to the related descriptions in the above-mentioned embodiments. The following mainly describes procedure steps of the capture stage. In addition, in the following descriptions of a capture procedure, there is no incremental authorization for the first request at an authorization stage by default, and a capture procedure in which an incremental authorization request exists can be simply deduced.

Step S1806: The target server acquires a third request in the first format, where an MTI value and an optional operation code value can indicate that the third request is used for fund capture, and a data domain of the third request includes the transaction ID and a second fund share $M_2$.

It should be understood that the second fund share $M_2$ may or may not be equal to the first fund share $M_1$ in the first request. For example, the second fund share $M_2$ is 110 SGD.

It is worthwhile to note that, for descriptions of this step, references can alternatively be made to the related descriptions of step S81.

Step S1807: The target server sends the third request to the interchange system.

Step S1808: The interchange system transfers funds corresponding to the second fund share $M_2$ from a service account to a card payment acquiring institution.

It is worthwhile to note that for descriptions of this step, references can be made to the related descriptions of step S83.

Step S1809: The interchange system sends a sixth request in the second format to the first digital wallet, where the sixth request includes the transaction ID, the first account, and a second amount $N_2$ of equivalent funds determined based on the second fund share $M_2$. The sixth request can request to call a payment API of the first digital wallet.

For example, a currency supported by the first digital wallet is HKD. In this case, based on an exchange rate of SGD:HKD = 1:5, it can be determined that the second fund share $M_2$ of 110 SGD can be exchanged for 550 HKD, and 550 thereof is used as the second amount $N_2$.

Step S1810: The first digital wallet transfers the second amount $N_2$ of funds from a corporate account of the first digital wallet to the service account based on the sixth request.

Step S1811: The first digital wallet initiates, to the first account, deduction of the second amount $N_2$ of funds. It should be understood that this step can be executed before, after, or at the same time as step S1810.

The above describes the transaction link in the implementation A, where the user is only notified of pending deduction of funds at the authorization stage, and then actual deduction of funds is initiated at the capture stage.

The above-mentioned implementation A can be summarized as follows: The second request sent by the interchange system is used to request the second resource management system (for example, the first digital wallet) to send, to the user of the first account, a notification associated with the first request. According to this implementation, the resource transfer method further includes: The interchange system receives the third request from the first resource management system (for example, a card payment acquiring institution), where the third request is used to request a resource transfer operation (for example, fund capture), and includes the number ID (for example, a transaction ID) and the second resource share (for example, a second fund share). The interchange system transfers resources (for example, funds) corresponding to the second resource share to the first resource management system (for example, the card payment acquiring institution). In addition, the interchange system sends the sixth request to the second resource management system (for example, the first digital wallet), where the sixth request includes the number ID, the first account, and the second amount determined based on the second resource share, and is used to request the second resource management system (for example, the first digital wallet) to deduct a second amount of resources (for example, funds) from the first account, and transfer the second amount of resources to the service account corresponding to the interchange system. The second amount of resources are equivalent resources of the second resource share (for example, the second amount of funds are equivalent funds of the second fund share).

In an implementation B, the first request at the authorization stage can be a final authorization request and a pre-authorization request. When the request is the final authorization request, for a transaction link for authorization and capture stages, references can be made to the above-mentioned descriptions of FIG. 9, and details are omitted. When the request is the pre-authorization request, for a transaction link for authorization and capture stages, references can be made to the above-mentioned descriptions of FIG. 18, and details are omitted. The above describes two implementations of the substitute transaction service method.

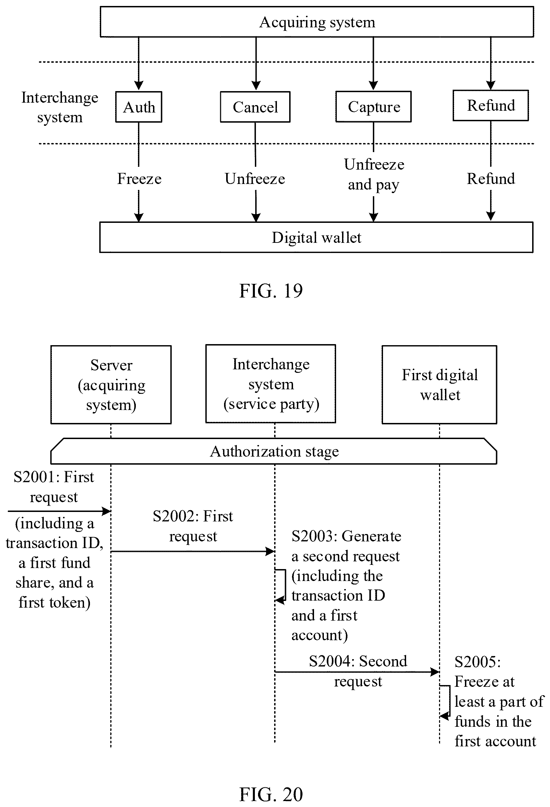

The transaction service method and the substitute method thereof described above are both applicable to a digital wallet whose transaction link has only a payment stage. Actually, there are a handful of digital wallets for which freeze and unfreeze functions similar to Auth and cancel are developed. In other words, open basic service interfaces provided by these digital wallets further include an API used for fund freezing and an API used for unfreezing. For this, in embodiments of this specification, an interchange system can be introduced, and this type of digital wallet is integrated into a system structure of bank card payment through conversion in a form of request. For this, reference can be made to FIG. 3A. In addition, FIG. 19 illustrates that an interchange system interconnects information flows between an acquiring system and a digital wallet to support the above-mentioned requests for authorization/Auth, cancellation/cancel, capture/capture, and refund/refund.

The following describes procedure steps related to processing of different types of requests in FIG. 19. As shown in FIG. 20, an authorization stage includes the following steps.

Step S2001: A target server acquires a first request in a first format, where the first request is used to request an authorized freeze on a fund, and includes a transaction ID of a to-be-paid transaction, a first fund share, and a first token.

It is worthwhile to note that, for descriptions of this step, references can alternatively be made to the above-mentioned related descriptions of step S41, and details are omitted.

Step S2002: The target server sends the first request to an interchange system.

It is worthwhile to note that, for descriptions of this step, references can alternatively be made to the above-mentioned related descriptions of step S42, and details are omitted.

Step S2003: The interchange system generates a second request in a second format based on the first request, where the second format conforms to an API specification of a first digital wallet, and is used to call a third API of the first digital wallet that is used for fund freezing. Specifically, the second request includes the transaction ID and a first account in the first digital wallet corresponding to the first token, and indicates, by calling the third API, the first digital wallet to freeze at least a part of funds in the first account. It should be understood that the at least part of funds means that funds that need to be frozen can be part or all of the funds in the first account.

In an implementation C, the second request further includes a first amount determined based on the first fund share. In one embodiment, the first amount of funds are equivalent funds of the first fund share. In another embodiment, the first amount of funds include equivalent funds of the first fund share and additional buffer funds. It is worthwhile to note that, for the implementation C, references can alternatively be made to the above-mentioned related descriptions of step 43.

In another implementation D, the second request further includes the first fund share in a first currency and a first exchange rate between the first currency and a second currency. That is, the interchange system gives reference exchange rate information to the digital wallet.

Step S2004: The interchange system sends the second request to the first digital wallet.

Step S2005: The first digital wallet freezes the at least part of funds in the first account.

Being adapted to the implementation C, in one embodiment, in embodiments of this specification, the first amount of funds can be directly used as the at least part of funds for freezing. In another embodiment, additional funds can be added based on the first amount of funds as the at least part of funds for freezing.

Being adapted to the implementation D, in one embodiment, the digital wallet can calculate equivalent funds of the first fund share in the second currency based on the first exchange rate, and can further add a buffer amount based on the equivalent funds as the at least part of funds for freezing. It should be understood that, because the exchange rate is volatile and there are cases of over capture after pre-authorization, the additional buffer amount is frozen so that an advance of funds of the wallet caused by fluctuations in the exchange rate and over capture after pre-authorization can be avoided, thereby further avoiding an additional fund recovery process and fund loss of the wallet due to the advance of funds.

Usually, a plurality of payment channel accounts, such as a wallet balance account, a wallet credit borrowing account, and a bank card, are bound to the first account (wallet account), and a user can be required to specify, as soon as the user opens credit payment at a wallet side, funds of which sub-account are frozen, or the first digital wallet can restrict to freezing only funds in the wallet balance account. This is not limited in embodiments of this specification.

From the above, a freeze of the funds in the first account can be realized. It can be understood that the user cannot use the frozen funds, including payment, transfer, etc. In addition, when there are insufficient funds in the first account, the first digital wallet can indicate to a user holding the first account that the authorization freeze fails.

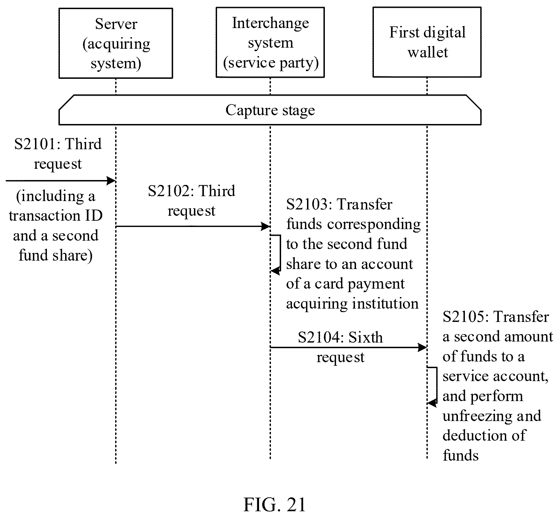

The above describes process steps related to processing an authorization request in a dual information flow interfacing solution. After the authorized freeze on the funds is completed, a capture request initiated for the frozen funds can be processed at a capture stage. As shown in FIG. 21, the capture stage includes the following steps.

Step S2101: A target server acquires a third request in a first format, where an MTI value and an optional operation code value can indicate that the third request is used for fund capture, and the third request includes a transaction ID and a second fund share.

It is worthwhile to note that, for descriptions of this step, references can be made to the above-mentioned descriptions of step S81, and details are omitted.

Step S2102: The target server sends the third request to an interchange system.

Step S2103: The interchange system transfers funds corresponding to the second fund share from an account of a service party to which the interchange system belongs to a card payment acquiring institution.

It is worthwhile to note that, for descriptions of this step, references can be made to the above-mentioned descriptions of step S83, and details are omitted.

Step S2104: The interchange system sends a seventh request in a second format to a first digital wallet. The seventh request can call a fourth interface in the first digital wallet, and the fourth interface further indicates an unfreezing operation based on a conventional payment API function.

In an implementation E, the seventh request includes a second amount, and the second amount of funds are equivalent funds of the second fund share.

In another implementation F, the seventh request includes the second fund share in a first currency and a second exchange rate between the first currency and a second currency.

Step S2105: The first digital wallet transfers the second amount of funds to a service account in response to the seventh request, and deducts the second amount of funds from at least a part of the funds in a first account after unfreezing the at least part of the funds.

Being adapted to the implementation E, in this step, the first digital wallet can directly extract the second amount from the seventh request, and implement corresponding transfer and deduction of funds.

Being adapted to the implementation F, in this step, the first digital wallet can calculate the second amount in the second currency based on a second exchange rate and the second fund share, and then implement operations of transfer and deduction of funds.

The above describes unfreezing and deduction of funds in a frozen wallet account at the capture stage.

In conclusion, in a case that the second resource management system also supports a two-stage resource transfer operation, the second request sent by the interchange system at the first stage can indicate the second resource management system (for example, the first digital wallet) to freeze at least a part of the resources (for example, at least a part of funds) of the first account.

In an embodiment, the first request from the first resource management system further includes a first resource share (for example, a first fund share), and the second request sent by the interchange system further includes a first amount determined based on the first resource share and is used to request the second resource management system (for example, the first digital wallet) to freeze resources (for example, funds) that are of the first account and whose amount is not less than the first amount.

Further, after the interchange system sends the second request to the second resource management system, the interchange system can receive the third request from the first resource management system (for example, the card payment acquiring institution), where the third request is used to request a resource transfer operation (for example, fund capture), and includes the number ID (for example, the transaction ID) and the second resource share (for example, the second fund share). The interchange system can transfer resources (for example, funds) corresponding to the second resource share to the first resource management system (for example, the card payment acquiring institution). In addition, the interchange system sends the seventh request to the second resource management system (for example, the first digital wallet). The seventh request includes the number ID (for example, the transaction ID), the first account, and the second amount determined based on the second resource share, and is used to request the second resource management system (for example, the first digital wallet) to unfreeze the first account, deduct the second amount of resources (for example, funds) from the first account, and transfer the second amount of resources to the service account corresponding to the interchange system. The second amount of resources are equivalent resources of the second resource share (for example, the second amount of funds are equivalent funds of the second fund share).

There can alternatively be an authorization cancellation stage after the authorization stage. Specifically, the authorization cancellation stage can include the following steps: First, the interchange system receives a cancellation request for the first request from the target server, where the cancellation request includes the transaction ID. Then, the interchange system sends an eighth request to the first digital wallet to indicate the first digital wallet to unfreeze the funds of the first account.

In the above-mentioned descriptions of the transaction link, the authorization stage and the capture stage are mainly described. It is worthwhile to note that, at the authorization stage and the capture stage, the order between the transfer of funds from the interchange system to the acquiring system and the refund/recovery to the wallet is not limited in embodiments of this specification. The interchange system can be configured to first transfer funds to the acquiring system and then refund/recover funds to the wallet, or can be configured to first refund/recover funds to the wallet and then transfer funds to the acquiring system, or can be configured to execute the two operations at the same time. Neither an order in which these operations are described in this specification and the claims nor step numbering of these operations in the accompanying drawings should be construed as limiting an order in which these operations are executed.

In actual application, after a resource transfer operation is completed, a resource management system may query an existing resource transfer operation, so as to apply for resource return. Different types of resource management systems also have different processing logic for resource return applying.

The payment scenario is used as an example. After capture is completed (which is not limited to the capture procedures shown in FIG. 8 and FIG. 16), a chargeback/chargeback may occur. As a consumer protection mechanism, the chargeback allows a customer to initiate a dispute over completed payment and request a refund of paid funds. Different from a refund usually initiated by a merchant, the chargeback is usually initiated by the customer. For example, the customer may initiate the chargeback because of existence of fraud, an unauthorized transaction, or dissatisfaction with a service or product provided by the merchant. In a current card payment acquiring system, after the customer initiates the chargeback, a card issuer determines whether the chargeback is reasonable, and if it is determined that the chargeback is reasonable, the card issuer notifies an acquiring institution, and the acquiring institution eventually notifies the merchant of the information. During this period, according to a rule, the acquiring institution deducts funds from an account of the merchant for the disputed transaction, and the card issuer temporarily refunds the funds for the disputed transaction to an account of the customer.

After receiving chargeback information, the merchant can decide whether to accept the chargeback or contest the chargeback. The procedure ends if the merchant accepts the chargeback. If the merchant decides to make a contest, the merchant needs to gather corresponding evidence (including, for example, communication with the customer, a bill, evidence of product shipment, and customer payment history) and submit the evidence to the card issuer through the acquiring institution. The acquiring institution temporarily refunds funds to the account of the merchant in response to the contest made by the merchant.

Finally, the card issuer decides, based on the evidence provided by the merchant and other information, whether to authorize the chargeback of the customer. If the chargeback is approved, the customer can keep the previously temporarily refunded funds, and the funds temporarily refunded to the account of the merchant are deducted again; if the chargeback is not approved, the merchant can keep the previously temporarily refunded funds, and the funds temporarily refunded to the account of the customer are deducted again. In a rare case that there is a dispute of the acquiring institution or the card issuer as to whether the chargeback should be approved, the dispute can be escalated to a card organization for arbitration. In addition, in addition to the customer, the card issuer may actively initiate a chargeback for a suspicious transaction.

Currently, most digital wallets do not provide the above-mentioned payment chargeback function, or even if there is a similar function of initiating a dispute over completed payment, a procedure is different from the above-mentioned payment chargeback function in card payment. Therefore, it is proposed to continue to introduce an interchange system for interconnection and integration, so that a customer who uses the digital wallet for payment can also enjoy protection of the payment chargeback function. As described in detail below, the interchange system plays a similar role as the card issuer in the payment chargeback procedure.

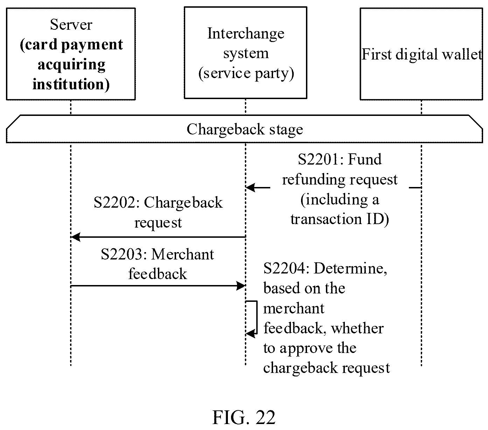

FIG. 22 illustrates a transaction link at a chargeback stage based on the system architecture shown in FIG. 3A, according to an embodiment of this specification. As shown in FIG. 22, the transaction link at the chargeback stage includes the following procedure steps.

Step S2201: A first digital wallet sends a fund refunding request to an interchange system, where the fund refunding request includes a transaction ID.

It is worthwhile to note that, for a transaction corresponding to the transaction ID in the above-mentioned fund refunding request, a service account of the interchange system has transferred a second fund share $M_2$ to a card payment acquiring institution, and has deducted equivalent funds of the second fund share $M_2$ from a corporate account of the first digital wallet. In addition, for content included in this paragraph, references can be made to the related descriptions of the authorization and capture stages in the above-mentioned embodiments, but are not limited thereto.

An initiator of the fund refunding request can be a user or the first digital wallet. Specifically, in an implementation case A, the user can initiate the fund refunding request through the first digital wallet, mainly for misrepresentation of goods, non-recognition of related payment, etc. After receiving the fund refunding request of the user, the first digital wallet can independently determine whether the request is reasonable before submitting the request to the interchange system, or can select to directly submit all fund refunding requests to the interchange system without any determining. In another implementation case B, the first digital wallet can alternatively actively initiate a fund refunding request for a suspicious transaction.

In addition, for the above-mentioned two implementation cases, the first digital wallet can submit a fund refunding request by calling different interfaces (or background websites) provided by the interchange system. In the above-mentioned implementation case A, the first digital wallet submits the fund refunding request by calling a first system interface provided by the interchange system, and an initiator identifier field transmitted to the first system interface during submission is a first account, where the first account is a wallet account of a user corresponding to the transaction ID.

In the above-mentioned implementation case B, the first digital wallet can submit the fund refunding request by calling a second system interface provided by the interchange system, and an initiator identifier field transmitted to the second system interface during submission is an identifier of the first digital wallet.

For example, the fund refunding request can further include an applied amount, which is part of paid funds for the transaction ID, for a refund that is applied, and/or some evidence materials, such as a photograph, a video, and a document.

The above describes content, the initiator, and an initiation way of the fund refunding request.

Step S2202: The interchange system submits a chargeback request to the card payment acquiring institution based on the fund refunding request. For example, the interchange system submits a chargeback request to a card organization, so that the card organization forwards the chargeback request to the card payment acquiring institution.

It is worthwhile to note that the interchange system can parse the fund refunding request, and then generate, by using parsed content, the chargeback request that conforms to a data specification of the card payment acquiring institution. In an example, the chargeback request is in the above-mentioned first format, for example, the ISO 8583 packet, where an MTI field can be set to 0420, and a processing code can be set to 40.

Step S2203: The card payment acquiring institution sends, to the interchange system, a merchant feedback for the chargeback request.

It is worthwhile to note that interaction and processing between a card payment acquiring institution side and a merchant side are not limited in embodiments of this specification. In an example, references can be made to the above-mentioned descriptions of the chargeback process.

It can be understood that, the merchant feedback can include merchant acceptance of the chargeback or the merchant contesting/defending against the chargeback request.

Step S2204: The interchange system determines, based on the merchant feedback, whether to approve the chargeback request.

In an implementation case, the merchant feedback includes that the merchant accepts the chargeback, and the interchange system can directly determine to approve the chargeback request accordingly.

In another implementation case, the merchant feedback includes a contest request submitted by the merchant, and the interchange system can determine, based on related evidence information included in the contest request, whether to approve the chargeback of the customer. It is worthwhile to note that determining whether to approve the chargeback request in such an implementation case can be realized by using a trained machine learning model or a predetermined determining rule, and is not limited.

The above describes a basic processing process of the fund refunding request. In conclusion, after a resource transfer operation has been completed, the interchange system may receive a resource returning request (for example, a fund refunding request) from the second resource management system (for example, the first digital wallet), where the resource returning request is used for a completed resource transfer operation (for example, a paid transaction) and a request to return a transferred resource (for example, a paid fund), and includes a number ID of the executed resource transfer operation (for example, a transaction ID of the paid transaction). The interchange system can send, based on the resource returning request, a transfer rejection request (for example, the chargeback request) related to the executed resource transfer operation to the first resource management system (for example, the card payment acquiring institution).

Further, in an embodiment, after the interchange system sends the transfer rejection request related to the executed resource transfer operation to the first resource management system, the interchange system can receive a feedback from the first resource management system (for example, the card payment acquiring institution) for the transfer rejection request. In a case that the feedback includes a defense request for the transfer rejection request, the interchange system determines, based on information included in the defense request, whether to approve the transfer rejection request.

In addition, a plurality of compensation policies are provided for compensation related to the fund refunding request in embodiments of this specification. In one compensation policy, the card payment acquiring institution deducts funds of a disputed transaction from an account of the merchant after receiving a chargeback request and transfers the funds to a service account. In this case, a service party can temporarily refund the funds for the disputed transaction to an account of an initiator before receiving the merchant feedback sent by the card payment acquiring institution for the chargeback request, or a service party can refund the funds to an initiator when determining, based on the merchant feedback, to approve the chargeback request.

In another compensation policy, a service party can compensate, after the user initiates a chargeback, the user in advance by advancing funds.

In still another compensation policy, a service party does not provide an advance, but the digital wallet compensates the user in advance by advancing funds.

To facilitate understanding, next, more detailed descriptions of a link of a chargeback procedure in a typical implementation scenario are provided in combination with the above-mentioned different compensation policies, and two types of initiators, namely, the user and the digital wallet. A chargeback initiator in implementation scenario 1 to an implementation scenario 3 is the user, and a chargeback initiator in implementation scenario 4 is the first digital wallet.

Implementation scenario 1: The service party compensates in advance before receiving a feedback + the user initiates a chargeback

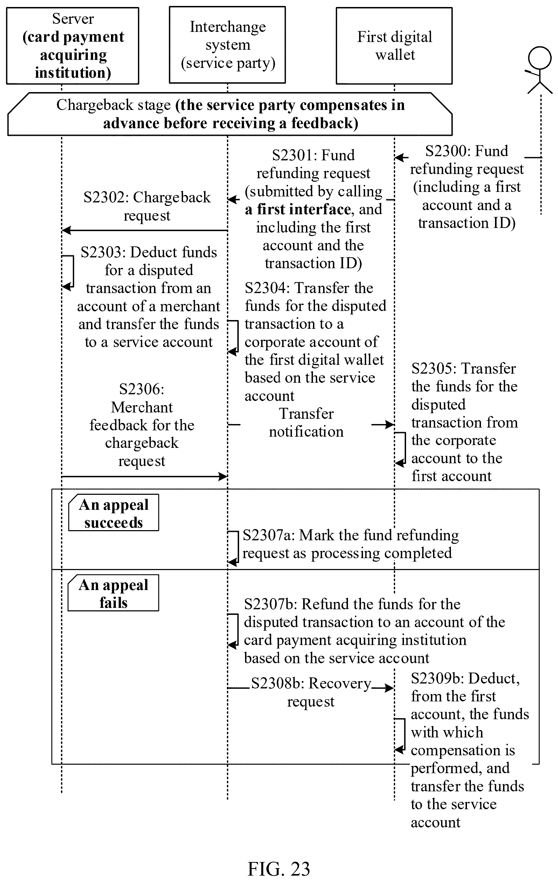

In this implementation scenario, after receiving the resource returning request from the second resource management system (for example, the first digital wallet), the interchange system transfers a resource that is applied to be returned from the service account corresponding to the interchange system to an initiator of the resource returning request (for example, acquires a fund from the service account and compensates to an initiator of the fund refunding request). A link of a chargeback procedure in this implementation scenario can include the following steps shown in FIG. 23.

Step S2300: A first digital wallet receives a fund refunding request, further including a transaction ID, initiated by a user based on a first account thereof.

Step S2301: The first digital wallet submits the fund refunding request by calling a first system interface provided by an interchange system, where the fund refunding request includes the transaction ID and a first account.

Step S2302: The interchange system submits a chargeback request to a card payment acquiring institution based on the fund refunding request.

Step S2303: The card payment acquiring institution deducts funds for a disputed transaction from an account of a merchant based on the chargeback request and transfers the funds to a service account.

Step S2304: The interchange system transfers funds for a disputed transaction to a corporate account of the first digital wallet based on the service account.

It is worthwhile to note that this step can be executed before or after the service account receives the funds transferred from the card payment acquiring institution. In an embodiment, after receiving the funds for the disputed transaction transferred by the card payment acquiring institution, the interchange system can immediately transfer the funds to the corporate account of the first digital wallet.

In another embodiment, the interchange system can transfer the funds for the disputed transaction from the service account to the corporate account of the first digital wallet within a predetermined period of time (for example, within 20 days) after submitting the chargeback request without receiving a merchant feedback returned by the card payment acquiring institution.

In still another embodiment, after determining, based on the fund refunding request, that a chargeback initiated by the user is reasonable, the interchange system can immediately transfer the funds for the disputed transaction to the corporate account of the first digital wallet based on the service account.

Step S2305: The first digital wallet transfers the funds for the disputed transaction from the corporate account of the first digital wallet to the first account.

Step S2306: The card payment acquiring institution sends, to the interchange system, a merchant feedback for the chargeback request.

Step S2307a: The interchange system marks the fund refunding request as processing completed when determining, based on the merchant feedback, to approve the chargeback request or that a complaint of the user is successful.

In an implementation case, the interchange system directly determines to approve the chargeback request based on acceptance of the merchant to the chargeback included in the merchant feedback. In another implementation case, the interchange system determines to approve the chargeback request based on a defense request included in the merchant feedback.

For example, the interchange system can further send a notification of compensation success to the first digital wallet.

Step S2307b: The interchange system returns the funds for the disputed transaction to an account of the card payment acquiring institution based on the service account when determining, based on the merchant feedback, not to approve the chargeback request or that the user fails to file a complaint.

Specifically, the interchange system determines, based on the defense request included in the merchant feedback, not to approve the chargeback request, so as to trigger fund refunding to the card payment institution.

Step S2308b: The interchange system sends a recovery request for compensated funds to the first digital wallet.

Step S2309b: The first digital wallet deducts the compensated funds from the first account based on the recovery request, and transfers the funds to the service account.

It should be understood that, by executing steps S2308b and S2309b, the interchange system subsequently recovers funds to the first account, but may not actually recover funds. This can be designed as required, and details are omitted.

The above describes the chargeback procedure in the implementation scenario 1. In this procedure, when the user initiates a chargeback, the service party compensates, before receiving the merchant feedback, the user in advance with the funds deducted from the account of the merchant by the card payment acquiring institution.

Implementation scenario 2: The service party does not compensate in advance + the wallet does not advance funds for compensation + the user initiates a chargeback

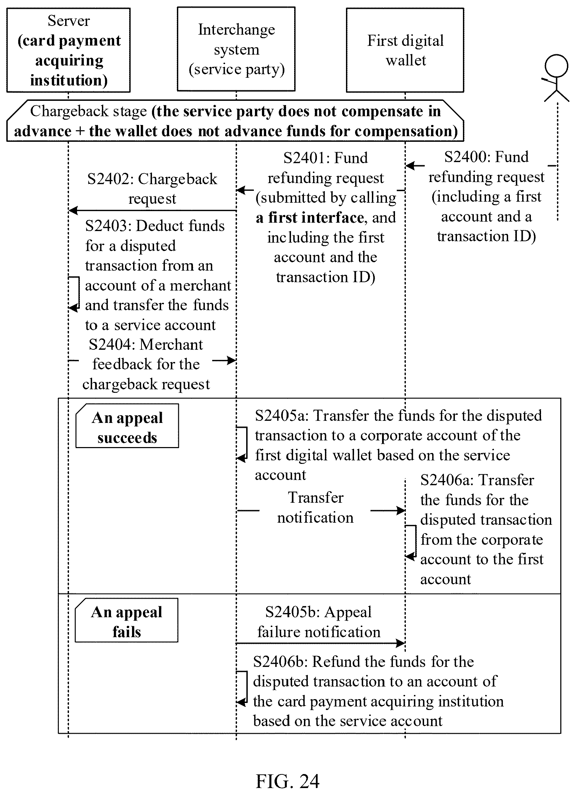

In this implementation scenario, after the interchange system sends the transfer rejection request related to the executed resource transfer operation to the first resource management system, the interchange system receives resources (for example, refunded funds) transferred back from the first resource management system (for example, the card payment acquiring institution) in response to the transfer rejection request, and then transfers the resources to the initiator of the resource returning request (for example, compensates the funds to the initiator of the fund refunding request). A link of a chargeback procedure in this implementation scenario can include the following steps shown in FIG. 24.

Step S2400: A first digital wallet receives a fund refunding request, further including a transaction ID, initiated by a user based on a first account thereof.

Step S2401: The first digital wallet submits the fund refunding request by calling a first system interface provided by an interchange system, where the fund refunding request includes the transaction ID and a first account.

Step S2402: The interchange system submits a chargeback request to a card payment acquiring institution based on the fund refunding request. Step S2403: The card payment acquiring institution deducts funds for a disputed transaction from an account of a merchant based on the chargeback request, and transfers the funds to a service account. Step S2404: The card payment acquiring institution sends, to the interchange system, a merchant feedback for the chargeback request.

Step S2405a: The interchange system transfers the funds for the disputed transaction to a corporate account of the first digital wallet when determining, based on the merchant feedback, to approve the chargeback request.

Step S2406a: The first digital wallet transfers the funds for the disputed transaction from the corporate account to the first account.

Step S2405b: The interchange system sends a notification of a complaint failure to the first digital wallet when determining, based on the merchant feedback, not to approve the chargeback request.

Step S2406b: The interchange system refunds the funds for the disputed transaction from the service account to an account of the card payment acquiring institution.

The above describes the chargeback procedure in the implementation scenario 2. In this procedure, when the user initiates a chargeback, the service party compensates, after determining, based on the merchant feedback, to approve the chargeback request, the user with the funds deducted from the account of the merchant by the card payment acquiring institution.

Implementation scenario 3: The wallet advances funds for compensation + the user initiates a chargeback

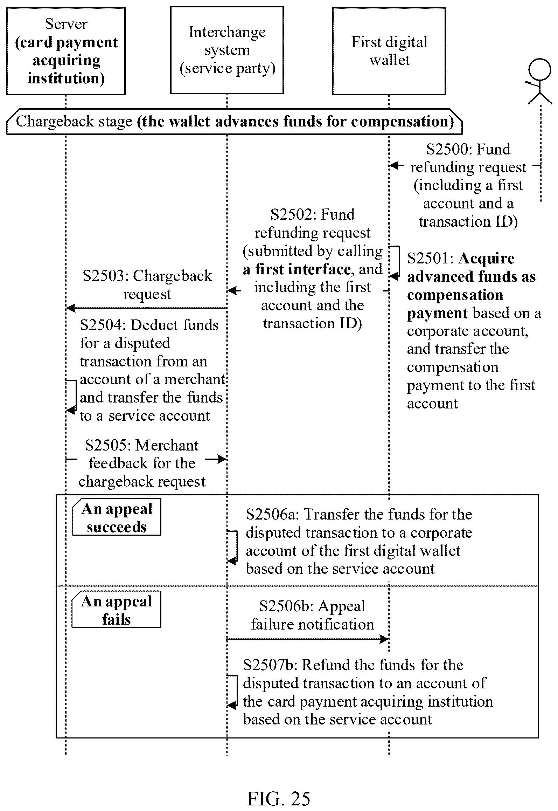

It can be understood that the service party does not compensate in advance before obtaining a feedback. A link of a specific chargeback procedure can include the following steps shown in FIG. 25.

Step S2500: A first digital wallet receives a fund refunding request, further including a transaction ID, initiated by a user based on a first account thereof.

Step S2501: The first digital wallet acquires advanced funds as compensation payment based on a corporate account of the first digital wallet, and transfers the compensation payment to a first account.

In one embodiment, the first digital wallet can compensate the user in advance when determining that the fund refunding request initiated by the user is reasonable or when accepting a related appeal of the user; otherwise, does not perform compensation. When compensation is not performed, subsequent steps may continue to be executed, or the subsequent steps may not be executed, but an appeal failure notification can be sent to the first account.

In another embodiment, the first digital wallet can alternatively not determine whether the fund refunding request is reasonable, but directly perform compensation in advance.

Step S2502: The first digital wallet submits the fund refunding request by calling a first system interface provided by an interchange system, where the fund refunding request includes the transaction ID and the first account.

Step S2503: The interchange system submits a chargeback request to a card payment acquiring institution based on the fund refunding request.

Step S2504: The card payment acquiring institution deducts funds for a disputed transaction from an account of a merchant based on the chargeback request and transfers the funds to a service account.

Step S2505: The card payment acquiring institution sends, to the interchange system, a merchant feedback for the chargeback request.

Step S2506a: The interchange system transfers the funds for the disputed transaction to a corporate account of the first digital wallet when determining, based on the merchant feedback, to approve the chargeback request.

For example, the interchange system can further send a notification of compensation success to the first digital wallet.

Step S2506b: The interchange system sends a notification of a complaint failure to the first digital wallet when determining, based on the merchant feedback, not to approve the chargeback request.

It should be understood that the first digital wallet already advances compensation funds, whether to recover the compensation funds from the first account can be designed as needed, and details are omitted.

Step S2507b: The interchange system refunds the funds for the disputed transaction from the service account to an account of the card payment acquiring institution.

The above describes the chargeback procedure in the implementation scenario 3. In this procedure, when the user initiates a chargeback, a wallet party compensates, before receiving a processing result from the card payment acquiring institution, the user in advance by advancing funds.

Implementation scenario 4: The service party does not compensate in advance before receiving a feedback + the wallet initiates a chargeback

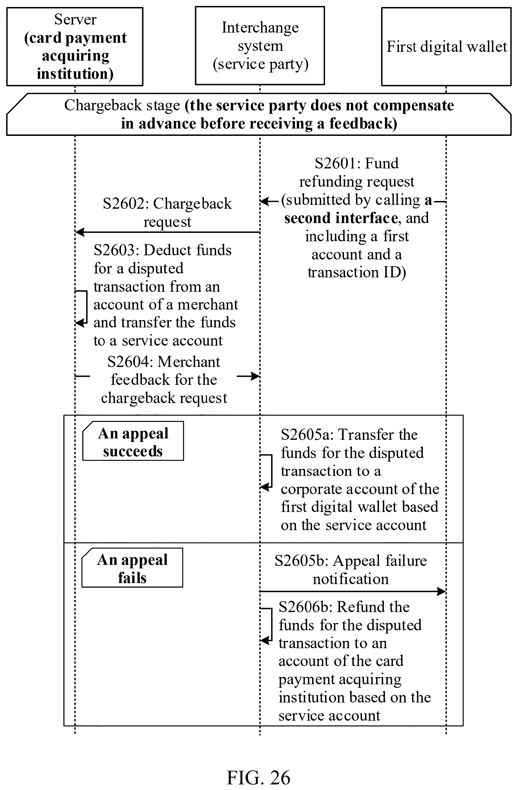

In this implementation scenario, after determining to approve the transfer rejection request (for example, the chargeback request), the interchange system transfers resources (for example, refunded funds) transferred back from the first resource management system (for example, the card payment acquiring institution) to the initiator of the resource returning request (for example, compensates to the initiator of the fund refunding request) in response to the transfer rejection request. A link of a chargeback procedure in this implementation scenario can include the following steps shown in FIG. 26.

Step S2601: A first digital wallet initiates a fund refunding request by calling a second system interface provided by an interchange system, where the fund refunding request includes a transaction ID and a chargeback amount.

Step S2602: The interchange system submits a chargeback request to a card payment acquiring institution based on the fund refunding request.

Step S2603: The card payment acquiring institution deducts funds for a disputed transaction from an account of a merchant based on the chargeback request and transfers the funds to a service account.

Step S2604: The card payment acquiring institution sends, to the interchange system, a merchant feedback for the chargeback request.

Step S2605a: The interchange system transfers the funds for the disputed transaction to a corporate account of the first digital wallet when determining, based on the merchant feedback, to approve the chargeback request.

For example, the interchange system further marks the fund refunding request as processing completed, and sends a notification of compensation success to the first digital wallet.

Step S2605b: The interchange system sends a notification of a complaint failure to the first digital wallet when determining, based on the merchant feedback, not to approve the chargeback request.

Step S2606b: The interchange system refunds the funds for the disputed transaction from the service account to an account of the card payment acquiring institution.

The above describes the chargeback procedure in the implementation scenario 4. In this procedure, when the digital wallet initiates the chargeback, the interchange system provides compensation funds to the digital wallet only after determining that the complaint is successful based on the merchant feedback.

For a case that the digital wallet initiates the chargeback, the interchange system can also first compensate the digital wallet in a way in the implementation scenario 1. This processing way can be designed as needed with reference to the above-mentioned implementation scenarios, and details are omitted.

The above describes an overall procedure of the chargeback stage with reference to different refined implementation scenarios.

As described above, in an embodiment, this specification provides a method for performing request conversion between a card payment acquiring institution and a digital wallet. The method is executed by a processing system, and includes: receiving a first request from the card payment acquiring institution, where the first request is used to request an authorized freeze on a fund, and includes a transaction ID of a to-be-paid transaction and a first token; determining a first account in a first digital wallet corresponding to the first token; and sending a second request to the first digital wallet, where the second request includes the transaction ID and the first account.

Optionally, in the above-mentioned method, the determining a first account in a first digital wallet corresponding to the first token includes: querying a pre-stored mapping relationship between a digital wallet account and a token to obtain the first digital wallet and the first account.

Optionally, in the above-mentioned method, the first request further includes a first fund share. The second request further includes a first amount determined based on the first fund share, and is used to request the first digital wallet to deduct the first amount of funds from the first account and transfer the funds to a service account corresponding to the processing system.

Optionally, after the sending a second request to the first digital wallet, the method further includes: receiving a third request from the card payment acquiring institution, where the third request is used for fund capture, and includes the transaction ID and a second fund share; and transferring funds corresponding to the second fund share to the card payment acquiring institution.

Optionally, in the above-mentioned method, the first request is a final authorization request. The first amount of funds are equivalent funds of the first fund share. The second fund share is equal to the first fund share.

Optionally, in the above-mentioned method, the first request is a pre-authorization request. The first amount of funds are equivalent funds of the first fund share. The second fund share is greater than the first fund share. The method further includes: sending a fourth request to the first digital wallet, where the fourth request is used to request the first digital wallet to initiate, to the first account, recovery of equivalent funds whose amount is a differential share between the second fund share and the first fund share.

Optionally, in the above-mentioned method, the first request is a pre-authorization request. The first amount of funds are greater than equivalent funds of the first fund share. The second fund share is equal to the first fund share. The method further includes: refunding a difference between the first amount of funds and the equivalent funds of the second fund share to the first account of the first digital wallet.

Optionally, in the above-mentioned method, the first request is a pre-authorization request. The first amount of funds are greater than equivalent funds of the first fund share. The second fund share is greater than the first fund share. The method further includes: refunding a difference between the first amount of funds and the equivalent funds of the second fund share to the first account of the first digital wallet in a case that the first amount of funds are greater than equivalent funds of the second fund share; and sending a fifth request to the first digital wallet in a case that the first amount of funds are less than equivalent funds of the second fund share, where the fifth request is used to request the first digital wallet to initiate, to the first account, recovery of a difference between the equivalent funds of the second fund share and the first amount of funds.

Optionally, in the above-mentioned method, the first request is a pre-authorization request. The second fund share is less than the first fund share. The method further includes: refunding the difference between the first amount of funds and the equivalent funds of the second fund share to the first account of the first digital wallet.

Optionally, the method further includes: receiving a cancellation request for the first request from the card payment acquiring institution; and refunding the first amount of funds to the first account of the first digital wallet.

Optionally, the method further includes: receiving an incremental authorization request for the first request from the card payment acquiring institution, where the incremental authorization request includes the transaction ID, an incremental fund share, and the first token; determining the first account in the first digital wallet corresponding to the first token; and sending an incremental payment request to the first digital wallet, where the incremental payment request includes the transaction ID, the first account, and an incremental amount determined based on the incremental fund share, and is used to request the first digital wallet to deduct the incremental amount of funds from the first account, and transfer the incremental amount of funds to the service account.

Optionally, in the above-mentioned method, the first fund share is an amount in a first currency, and the first amount is an amount in a second currency.

Optionally, in the above-mentioned method, the second request is used to request the first digital wallet to send, to a user of the first account, a notification associated with the first request. The method further includes: receiving a third request from the card payment acquiring institution, where the third request is used for fund capture, and includes the transaction ID and the second fund share; transferring the funds corresponding to the second fund share to the card payment acquiring institution; and sending a sixth request to the first digital wallet, where the sixth request includes the transaction ID, the first account, and a second amount determined based on the second fund share, and is used to request the first digital wallet to deduct the second amount of funds from the first account, and transfer the second amount of funds to the service account corresponding to the processing system, where the second amount of funds are equivalent funds of the second fund share.

Optionally, in the above-mentioned method, the second request is used to indicate the first digital wallet to freeze at least a part of funds of the first account.

Optionally, in the above-mentioned method, the first request further includes the first fund share. The second request further includes a first amount determined based on the first fund share and is used to request the first digital wallet to freeze funds that are of the first account and whose amount is not less than the first amount.

Optionally, the method further includes: receiving a third request from the card payment acquiring institution, where the third request is used for fund capture, and includes the transaction ID and the second fund share; transferring the funds corresponding to the second fund share to the card payment acquiring institution; and sending a seventh request to the first digital wallet, where the seventh request includes the transaction ID, the first account, and a second amount determined based on the second fund share, and is used to request the first digital wallet to unfreeze the first account, deduct the second amount of funds from the first account, and transfer the second amount of funds to the service account corresponding to the processing system, where the second amount of funds are equivalent funds of the second fund share.

Optionally, the method further includes: receiving a cancellation request for the first request from the card payment acquiring institution; and sending an eighth request to the first digital wallet, where the eighth request is used to request the first digital wallet to unfreeze the first account.

Optionally, the method further includes: receiving a fund refunding request from the first digital wallet, where the fund refunding request is used to apply for a return of paid funds for a paid transaction, and includes a transaction ID of the paid transaction; and sending, based on the fund refunding request, a chargeback request related to the paid transaction to the card payment acquiring institution.

Optionally, after the sending a chargeback request related to the paid transaction to the card payment acquiring institution, the method further includes: receiving a feedback from the card payment acquiring institution for the chargeback request; and when the feedback includes a defense request for the chargeback request, determining, based on information included in the defense request, whether to approve the chargeback request.

Optionally, after the receiving a fund refunding request from the first digital wallet, the method further includes: acquiring funds from the service account corresponding to the processing system, and compensating the funds to an initiator of the fund refunding request.

Optionally, after the sending a chargeback request related to the paid transaction to the card payment acquiring institution, the method further includes: receiving funds refunded by the card payment acquiring institution in response to the chargeback request, and compensating the funds to an initiator of the fund refunding request.

Optionally, the method further includes: after determining not to approve the chargeback request, sending a ninth request to the first digital wallet, where the ninth request is used to request the first digital wallet to deduct the compensated funds from an account of the initiator of the fund refunding request, and transfer the compensated funds to the service account corresponding to the processing system.

Optionally, the method further includes: After determining to approve the chargeback request, compensating the funds refunded from the card payment acquiring institution in response to the chargeback request to the initiator of the fund refunding request.

Optionally, in the above-mentioned method, the initiator of the fund refunding request includes the first digital wallet or a user of the first digital wallet.

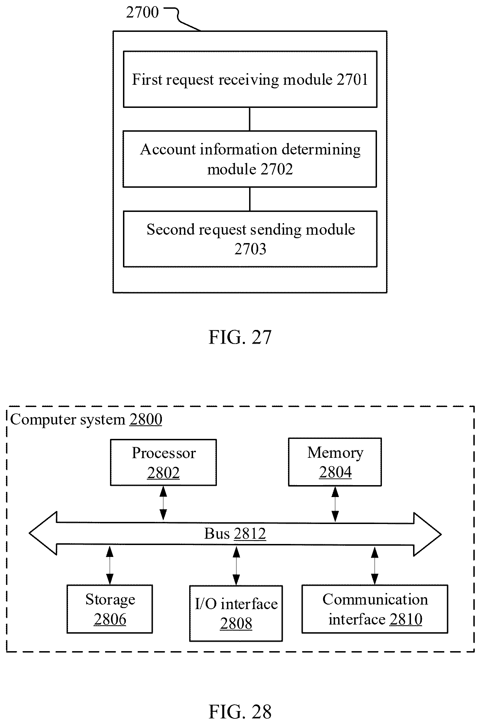

Corresponding to the above-mentioned transaction service method, embodiments of this specification further discloses a request conversion apparatus that is integrated into an interchange system. As shown in FIG. 27, the request conversion apparatus 2700 includes the following functional modules:

a first request receiving module 2701, configured to receive a first request from a first resource management system (for example, a card payment acquiring institution), where the first request is used to request an authorized freeze on a resource (for example, a fund), and includes a number ID a to-be-executed resource transfer operation (for example, a transaction ID of a to-be-paid transaction) and a first token; an account information determining module 2702, configured to determine a first account in a second resource management system (for example, a first digital wallet) corresponding to the first token; and a second request sending module 2703, configured to send a second request to the second resource management system (for example, the first digital wallet), where the second request includes the number ID and the first account.

In one embodiment, the account information determining module 2702 is specifically configured to determine the first account in the first digital wallet corresponding to the first token, including querying a pre-stored mapping relationship between a digital wallet account and a token to obtain the first digital wallet and the first account.

In an embodiment, the first request further includes a first fund share. The second request further includes a first amount determined based on the first fund share, and is used to request the first digital wallet to deduct the first amount of funds from the first account, and transfer the first amount of funds to a service account corresponding to the interchange system.

Further, in a specific embodiment, the request conversion apparatus 2700 further includes: a third request receiving module, configured to: receive a third request from the card payment acquiring institution, where the third request is used for fund capture, and includes the transaction ID and a second fund share; and transfer funds corresponding to the second fund share to the card payment acquiring institution.

Further, in one example, the first request is a final authorization request, the first amount of funds are equivalent funds of the first fund share, and the second fund share is equal to the first fund share.

In another example, the first request is a pre-authorization request, the first amount of funds are equivalent funds of the first fund share, and the second fund share is greater than the first fund share. The request conversion apparatus 2700 further includes: a fourth request sending module, configured to send a fourth request to the first digital wallet, where the fourth request is used to request the first digital wallet to initiate, to the first account, recovery of equivalent funds whose amount is a differential share between the second fund share and the first fund share.

In still another example, the first request is a pre-authorization request, the first amount of funds are greater than equivalent funds of the first fund share, and the second fund share is equal to the first fund share. The request conversion apparatus 2700 further includes: a fund refunding module, configured to refund the difference between the first amount of funds and the equivalent funds of the second fund share to the first account of the first digital wallet.

In yet another example, the first request is a pre-authorization request, the first amount of funds are greater than equivalent funds of the first fund share, and the second fund share is greater than the first fund share. The request conversion apparatus 2700 further includes: a fund refunding module, configured to refund a difference between the first amount of funds and the equivalent funds of the second fund share to the first account of the first digital wallet in a case that the first amount of funds are greater than equivalent funds of the second fund share; and a fifth request sending module, configured to send a fifth request to the first digital wallet in a case that the first amount of funds are less than equivalent funds of the second fund share, where the fifth request is used to request the first digital wallet to initiate, to the first account, recovery of a difference between the equivalent funds of the second fund share and the first amount of funds.

In still another example, the first request is a pre-authorization request, the second fund share is less than the first fund share, and the request conversion apparatus 2700 further includes a fund refunding module configured to refund a difference between the first amount of funds and the equivalent funds of the second fund share to the first account of the first digital wallet.

In another specific embodiment, the request conversion apparatus 2700 further includes: a cancellation request receiving module, configured to receive a cancellation request for the first request from the card payment acquiring institution; and a fund refunding module, configured to refund the first amount of funds to the first account of the first digital wallet.

In still another specific embodiment, the request conversion apparatus 2700 further includes an incremental authorization request processing module, configured to: receive an incremental authorization request for the first request from the card payment acquiring institution, where the incremental authorization request includes the transaction ID, an incremental fund share, and the first token; determine the first account in the first digital wallet corresponding to the first token; and send an incremental payment request to the first digital wallet, where the incremental payment request includes the transaction ID, the first account, and an incremental amount determined based on the incremental fund share, and is used to request the first digital wallet to deduct the incremental amount of funds from the first account, and transfer the incremental amount of funds to the service account.

In yet another specific embodiment, the first fund share is an amount in a first currency, and the first amount is an amount in a second currency.

In one embodiment, the second request is used to request the first digital wallet to send, to a user of the first account, a notification associated with the first request. The request conversion apparatus 2700 further includes: a third request receiving module, configured to receive a third request from the card payment acquiring institution, where the third request is used for fund capture, and includes the transaction ID and the second fund share; a fund transfer module, configured to transfer the funds corresponding to the second fund share to the card payment acquiring institution; and a sixth request sending module, configured to send a sixth request to the first digital wallet, where the sixth request includes the transaction ID, the first account, and a second amount determined based on the second fund share, and is used to request the first digital wallet to deduct the second amount of funds from the first account, and transfer the second amount of funds to the service account corresponding to the interchange system, where the second amount of funds are equivalent funds of the second fund share.

In one embodiment, the second request is used to indicate the first digital wallet to freeze at least a part of funds of the first account.

Further, in a specific embodiment, the first request further includes a first fund share, and the second request further includes a first amount determined based on the first fund share, and is used to request the first digital wallet to freeze funds that are of the first account and whose amount is not less than the first amount.

In another specific embodiment, the request conversion apparatus 2700 further includes: a third request receiving module, configured to receive a third request from the card payment acquiring institution, where the third request is used for fund capture, and includes the transaction ID and the second fund share; a fund transfer module, configured to transfer the funds corresponding to the second fund share to the card payment acquiring institution; and a seventh request sending module, configured to send a seventh request to the first digital wallet, where the seventh request includes the transaction ID, the first account, and a second amount determined based on the second fund share, and is used to request the first digital wallet to unfreeze the first account, deduct the second amount of funds from the first account, and transfer the second amount of funds to the service account corresponding to the interchange system, where the second amount of funds are equivalent funds of the second fund share.

In still another specific embodiment, the request conversion apparatus 2700 further includes: a cancellation request receiving module, configured to receive a cancellation request for the first request from the card payment acquiring institution; and an eighth request sending module, configured to send an eighth request to the first digital wallet, where the eighth request is used to request the first digital wallet to unfreeze the first account.

In an embodiment, the request conversion apparatus 2700 further includes: a refunding request receiving module, configured to receive a fund refunding request from the first digital wallet, where the fund refunding request is used to apply for a return of paid funds for a paid transaction, and includes a transaction ID of the paid transaction; and a chargeback request sending module, configured to send, based on the fund refunding request, a chargeback request related to the paid transaction to the card payment acquiring institution.

Further, in a specific embodiment, the request conversion apparatus 2700 further includes: a feedback receiving module, configured to receive a feedback from the card payment acquiring institution for the chargeback request; and a defense processing module, configured to: when the feedback includes a defense request for the chargeback request, determine, based on information included in the defense request, whether to approve the chargeback request.

Still further, in an example, the request conversion apparatus 2700 further includes a compensation module, configured to acquire funds from the service account corresponding to the interchange system and compensate the funds to the initiator of the fund refunding request.

In another example, the request conversion apparatus 2700 further includes a compensation module, configured to: receive the funds refunded from the card payment acquiring institution in response to the chargeback request, and compensate the funds to the initiator of the fund refunding request.

In a specific example, the request conversion apparatus 2700 further includes: a ninth request sending module, configured to send a ninth request to the first digital wallet after determining not to approve the chargeback request, where the ninth request is used to request the first digital wallet to deduct the compensated funds from an account of the initiator of the fund refunding request, and transfer the compensated funds to the service account corresponding to the interchange system.

In another specific embodiment, the request conversion apparatus 2700 further includes a compensation module, configured to: after determining to approve the chargeback request, compensate the funds refunded from the card payment acquiring institution in response to the chargeback request to the initiator of the fund refunding request.

In one embodiment, the initiator of the fund refunding request includes the first digital wallet or a user of the first digital wallet.

In an embodiment, this specification provides an apparatus for performing request conversion between a card payment acquiring institution and a digital wallet. The apparatus is integrated into a processing system, and the apparatus includes: a first request receiving module, configured to receive a first request from the card payment acquiring institution, where the first request is used to request an authorized freeze on a fund, and includes a transaction ID of a to-be-paid transaction and a first token; an account information determining module, configured to determine a first account in a first digital wallet corresponding to the first token; and a second request sending module, configured to send a second request to the first digital wallet, where the second request includes the transaction ID and the first account.

The specification also provides a computer-readable non-transitory storage medium, where the storage medium stores a computer program, which, when executed by a processor, can be used to perform one or more steps of one or more methods described or illustrated herein or provides functionality described or illustrated herein. Herein, the computer-readable non-transitory storage medium or media may include one or more semiconductor-based or other integrated circuits (ICs) (such, as for example, field-programmable gate arrays (FPGAs) or application-specific ICs (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, or any suitable combination of two or more of these, where appropriate. A computer-readable non-transitory storage medium may be volatile, non-volatile, or a combination of volatile and non-volatile, where appropriate.

The specification also provides a computer system. FIG. 28 illustrates an example computer system 2800. In particular embodiments, one or more computer systems 2800 perform one or more steps of one or more methods described or illustrated herein. In particular embodiments, one or more computer systems 2800 provide functionality described or illustrated herein. In particular embodiments, software running on one or more computer systems 2800 performs one or more steps of one or more methods described or illustrated herein or provides functionality described or illustrated herein. Particular embodiments include one or more portions of one or more computer systems 2800. Herein, reference to a computer system may encompass a computing device, and vice versa, where appropriate. Moreover, reference to a computer system may encompass one or more computer systems, where appropriate.

This disclosure contemplates any suitable number of computer systems 2800. This disclosure contemplates computer system 2800 taking any suitable physical form. As example and not by way of limitation, computer system 2800 may be an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a server, a tablet computer system, or a combination of two or more of these. Where appropriate, computer system 2800 may include one or more computer systems 2800; be unitary or distributed; span multiple locations; span multiple machines; span multiple data centers; or reside in a cloud, which may include one or more cloud components in one or more networks. Where appropriate, one or more computer systems 2800 may perform without substantial spatial or temporal limitation one or more steps of one or more methods described or illustrated herein. As an example and not by way of limitation, one or more computer systems 2800 may perform in real time or in batch mode one or more steps of one or more methods described or illustrated herein. One or more computer systems 2800 may perform at different times or at different locations one or more steps of one or more methods described or illustrated herein, where appropriate.

In particular embodiments, computer system 2800 includes a processor 2802, memory 2804, storage 2806, an input/output (I/O) interface 2808, a communication interface 2810, and a bus 2812. Although this disclosure describes and illustrates a particular computer system having a particular number of particular components in a particular arrangement, this disclosure contemplates any suitable computer system having any suitable number of any suitable components in any suitable arrangement.

In particular embodiments, processor 2802 includes hardware for executing instructions, such as those making up a computer program. As an example and not by way of limitation, to execute instructions, processor 2802 may retrieve (or fetch) the instructions from an internal register, an internal cache, memory 2804, or storage 2806; decode and execute them; and then write one or more results to an internal register, an internal cache, memory 2804, or storage 2806. In particular embodiments, processor 2802 may include one or more internal caches for data, instructions, or addresses. This disclosure contemplates processor 2802 including any suitable number of any suitable internal caches, where appropriate. As an example and not by way of limitation, processor 2802 may include one or more instruction caches, one or more data caches, and one or more translation lookaside buffers (TLB s). Instructions in the instruction caches may be copies of instructions in memory 2804 or storage 2806, and the instruction caches may speed up retrieval of those instructions by processor 2802. Data in the data caches may be copies of data of 100 in memory 2804 or storage 2806 for instructions executing at processor 2802 to operate on; the results of previous instructions executed at processor 2802 for access by subsequent instructions executing at processor 2802 or for writing to memory 2804 or storage 2806; or other suitable data. The data caches may speed up read or write operations by processor 2802. The TLBs may speed up virtual-address translation for processor 2802. In particular embodiments, processor 2802 may include one or more internal registers for data, instructions, or addresses. This disclosure contemplates processor 2802 including any suitable number of any suitable internal registers, where appropriate. Where appropriate, processor 2802 may include one or more arithmetic logic units (ALUs); be a multi-core processor; or include one or more processors 2802. Although this disclosure describes and illustrates a particular processor, this disclosure contemplates any suitable processor.

In particular embodiments, memory 2804 includes main memory for storing instructions for processor 2802 to execute or data for processor 2802 to operate on. As an example and not by way of limitation, computer system 2800 may load instructions from storage 2806 or another source (such as, for example, another computer system 2800) to memory 2804. Processor 2802 may then load the instructions from memory 2804 to an internal register or internal cache. To execute the instructions, processor 2802 may retrieve the instructions from the internal register or internal cache and decode them. During or after implementation of the instructions, processor 2802 may write one or more results (which may be intermediate or final results) to the internal register or internal cache. Processor 2802 may then write one or more of those results to memory 2804. In particular embodiments, processor 2802 executes only instructions in one or more internal registers or internal caches or in memory 2804 (as opposed to storage 2806 or elsewhere) and operates only on data in one or more internal registers or internal caches or in memory 2804 (as opposed to storage 2806 or elsewhere). One or more memory buses (which may each include an address bus and a data bus) may couple processor 2802 to memory 2804. Bus 2812 may include one or more memory buses, as described below. In particular embodiments, one or more memory management units (MMUs) reside between processor 2802 and memory 2804 and facilitate accesses to memory 2804 requested by processor 2802. In particular embodiments, memory 2804 includes random access memory (RAM). This RAM may be volatile memory, where appropriate. Where appropriate, this RAM may be dynamic RAM (DRAM) or static RAM (SRAM). Moreover, where appropriate, this RAM may be single-ported or multi-ported RAM. This disclosure contemplates any suitable RAM. Memory 2804 may include one or more memories 2804, where appropriate. Although this disclosure describes and illustrates particular memory, this disclosure contemplates any suitable memory.

In particular embodiments, storage 2806 includes mass storage for data or instructions. As an example and not by way of limitation, storage 2806 may include a hard disk drive (HDD), a floppy disk drive, flash memory, an optical disc, a magneto-optical disc, magnetic tape, or a Universal Serial Bus (USB) drive or a combination of two or more of these. Storage 2806 may include removable or non-removable (or fixed) media, where appropriate. Storage 2806 may be internal or external to computer system 2800, where appropriate. In particular embodiments, storage 2806 is non-volatile, solid-state memory. In particular embodiments, storage 2806 includes read-only memory (ROM). Where appropriate, this ROM may be mask-programmed ROM, programmable ROM (PROM), erasable PROM (EPROM), electrically erasable PROM (EEPROM), electrically alterable ROM (EAROM), or flash memory or a combination of two or more of these. This disclosure contemplates mass storage 2806 taking any suitable physical form. Storage 2806 may include one or more storage control units facilitating communication between processor 2802 and storage 2806, where appropriate. Where appropriate, storage 2806 may include one or more storages 2806. Although this disclosure describes and illustrates particular storage, this disclosure contemplates any suitable storage.

In particular embodiments, I/O interface 2808 includes hardware, software, or both, providing one or more interfaces for communication between computer system 2800 and one or more I/O devices. Computer system 2800 may include one or more of these I/O devices, where appropriate. One or more of these I/O devices may enable communication between a person and computer system 2800. As an example and not by way of limitation, an I/O device may include a keyboard, keypad, microphone, monitor, mouse, printer, scanner, speaker, still camera, stylus, tablet, touch screen, trackball, video camera, another suitable I/O device or a combination of two or more of these. An I/O device may include one or more sensors. This disclosure contemplates any suitable I/O devices and any suitable I/O interfaces 2808 for them. Where appropriate, I/O interface 2808 may include one or more device or software drivers enabling processor 2802 to drive one or more of these I/O devices. I/O interface 2808 may include one or more I/O interfaces 2808, where appropriate. Although this disclosure describes and illustrates a particular I/O interface, this disclosure contemplates any suitable I/O interface.

In particular embodiments, communication interface 2810 includes hardware, software, or both providing one or more interfaces for communication (such as, for example, packet-based communication) between computer system 2800 and one or more other computer systems 2800 or one or more networks. As an example and not by way of limitation, communication interface 2810 may include a network interface controller (NIC) or network adapter for communicating with an Ethernet or other wire-based network or a wireless NIC (WNIC) or wireless adapter for communicating with a wireless network, such as a WI-FI network. This disclosure contemplates any suitable network and any suitable communication interface 2810 for it. As an example and not by way of limitation, computer system 2800 may communicate with an ad hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, computer system 2800 may communicate with a wireless PAN (WPAN) (such as, for example, a BLUETOOTH WPAN), a WI-FI network, a WI-MAX network, a cellular telephone network (such as, for example, a Global System for Mobile Communications (GSM) network), or other suitable wireless network or a combination of two or more of these. Computer system 2800 may include any suitable communication interface 2810 for any of these networks, where appropriate. Communication interface 2810 may include one or more communication interfaces 2810, where appropriate. Although this disclosure describes and illustrates a particular communication interface, this disclosure contemplates any suitable communication interface.

In particular embodiments, bus 2812 includes hardware, software, or both coupling components of computer system 2800 to each other. As an example and not by way of limitation, bus 2812 may include an Accelerated Graphics Port (AGP) or other graphics bus, an Enhanced Industry Standard Architecture (EISA) bus, a frontside bus (FSB), a HYPERTRANSPORT (HT) interconnect, an Industry Standard Architecture (ISA) bus, an INFINIBAND interconnect, a low-pin-count (LPC) bus, a memory bus, a Micro Channel Architecture (MCA) bus, a Peripheral Component Interconnect (PCI) bus, a PCI-Express (PCIe) bus, a serial advanced technology attachment (SATA) bus, a Video Electronics Standards Association local (VLB) bus, or another suitable bus or a combination of two or more of these. Bus 2812 may include one or more buses 2812, where appropriate. Although this disclosure describes and illustrates a particular bus, this disclosure contemplates any suitable bus or interconnect.

In an embodiment, this specification provides a computer system, including a memory, a processor, and a computer program that is stored in the memory and that can be run on the processor. The processor executes the following step: receiving a first request from a card payment acquiring institution, where the first request is used to request an authorized freeze on a fund, and includes a transaction ID of a to-be-paid transaction and a first token; determining a first account in a first digital wallet corresponding to the first token; and sending a second request to the first digital wallet, where the second request includes the transaction ID and the first account.

In an embodiment, this specification provides a computer-readable non-volatile storage medium. The storage medium stores a computer program, and when the computer program is executed by a processor, the method in the above-mentioned embodiments is implemented.

A person skilled in the art should be aware that in the one or more examples, functions described in this specification can be implemented by using hardware, software, firmware, or any combination thereof. When the functions are implemented by using software, the functions can be stored in a computer-readable medium or transmitted as one or more instructions or code in the computer-readable medium.

The above-mentioned specific implementations further describe objectives, technical solutions, and beneficial effects of this specification. It should be understood that the above-mentioned descriptions are merely specific implementations of this specification and are not intended to limit the protection scope of this specification. Any modification, equivalent replacement, or improvement made on the basis of the technical solutions of this specification shall fall within the protection scope of this specification.

## EXAMPLES

1. A resource transfer system, comprising a first resource management system, an interchange system, and a second resource management system, wherein the first resource management system is a first-type resource management system that supports a first resource interchange way, the second resource management system is a second-type resource management system that supports a second resource interchange way, and the second resource interchange way is different from the first resource interchange way, wherein

the first resource management system is configured to: generate a first request packet in a first communication format, wherein the first communication format conforms to a communication packet specification of an internal communication network of the first resource management system, a first field in a packet header of the first request packet indicates that the first request packet is used to request an authorized freeze on a resource, a packet body of the first request packet comprises a number ID of a to-be-executed resource transfer operation and a first token, and the first token is obtained from an entity held by a user; and send the first request packet to the interchange system in response to determining that the first token corresponds to the second-type resource management system;

the interchange system is configured to: parse the first request packet based on the first communication format, extract the number ID and the first token from the first request packet, determine, by querying a first data record stored in a non-volatile storage medium, a first account in the second resource management system corresponding to the first token, generate a second request packet in a second communication format based on an API specification of the second resource management system, and send the second request packet to the second resource management system, wherein the second request packet is used to call a target API, and a call parameter field of the second request packet comprises the number ID and the first account; and

the second resource management system is configured to: parse the second request packet in the second communication format based on the API specification, extract the number ID and the first account from the call parameter field, and execute a target operation of a function corresponding to the target API on the first account.

2. The system according to example 1, wherein the first data record records a mapping relationship between a token and an account in each resource management system in a form of key-value pair or relational data table.

3. The system according to example 1, wherein the interchange system is further configured to determine the API specification of the second resource management system by querying a second data record stored in the non-volatile storage medium.

4. The system according to example 1, wherein the packet body of the first request packet further comprises a first resource share;

the interchange system is further configured to determine a first amount based on the first resource share, wherein the first amount is comprised in the call parameter field of the second request packet, and the target API indicates a resource transfer operation; and

the second resource management system is specifically configured to: deduct a first amount of resources from the first account, and transfer the first amount of resources to a service account corresponding to the interchange system.

5. The system according to example 4, wherein the first resource management system is configured to manage at least a first type of resources, the second resource management system is configured to manage at least a second type of resources, the first resource share is an amount in a first resource unit corresponding to the first type of resources, and the first amount is an amount in a second resource unit corresponding to the second type of resources.

6. The system according to example 4, wherein

the first resource management system is further configured to: generate a third request packet in the first communication format, and send the third request packet to the interchange system, wherein a first field in a packet header of the third request packet indicates that the third request packet is used to request resource transfer, and a packet body of the third request packet comprises the number ID and a second resource share; and

the interchange system is further configured to transfer resources corresponding to the second resource share to the first resource management system.

7. The system according to example 6, wherein the first field in the packet header of the first request packet and a second field in the packet body jointly indicate that the first request packet is used to request preliminary authorization for a resource, the first amount of resources are equivalent resources of the first resource share, and the second resource share is greater than the first resource share;

the interchange system is further configured to: determine a differential share between the second resource share and the first resource share, generate a fourth request packet in the second communication format, and send the fourth request packet to the second resource management system, wherein the fourth request packet is used to call the target API, and a call parameter field of the fourth request packet comprises the number ID, the first account, and related data of the differential share; and

the second resource management system is further configured to: receive and parse the fourth request packet, and deduct equivalent resources of the differential share from the first account.

8. The system according to example 4, wherein

the first resource management system is further configured to: generate a cancellation request packet in the first communication format, and send the cancellation transfer request packet to the interchange system, wherein a first field in a packet header of the cancellation request packet indicates that the cancellation request packet is used to cancel a resource that has been authorized to freeze, and a packet body of the cancellation request packet comprises the number ID;

the interchange system is further configured to: transfer the first amount of resources to the second resource management system, generate a fifth request packet in the second communication format, and send the fifth request packet to the second resource management system, wherein the fifth request packet calls a second API, and a parameter field comprises the first account and the first amount; and

the second resource management system is configured to: parse the fifth request packet, and transfer the first amount of resources to the first account based on a parsing result.

9. The system according to example 1, wherein the target API indicates a notification sending operation;

the first resource management system is further configured to: generate a third request packet in the first communication format, and send the third transfer request packet to the interchange system, wherein a first field in a packet header of the third request packet indicates that the third request packet is used to request resource transfer, and a packet body of the third request packet comprises the number ID and a second resource share; the interchange system is further configured to: transfer resources corresponding to the second resource share to the first resource management system, generate a sixth request packet in the second communication format, and send the sixth request packet to the second resource management system, wherein the sixth request packet is used to call a first API, and a call parameter field of the sixth request packet comprises the number ID, the first account, and a second amount determined based on the second resource share; and

the second resource management system is further configured to: receive and parse the sixth request packet, deduct a second amount of resources from the first account based on a parsing result, and transfer the second amount of resources to a service account corresponding to the interchange system.

10. The system according to example 1, wherein

the second resource management system is further configured to generate a seventh request packet, wherein the seventh request packet calls a first system interface provided by the interchange system, the first system interface is configured to receive a resource returning request, and the seventh request packet comprises a number ID of a completed resource transfer operation;

the interchange system is further configured to: generate an eighth request packet in response to the first system interface being called, and send the eighth request packet to the first resource management system, wherein the eighth request packet comprises the number ID of the completed resource transfer operation; and

the first resource management system is further configured to process the eighth request packet.

11. A request conversion method, comprising:

generating, by a first resource management system, a first request packet in a first communication format, wherein the first communication format conforms to a communication packet specification of an internal communication network of the first resource management system, a first field in a packet header of the first request packet indicates that the first request packet is used to request an authorized freeze on a resource, a packet body of the first request packet comprises a number ID of a to-be-executed resource transfer operation and a first token, and the first token is obtained from an entity held by a user; and sending, by the first resource management system, the first request packet to an interchange system in response to determining that the first token corresponds to a second-type resource management system, wherein the first resource management system is a first-type resource management system that supports a first resource interchange way, and the second-type resource management system supports a second resource interchange way that is different from the first resource interchange way;

parsing, by the interchange system, the first request packet based on the first communication format, extracting the number ID and the first token from the first request packet, determining, by querying a first data record stored in a non-volatile storage medium, a first account in a second resource management system corresponding to the first token, generating a second request packet in a second communication format based on an API specification of the second resource management system, and sending the second request packet to the second resource management system, wherein the second request packet is used to call a target API, a call parameter field of the second request packet comprises the number ID and the first account, and the second resource management system is the second-type resource management system; and

parsing, by the second resource management system, the second request packet in the second communication format based on the API specification, extracting the number ID and the first account from the call parameter field, and executing a target operation of a function corresponding to the target API on the first account.

12. The method according to example 11, wherein the first data record records a mapping relationship between a token and an account in each resource management system in a form of key-value pair or relational data table.

13. The method according to example 11, further comprising: determining, by the interchange system, the API specification of the second resource management system by querying a second data record stored in the non-volatile storage medium.

14. The method according to example 11, wherein the packet body of the first request packet further comprises a first resource share;

the generating a second request packet in a second communication format specifically comprises: determining a first amount based on the first resource share, wherein the first amount is comprised in the call parameter field of the second request packet, and the target API indicates a resource transfer operation; and

the executing a target operation of a function corresponding to the target API on the first account comprises: deducting a first amount of resources from the first account, and transferring the first amount of resources to a service account corresponding to the interchange system.

15. The method according to example 14, wherein the first resource management system is configured to manage at least a first type of resources, the second resource management system is configured to manage at least a second type of resources, the first resource share is an amount in a first resource unit corresponding to the first type of resources, and the first amount is an amount in a second resource unit corresponding to the second type of resources.

16. The method according to example 14, further comprising:

generating, by the first resource management system, a third request packet in the first communication format, and sending the third request packet to the interchange system, wherein a first field in a packet header of the third request packet indicates that the third request packet is used to request resource transfer, and a packet body of the third request packet comprises the number ID and a second resource share; and

transferring, by the interchange system, resources corresponding to the second resource share to the first resource management system.

17. The method according to example 16, wherein the first field in the packet header of the first request packet and a second field in the packet body jointly indicate that the first request packet is used to request preliminary authorization for a resource, the first amount of resources are equivalent resources of the first resource share, and the second resource share is greater than the first resource share; and the method further comprises:

determining, by the interchange system, a differential share between the second resource share and the first resource share, generating a fourth request packet of the second communication format, and sending the fourth request packet to the second resource management system, wherein the fourth request packet is used to call the target API, and a call parameter field of the fourth request packet comprises the number ID, the first account, and related data of the differential share; and

receiving and parsing, by the second resource management system, the fourth request packet, and deducting equivalent resources of the differential share from the first account.

18. The method according to example 14, further comprising:

generating, by the first resource management system, a cancellation request packet in the first communication format, and sending the cancellation transfer request packet to the interchange system, wherein a first field in a packet header of the cancellation request packet indicates that the cancellation request packet is used to cancel a resource that has been authorized to freeze, and a packet body of the cancellation request packet comprises the number ID;

transferring, by the interchange system, the first amount of resources to the second resource management system, generating a fifth request packet in the second communication format, and sending the fifth request packet to the second resource management system, wherein the fifth request packet calls a second API, and a parameter field comprises the first account and the first amount; and

parsing, by the second resource management system, the fifth request packet, and transferring the first amount of resources to the first account based on a parsing result.

19. The method according to example 11, wherein the target API indicates a notification sending operation; and the method further comprises:

generating, by the first resource management system, a third request packet in the first communication format, and sending the third transfer request packet to the interchange system, wherein a first field in a packet header of the third request packet indicates that the third request packet is used to request resource transfer, and a packet body of the third request packet comprises the number ID and a second resource share;

transferring, by the interchange system, resources corresponding to the second resource share to the first resource management system, generating a sixth request packet in the second communication format, and sending the sixth request packet to the second resource management system, wherein the sixth request packet is used to call a first API, and a call parameter field of the sixth request packet comprises the number ID, the first account, and a second amount determined based on the second resource share; and

receiving and parsing, by the second resource management system, the sixth request packet, deducting a second amount of resources from the first account based on a parsing result, and transferring the second amount of resources to a service account corresponding to the interchange system.

20. The method according to example 11, further comprising:

generating, by the second resource management system, a seventh request packet, wherein the seventh request packet calls a first system interface provided by the interchange system, the first system interface is configured to receive a resource returning request, and the seventh request packet comprises a number ID of a completed resource transfer operation;

generating, by the interchange system, an eighth request packet in response to the first system interface being called, and sending the eighth request packet to the first resource management system, wherein the eighth request packet comprises the number ID of the completed resource transfer operation; and

processing, by the first resource management system, the eighth request packet.

21. A computer-readable non-volatile storage medium, wherein the storage medium stores one or more instructions, and the one or more instructions are capable of being executed by a computer to perform a resource transfer method comprising the following steps:

receiving a first request packet in a first communication format from a first resource management system, wherein the first communication format conforms to a communication packet specification of an internal communication network of the first resource management system, a first field in a packet header of the first request packet indicates that the first request packet is used to request an authorized freeze on a resource, a packet body of the first request packet comprises a number ID of a to-be-executed resource transfer operation and a first token, and the first token is obtained from an entity held by a user;

parsing the first request packet based on the first communication format, and extracting the number ID and the first token from the first request packet;

determining, by querying a first data record stored in the non-volatile storage medium, a first account in a second resource management system corresponding to the first token; and

generating a second request packet in a second communication format based on an API specification of the second resource management system, and sending the second request packet to the second resource management system, wherein the second request packet is used to call a target API, and a call parameter field of the second request packet comprises the number ID and the first account.

## Claims

1. A resource transfer system, comprising a first resource management system, an interchange system, and a second resource management system, wherein the first resource management system is a first-type resource management system that supports a first resource interchange way, the second resource management system is a second-type resource management system that supports a second resource interchange way, and the second resource interchange way is different from the first resource interchange way, wherein

the first resource management system is configured to: generate a first request packet in a first communication format, wherein the first communication format conforms to a communication packet specification of an internal communication network of the first resource management system, a first field in a packet header of the first request packet indicates that the first request packet is used to request an authorized freeze on a resource, a packet body of the first request packet comprises a number ID of a to-be-executed resource transfer operation and a first token, and the first token is obtained from an entity held by a user; and send the first request packet to the interchange system in response to determining that the first token corresponds to the second-type resource management system;

the interchange system is configured to: parse the first request packet based on the first communication format, extract the number ID and the first token from the first request packet, determine, by querying a first data record stored in a non-volatile storage medium, a first account in the second resource management system corresponding to the first token, generate a second request packet in a second communication format based on an API specification of the second resource management system, and send the second request packet to the second resource management system, wherein the second request packet is used to call a target API, and a call parameter field of the second request packet comprises the number ID and the first account; and

the second resource management system is configured to: parse the second request packet in the second communication format based on the API specification, extract the number ID and the first account from the call parameter field, and execute a target operation of a function corresponding to the target API on the first account.

2. The system according to claim 1, wherein the first data record records a mapping relationship between a token and an account in each resource management system in a form of key-value pair or relational data table; and/or wherein the interchange system is further configured to determine the API specification of the second resource management system by querying a second data record stored in the non-volatile storage medium.

3. The system according to any one of claims 1 or 2, wherein the packet body of the first request packet further comprises a first resource share;

the interchange system is further configured to determine a first amount based on the first resource share, wherein the first amount is comprised in the call parameter field of the second request packet, and the target API indicates a resource transfer operation; and

the second resource management system is specifically configured to: deduct a first amount of resources from the first account, and transfer the first amount of resources to a service account corresponding to the interchange system.

4. The system according to claim 3, wherein the first resource management system is configured to manage at least a first type of resources, the second resource management system is configured to manage at least a second type of resources, the first resource share is an amount in a first resource unit corresponding to the first type of resources, and the first amount is an amount in a second resource unit corresponding to the second type of resources.

5. The system according to any one of claims 3 or 4, wherein

the first resource management system is further configured to

generate a third request packet in the first communication format, and send the third request packet to the interchange system, wherein a first field in a packet header of the third request packet indicates that the third request packet is used to request resource transfer, and a packet body of the third request packet comprises the number ID and a second resource share, and
the interchange system is further configured to transfer resources corresponding to the second resource share to the first resource management system; and optionally

wherein
the first field in the packet header of the first request packet and a second field in the packet body jointly indicate that the first request packet is used to request preliminary authorization for a resource, the first amount of resources are equivalent resources of the first resource share, and the second resource share is greater than the first resource share,
the interchange system is further configured to: determine a differential share between the second resource share and the first resource share, generate a fourth request packet in the second communication format, and send the fourth request packet to the second resource management system, wherein the fourth request packet is used to call the target API, and a call parameter field of the fourth request packet comprises the number ID, the first account, and related data of the differential share, and
the second resource management system is further configured to: receive and parse the fourth request packet, and deduct equivalent resources of the differential share from the first account.

6. The system according to any one of claims 3 to 5, wherein

the first resource management system is further configured to: generate a cancellation request packet in the first communication format, and send the cancellation transfer request packet to the interchange system, wherein a first field in a packet header of the cancellation request packet indicates that the cancellation request packet is used to cancel a resource that has been authorized to freeze, and a packet body of the cancellation request packet comprises the number ID;
the interchange system is further configured to: transfer the first amount of resources to the second resource management system, generate a fifth request packet in the second communication format, and send the fifth request packet to the second resource management system, wherein the fifth request packet calls a second API, and a parameter field comprises the first account and the first amount; and
the second resource management system is configured to: parse the fifth request packet, and transfer the first amount of resources to the first account based on a parsing result.

7. The system according to any one of claims 1 to 6, wherein the target API indicates a notification sending operation,

the first resource management system is further configured to: generate a third request packet in the first communication format, and send the third transfer request packet to the interchange system, wherein a first field in a packet header of the third request packet indicates that the third request packet is used to request resource transfer, and a packet body of the third request packet comprises the number ID and a second resource share,
the interchange system is further configured to: transfer resources corresponding to the second resource share to the first resource management system, generate a sixth request packet in the second communication format, and send the sixth request packet to the second resource management system, wherein the sixth request packet is used to call a first API, and a call parameter field of the sixth request packet comprises the number ID, the first account, and a second amount determined based on the second resource share, and

the second resource management system is further configured to: receive and parse the sixth request packet, deduct a second amount of resources from the first account based on a parsing result, and transfer the second amount of resources to a service account corresponding to the interchange system; and/or wherein

the second resource management system is further configured to generate a seventh request packet, wherein the seventh request packet calls a first system interface provided by the interchange system, the first system interface is configured to receive a resource returning request, and the seventh request packet comprises a number ID of a completed resource transfer operation,

the interchange system is further configured to: generate an eighth request packet in response to the first system interface being called, and send the eighth request packet to the first resource management system, wherein the eighth request packet comprises the number ID of the completed resource transfer operation, and

the first resource management system is further configured to process the eighth request packet.

8. A request conversion method, comprising:

generating, by a first resource management system, a first request packet in a first communication format, wherein the first communication format conforms to a communication packet specification of an internal communication network of the first resource management system, a first field in a packet header of the first request packet indicates that the first request packet is used to request an authorized freeze on a resource, a packet body of the first request packet comprises a number ID of a to-be-executed resource transfer operation and a first token, and the first token is obtained from an entity held by a user; and sending, by the first resource management system, the first request packet to an interchange system in response to determining that the first token corresponds to a second-type resource management system, wherein the first resource management system is a first-type resource management system that supports a first resource interchange way, and the second-type resource management system supports a second resource interchange way that is different from the first resource interchange way;

parsing, by the interchange system, the first request packet based on the first communication format, extracting the number ID and the first token from the first request packet, determining, by querying a first data record stored in a non-volatile storage medium, a first account in a second resource management system corresponding to the first token, generating a second request packet in a second communication format based on an API specification of the second resource management system, and sending the second request packet to the second resource management system, wherein the second request packet is used to call a target API, a call parameter field of the second request packet comprises the number ID and the first account, and the second resource management system is the second-type resource management system; and

parsing, by the second resource management system, the second request packet in the second communication format based on the API specification, extracting the number ID and the first account from the call parameter field, and executing a target operation of a function corresponding to the target API on the first account.

9. The method according to claim 8, wherein the first data record records a mapping relationship between a token and an account in each resource management system in a form of key-value pair or relational data table; and/or wherein the method further comprises determining, by the interchange system, the API specification of the second resource management system by querying a second data record stored in the non-volatile storage medium.

10. The method according to any one of claims 8 or 9, wherein the packet body of the first request packet further comprises a first resource share;

the generating a second request packet in a second communication format specifically comprises: determining a first amount based on the first resource share, wherein the first amount is comprised in the call parameter field of the second request packet, and the target API indicates a resource transfer operation; and

the executing a target operation of a function corresponding to the target API on the first account comprises: deducting a first amount of resources from the first account, and transferring the first amount of resources to a service account corresponding to the interchange system.

11. The method according to claim 10, wherein the first resource management system is configured to manage at least a first type of resources, the second resource management system is configured to manage at least a second type of resources, the first resource share is an amount in a first resource unit corresponding to the first type of resources, and the first amount is an amount in a second resource unit corresponding to the second type of resources.

12. The method according to any one of claims 10 or 11, further comprising

generating, by the first resource management system, a third request packet in the first communication format, and sending the third request packet to the interchange system, wherein a first field in a packet header of the third request packet indicates that the third request packet is used to request resource transfer, and a packet body of the third request packet comprises the number ID and a second resource share, and

transferring, by the interchange system, resources corresponding to the second resource share to the first resource management system; and optionally

wherein the first field in the packet header of the first request packet and a second field in the packet body jointly indicate that the first request packet is used to request preliminary authorization for a resource, the first amount of resources are equivalent resources of the first resource share, and the second resource share is greater than the first resource share; and the method further comprises

determining, by the interchange system, a differential share between the second resource share and the first resource share, generating a fourth request packet of the second communication format, and sending the fourth request packet to the second resource management system, wherein the fourth request packet is used to call the target API, and a call parameter field of the fourth request packet comprises the number ID, the first account, and related data of the differential share, and

receiving and parsing, by the second resource management system, the fourth request packet, and deducting equivalent resources of the differential share from the first account.

13. The method according to any one of claims 10 to 12, further comprising:

generating, by the first resource management system, a cancellation request packet in the first communication format, and sending the cancellation transfer request packet to the interchange system, wherein a first field in a packet header of the cancellation request packet indicates that the cancellation request packet is used to cancel a resource that has been authorized to freeze, and a packet body of the cancellation request packet comprises the number ID;

transferring, by the interchange system, the first amount of resources to the second resource management system, generating a fifth request packet in the second communication format, and sending the fifth request packet to the second resource management system, wherein the fifth request packet calls a second API, and a parameter field comprises the first account and the first amount; and

parsing, by the second resource management system, the fifth request packet, and transferring the first amount of resources to the first account based on a parsing result.

14. The method according to any one of claims 8 to 13, wherein the target API indicates a notification sending operation, and the method further comprises

generating, by the first resource management system, a third request packet in the first communication format, and sending the third transfer request packet to the interchange system, wherein a first field in a packet header of the third request packet indicates that the third request packet is used to request resource transfer, and a packet body of the third request packet comprises the number ID and a second resource share,

transferring, by the interchange system, resources corresponding to the second resource share to the first resource management system, generating a sixth request packet in the second communication format, and sending the sixth request packet to the second resource management system, wherein the sixth request packet is used to call a first API, and a call parameter field of the sixth request packet comprises the number ID, the first account, and a second amount determined based on the second resource share, and

receiving and parsing, by the second resource management system, the sixth request packet, deducting a second amount of resources from the first account based on a parsing result, and transferring the second amount of resources to a service account corresponding to the interchange system; and/or

wherein the method further comprises

generating, by the second resource management system, a seventh request packet, wherein the seventh request packet calls a first system interface provided by the interchange system, the first system interface is configured to receive a resource returning request, and the seventh request packet comprises a number ID of a completed resource transfer operation,

generating, by the interchange system, an eighth request packet in response to the first system interface being called, and sending the eighth request packet to the first resource management system, wherein the eighth request packet comprises the number ID of the completed resource transfer operation, and

processing, by the first resource management system, the eighth request packet.

**15.** A computer-readable non-volatile storage medium, wherein the storage medium stores one or more instructions, and the one or more instructions are capable of being executed by a computer to perform a resource transfer method comprising the following steps:

receiving a first request packet in a first communication format from a first resource management system, wherein the first communication format conforms to a communication packet specification of an internal communication network of the first resource management system, a first field in a packet header of the first request packet indicates that the first request packet is used to request an authorized freeze on a resource, a packet body of the first request packet comprises a number ID of a to-be-executed resource transfer operation and a first token, and the first token is obtained from an entity held by a user;

parsing the first request packet based on the first communication format, and extracting the number ID and the first token from the first request packet;

determining, by querying a first data record stored in the non-volatile storage medium, a first account in a second resource management system corresponding to the first token; and

generating a second request packet in a second communication format based on an API specification of the second resource management system, and sending the second request packet to the second resource management system, wherein the second request packet is used to call a target API, and a call parameter field of the second request packet comprises the number ID and the first account.

Resource management
system A

⇕

Interchange system

⇕

Resource management
system B

FIG. 1

Resource management system A

Merchant

Card payment acquiring institution

Card organization

Bank 1        Bank 2        Bank 3

Resource management system B

FIG. 2A

| Merchant | Acquiring institution | Card organization | Bank |
|---|---|---|---|

Authorization stage

Acquiring request →

Authorization request →

Authorization request →

Freeze a part of funds in a card account of a user

Capture stage

Capture request →

Capture request →

Capture request →

Deduct money from the card account of the user and transfer the money to the card organization

← Clearing

← Clearing

FIG. 2B

FIG. 3A

First resource management system | Interchange system | Second resource management system

⌐ 31
Generate a first request packet in a first communication format

⌐ 32
Determine that a first token belongs to a preset type, and send the first request packet

⌐ 33
Parse the first request packet, and determine a first account in a corresponding second resource management system by querying a first data record

⌐ 34
Generate a second request packet based on an API specification of the second resource management system, and send the second request packet

⌐ 35
Parse the second request packet, and execute a target operation on the first account

FIG. 3B

| Server (acquiring system) | Interchange system (service party) | First digital wallet |

Authorization stage

S41: First request

(including a transaction ID, a first fund share, and a first token)

S42: First request

S43: Generate a second request (including the transaction ID, a first account, and a first amount)

S44: Second request

S45: Deduct a first amount of funds from the first account

S46: Transfer the deducted first amount of funds to a service account

FIG. 4

| Analyze a first request to obtain a transaction ID, a first fund share, and a first token that are included in the first request | S51 |

↓

| Query, based on the first token obtained through analysis, a pre-stored mapping relationship between a digital wallet account and a token, to obtain a first digital wallet and a first account that correspond to each other | S52 |

↓

| Determine a first amount based on the first fund share | S53 |

↓

| Generate a second request, including the transaction ID obtained through analysis, the first digital wallet and the first account that are obtained through query, and the determined first amount | S54 |

FIG. 5

Interchange system

| Server of a card organization | ←→ | First device | ←→ | Second device | ←→ | First digital wallet |

| Corporate account of the card organization (first currency) | | **First sub-account** (first currency) | **Second sub-account** (second currency) | | Corporate account of the wallet (second currency) |

Service account

FIG. 6

Payment details  ×

Merchant name   XXXX

Amount: PHP xxx (EUR
xxx)

Subtotal: PHP xxx (EUR
xxx)

Exchange rate:  EUR 1 =
PHP xxxx

Discount:      - PHP xxx

**Total amount:      ₱ 5000**
**Incremental deduction** > ▪
**of funds**

Payment details  ×

Merchant name   XXXX

Amount: PHP xxx (EUR
xxx)

Subtotal: PHP xxx (EUR
xxx)

Exchange rate:  EUR 1 =
PHP xxxx

**Total amount:       ₱ 1000**

▪ **Original** >
**records**

FIG. 7

| Server (acquiring system) | Interchange system (service party) |

Capture stage

S81: Third request
(including a transaction ID and a second fund share)

S82: Third request

S83: Transfer funds corresponding to the second fund share to an account of a card payment acquiring institution

FIG. 8

EP 4 769 268 A1

FIG. 9

| Server (card organization) | Interchange system (service party) | First digital wallet |
|---|---|---|

**Authorization stage (pre-authorization, where a user does not pay in advance)**

S1001: First request (including a transaction ID, a first fund share, and a first token)

S1002: First request

S1003: Generate a second request (including the transaction ID, a first account, and a first amount)

S1004: Second request

S1005: Deduct a first amount of funds from the first account

S1006: Transfer the deducted first amount of funds to a service account

**Capture stage (over capture)**

S1007: Third request (including the transaction ID and a second fund share)

S1008: Third request

S1009: Transfer funds corresponding to the second fund share to an account of the card organization

**The wallet does not advance funds**

S1010a: Fourth request (including a second amount and the first account)

S1011a: Transfer a second amount of funds to the service account

S1012a: Initiate, to the first account, recovery of funds for the second amount

**The wallet advances funds**

S1010b: Transfer the second amount of funds **from a temporary account** to the service account

S1011b: Fifth request (including the second amount and the first account)

S1012b: Transfer the second amount of funds **to the temporary account**

S1013b: Initiate, to the first account, recovery of funds for the second amount

FIG. 10

<        To-be-paid fee     ···

There is still a to-be-paid fee
HKD 4.8
Account balance: HKD 1.6

The to-be-paid fee will be automatically deducted after the following operation is performed

| Balance recharge | > |
| Add a new bank card | > |
| Collect | > |

There is still a
to-be-paid fee
The fee will be
automatically paid when
the balance is sufficient,
to continue using the
payment service

Close     Pay

Interface
switching
←——→

FIG. 11

Service party — Temporary account of the first digital wallet — First digital wallet

Service account     Corporate account of the first digital wallet

FIG. 12

| Server (card organization) | Interchange system (service party) | First digital wallet |
|---|---|---|

Authorization stage (pre-authorization, where a user does not pay in advance)

S1301: First request

(including a transaction ID, a first fund share, and a first token)

S1302: First request

S1303: Generate a second request (including the transaction ID, a first account, and a first amount)

S1304: Second request

S1305: Deduct a first amount of funds from the first account

S1306: Transfer the deducted first amount of funds to a service account

Capture stage (partial capture)

S1307: Third request

(including the transaction ID and a second fund share)

S1308: Third request

S1309: Transfer funds corresponding to the second fund share to an account of the card organization

S1310: Refund a fourth amount of funds to the first digital wallet

S1310: Refunding notification

S1311: Refund the fourth amount of funds to the first account

FIG. 13

| Server (card organization) | Interchange system (service party) | First digital wallet |

**Authorization stage (pre-authorization, where a user pays in advance)**

S1401: First request

(including a transaction ID, a first fund share, and a first token)

S1402: First request

S1403: Generate a second request (including the transaction ID, a first account, and a first amount **including a buffer amount**)

S1404: Second request

S1405: Deduct a first amount of funds from the first account

S1406: Transfer the deducted first amount of funds to a service account

**Capture stage (equal capture)**

S1407: Third request

(including the transaction ID and a second fund share)

S1408: Third request

S1409: Transfer funds corresponding to the second fund share **from a primary account** to an account of the card organization

S1410: Refund a second sub-amount of funds **from a temporary account** to the first digital wallet

S1410: Refunding notification

S1411: Refund the second sub-amount of funds to the first account

FIG. 14

| Server (card organization) | Interchange system (service party) | First digital wallet |

**Authorization stage (pre-authorization, where a user pays in advance)**

S1501: First request
(including a transaction ID, a first fund share, and a first token)

S1502: First request

S1503: Generate a second request (including the transaction ID, a first account, and a first amount **including a buffer amount**)

S1504: Second request

S1505: Deduct a first amount of funds from the first account

S1506: Transfer the deducted first amount of funds to a service account

**Capture stage (over capture)**

S1507: Third request
(including the transaction ID and a second fund share)

S1508: Third request

S1509: Transfer funds corresponding to the second fund share **from a primary account** to an account of the card organization

S1510: Transfer a second amount of funds from **a temporary account to the primary account**

S1511: Refund a third amount of funds **from the temporary account** to the first digital wallet

S1511: Refunding notification

S1512: Refund the third amount of funds to the first account

FIG. 15

| Server (card organization) | Interchange system (service party) | First digital wallet |
|---|---|---|

**Authorization stage (pre-authorization, where a user pays in advance)**

S1601: First request

(including a transaction ID, a first fund share, and a first token)

S1602: First request

S1603: Generate a second request (including the transaction ID, a first account, and a first amount **including a buffer amount**)

S1604: Second request

S1605: Deduct a first amount of funds from the first account

S1606: Transfer the deducted first amount of funds to a service account

**Capture stage (partial capture)**

S1607: Third request

(including the transaction ID and a second fund share)

S1608: Third request

S1609: Transfer funds corresponding to the second fund share **from a primary account** to an account of the card organization

S1610: Transfer a second amount of funds from **the primary account to a temporary account**

S1611: Refund a fourth amount of funds **from the temporary account** to the first digital wallet

S1611: Refunding notification

S1612: Refund the fourth amount of funds to the first account

FIG. 16

FIG. 17

| Server (acquiring system) | Interchange system (service party) | First digital wallet |
|---|---|---|

**Authorization stage (not initiating deduction of funds to a user)**

S1801: First request

(including a transaction ID and a first token)

S1802: First request

S1803: Generate a second request (including the transaction ID and a first account)

S1804: Second request

S1805: Send a transaction notification to the first account

**Capture stage (initiating deduction of funds to the user)**

S1806: Third request

(including the transaction ID and a second fund share)

S1807: Third request

S1808: Transfer funds corresponding to the second fund share to an account of a card payment acquiring institution

S1809: Fourth request (including the transaction ID, the first account, and a second amount)

S1810: Transfer a second amount of funds to the service account

S1811: Initiate, to the first account, deduction of the second amount of funds

FIG. 18

FIG. 19

FIG. 20

| Server (acquiring system) | Interchange system (service party) | First digital wallet |
|---|---|---|

Capture stage

S2101: Third request

(including a transaction ID and a second fund share)

S2102: Third request

S2103: Transfer funds corresponding to the second fund share to an account of a card payment acquiring institution

S2104: Sixth request

S2105: Transfer a second amount of funds to a service account, and perform unfreezing and deduction of funds

FIG. 21

| Server (card payment acquiring institution) | Interchange system (service party) | First digital wallet |
| --- | --- | --- |

Chargeback stage

S2201: Fund refunding request (including a transaction ID)

S2202: Chargeback request

S2203: Merchant feedback

S2204: Determine, based on the merchant feedback, whether to approve the chargeback request

FIG. 22

| Server (card payment acquiring institution) | Interchange system (service party) | First digital wallet | |

**Chargeback stage (the service party compensates in advance before receiving a feedback)**

S2300: Fund refunding request (including a first account and a transaction ID)

S2301: Fund refunding request (submitted by calling a first interface, and including the first account and the transaction ID)

S2302: Chargeback request

S2303: Deduct funds for a disputed transaction from an account of a merchant and transfer the funds to a service account

S2304: Transfer the funds for the disputed transaction to a corporate account of the first digital wallet based on the service account

S2305: Transfer the funds for the disputed transaction from the corporate account to the first account

S2306: Merchant feedback for the chargeback request

Transfer notification

**An appeal succeeds**

S2307a: Mark the fund refunding request as processing completed

**An appeal fails**

S2307b: Refund the funds for the disputed transaction to an account of the card payment acquiring institution based on the service account

S2308b: Recovery request

S2309b: Deduct, from the first account, the funds with which compensation is performed, and transfer the funds to the service account

FIG. 23

| Server (card payment acquiring institution) | Interchange system (service party) | First digital wallet | |
|---|---|---|---|

Chargeback stage **(the service party does not compensate in advance + the wallet does not advance funds for compensation)**

S2400: Fund refunding request (including a first account and a transaction ID)

S2401: Fund refunding request (submitted by calling **a first interface**, and including the first account and the transaction ID)

S2402: Chargeback request

S2403: Deduct funds for a disputed transaction from an account of a merchant and transfer the funds to a service account

S2404: Merchant feedback for the chargeback request

**An appeal succeeds**

S2405a: Transfer the funds for the disputed transaction to a corporate account of the first digital wallet based on the service account

Transfer notification

S2406a: Transfer the funds for the disputed transaction from the corporate account to the first account

**An appeal fails**

S2405b: Appeal failure notification

S2406b: Refund the funds for the disputed transaction to an account of the card payment acquiring institution based on the service account

FIG. 24

| Server (card payment acquiring institution) | Interchange system (service party) | First digital wallet | |

**Chargeback stage (the wallet advances funds for compensation)**

S2500: Fund refunding request (including a first account and a transaction ID)

S2502: Fund refunding request (submitted by calling **a first interface**, and including the first account and the transaction ID)

S2501: **Acquire advanced funds as compensation payment** based on a corporate account, and transfer the compensation payment to the first account

S2503: Chargeback request

S2504: Deduct funds for a disputed transaction from an account of a merchant and transfer the funds to a service account

S2505: Merchant feedback for the chargeback request

**An appeal succeeds**

S2506a: Transfer the funds for the disputed transaction to a corporate account of the first digital wallet based on the service account

**An appeal fails**

S2506b: Appeal failure notification

S2507b: Refund the funds for the disputed transaction to an account of the card payment acquiring institution based on the service account

FIG. 25

| Server (card payment acquiring institution) | Interchange system (service party) | First digital wallet |
|---|---|---|

**Chargeback stage (the service party does not compensate in advance before receiving a feedback)**

S2601: Fund refunding request ←(submitted by calling **a second interface**, and including a first account and a transaction ID)

S2602: Chargeback request

S2603: Deduct funds for a disputed transaction from an account of a merchant and transfer the funds to a service account

S2604: Merchant feedback for the chargeback request →

**An appeal succeeds**

S2605a: Transfer the funds for the disputed transaction to a corporate account of the first digital wallet based on the service account

**An appeal fails**

S2605b: Appeal failure notification →

S2606b: Refund the funds for the disputed transaction to an account of the card payment acquiring institution based on the service account

FIG. 26

EP 4 769 268 A1

2700

First request receiving module 2701

Account information determining module 2702

Second request sending module 2703

FIG. 27

Computer system 2800

Processor 2802

Memory 2804

Bus 2812

Storage 2806

I/O interface 2808

Communication interface 2810

FIG. 28

73

Europäisches
Patentamt

European
Patent Office

Office européen
des brevets

# EUROPEAN SEARCH REPORT

**Application Number**

EP 25 20 1872

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/011067 A1 (KATZIN EDWARD [US] ET AL) 12 January 2012 (2012-01-12)<br>* figure 3 *<br>* paragraph [0054] - paragraph [0056] *<br>* paragraph [0070] *<br>* paragraph [0086] - paragraph [0091] *<br>* figure 9 *<br>----- | 1-15 | INV.<br>G06Q20/02<br>G06Q20/10<br>H04L9/40 |
| | | | **TECHNICAL FIELDS SEARCHED (IPC)**<br><br>G06Q<br>H04L |

The present search report has been drawn up for all claims

| Place of search | Date of completion of the search | Examiner |
|---|---|---|
| The Hague | 6 February 2026 | Vinck, Bart |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................

& : member of the same patent family, corresponding document

EPO FORM 1503 03.82 (P04C01)

**EP 4 769 268 A1**

## ANNEX TO THE EUROPEAN SEARCH REPORT
## ON EUROPEAN PATENT APPLICATION NO.

EP 25 20 1872

06-02-2026

| Patent document cited in search report | Publication date | Patent family member(s) | Publication date |
|---|---|---|---|
| US 2012011067 A1 | 12-01-2012 | AU 2011274418 A1 | 31-01-2013 |
| | | RU 2013105470 A | 20-08-2014 |
| | | RU 2016133298 A | 10-12-2018 |
| | | SG 186910 A1 | 28-02-2013 |
| | | US 2012011067 A1 | 12-01-2012 |
| | | US 2013339250 A1 | 19-12-2013 |
| | | US 2018089753 A1 | 29-03-2018 |
| | | WO 2012006628 A2 | 12-01-2012 |

EPO FORM P0459

For more details about this annex : see Official Journal of the European Patent Office, No. 12/82